# EUROPEAN PATENT APPLICATION

(11) **EP 2 502 976 A1**
(43) Date of publication of application: **26.09.2012**
(21) Application number: 10831674.6
(22) Date of filing: 19.11.2010
(51) Int. Cl.: C10M 141/10, C10M 133/06, C10M 133/08, C10M 137/02, C10M 137/04, C10M 137/10, F16H 48/10, F16H 48/28, C10N 30/06, C10N 40/04

(54) **LUBRICANT OIL, FRICTION MEMBER, AND GEAR-TYPE DIFFERENTIAL HAVING LIMITED SLIP FUNCTION**

(30) Priority: 19.11.2009 JP 2009264415
(71) Applicant: JTEKT Corporation, Osaka-shi, Osaka 542-8502 (JP)
(72) Inventor: ANDO Hiroyuki, Osaka-shi Osaka 542-8502 (JP); ANDO Junji, Osaka-shi Osaka 542-8502 (JP); MATSUKAWA Kazutaka, Osaka-shi Osaka 542-8502 (JP); HARA Toshimi, Osaka-shi Osaka 542-8502 (JP); FURUHASHI Mototake, Osaka-shi Osaka 542-8502 (JP); TOHYAMA Mamoru, Aichi-gun Aichi 480-1192 (JP); OHMORI Toshihide, Aichi-gun Aichi 480-1192 (JP); ESAKI Yasuo, Aichi-gun Aichi 480-1192 (JP); KANZAWA, Chihiro, Aichi-gun Aichi 480-1192 (JP); FUKUMOTO Keiko, Aichi-gun Aichi 480-1192 (JP)
(74) Representative: TBK
(86) International application number: PCT/JP2010/070750
(87) International publication number: WO 2011/062282

(57) **Abstract**

A lubricating oil according to the present invention is a lubricating oil used in a friction-type driving force transmission apparatus, the lubricating oil including: at least one of two additives; a first additive selected from at least one of an aliphatic amine having a saturated or unsaturated hydrocarbon group with a carbon number of 12 to 20 (Chemical Formula 1) and an aliphatic amine ethylene oxide adduct having a saturated or unsaturated hydrocarbon group with a carbon number of 12 to 20 (Chemical Formula 2) ; and a second additive selected from at least one of a phosphorous acid diester having a saturated or unsaturated hydrocarbon group with a carbon number of 12 to 20 (Chemical Formula 3) and a phosphorous acid monoester having a saturated or unsaturated hydrocarbon group with a carbon number of 12 to 20 (Chemical Formula 4).

## Description

### FIELD OF THE INVENTION

The present invention relates to a lubricating oil, more particularly to a lubricating oil applied to between a pair of slidable friction members to improve sliding characteristics of the friction members. The present invention further relates to a friction member where the lubricating oil is used, and a gear-type differential with a differential limiting function.

### BACKGROUND OF THE INVENTION

Conventionally, noise and vibration (NV) of a vehicle are caused by a self-excited vibration (may be called stick-slip phenomenon) generated in the event that a vibration system operable by interactions among inertial force, restoring force, and frictional force is destabilized on sliding surfaces. The vibration system loses stability when a coefficient of friction lowers as a sliding velocity increases or during transition from a high static friction to a low dynamic friction, resulting in the occurrence of stick-slip phenomenon.

A necessary and sufficient condition for avoiding the occurrence of stick-slip phenomenon is to obtain tribological properties where the coefficient of friction is elevated as the sliding velocity increases. The µ-v characteristics with positive gradient can attenuate the generated stick-slip phenomenon sooner.

Some of differential limiting devices conventionally available for vehicles are torque-responsive devices adapted to limit a differential depending on a torque reaction force generated in a drive system. A torque-responsive differential limiting device is conventionally provided with a ring gear and a sun gear coaxially disposed, planetary gears to be meshed with these gears, and a planetary carrier supporting the planetary gears while slidably contacting top lands thereof so that the planetary gears are orbitally revolvable and rotatable on their own rotational axes. The differential limiting device is adapted to allow a differential between two outputs based on the rotation and orbital revolution of the planetary gears and also limit the differential based on a thrusting force resulting from a rotational reaction force generated between the gears meshed with each other and a frictional force between slidably contacting surfaces (top lands and planetary carrier-side sliding surfaces of the planetary gears).

In any differential limiting devices where the top land of the planetary gears slidably contact the planetary carrier, it is very important that a lubricating oil applied to between sliding surfaces has good anti-vibration and durability. A deterioration of the lubricating oil supplied to between the sliding surfaces may involve unfavorable events such as vibration increase, noise occurrence, excessive abrasion on sliding surfaces, and seizure.

The vehicles available in the market in recent years need to fulfill more advanced noise reduction than conventionally demanded according to a hybrid car and reduction in weight for achieving low-fuel consumption, and differential limiting devices loaded therein should also need to fulfill the same requirement. It is an important task in differential limiting devices to maximize the anti-vibration of the lubricating oil (better lubricity) for further noise reduction.

So far were developed some lubricating oils used in shock absorbers, examples of which are disclosed in JP Publication No. 2003-147379 and JP Publication No. 2008-133332. However, lubricating oils used ingear-type differential limiting devices have been mostly developed with a large stress on extreme-pressure proofness because of such a high contact pressure as several hundred MPa during use which is a distinct feature of any gear-type devices, and it has been hardly discussed or studied to use a friction modifier (FM) in sliding portions in consideration of better anti-vibration.

### SUMMARY OF THE INVENTION

### PROBLEMS TO BE SOLVED BY THE INVENTION

The present invention was accomplished to solve these conventional technical problems. The present invention provides a lubricating oil used in a differential limiting device which ensures a remarkable quietness (µ-v characteristics with positive gradient) between sliding portions of the friction members and a differential limiting device (differential with a differential limiting function).

### MEANS FOR SOLVING PROBLEMS

To solve the conventional technical problems, the inventors of the present invention carried out various studies on additives to be added to lubricating oils used in a friction-type driving force transmission apparatus and finally accomplished the present invention.

A lubricating oil according to the present invention is a lubricating oil used in a friction-type driving force transmission apparatus, the lubricating oil including: at least one of two additives; a first additive selected from an aliphatic amine having a saturated or unsaturated hydrocarbon group with a carbon number of 12 to 20 (Chemical Formula 1) and an aliphatic amine ethylene oxide adduct having a saturated or unsaturated hydrocarbon group with a carbon number of 12 to 20 (Chemical Formula 2); and a second additive selected from a phosphorous acid diester having a saturated or unsaturated hydrocarbon group with a carbon number of 12 to 20 (Chemical Formula 3) and a phosphorous acid monoester having a saturated or unsaturated hydrocarbon group with a carbon number of 12 to 20 (Chemical Formula 4).

[Chemical formula 1] R₁-NH₂

- R₁:: a saturated or unsaturated hydrocarbon group with a carbon number of 12 to 20

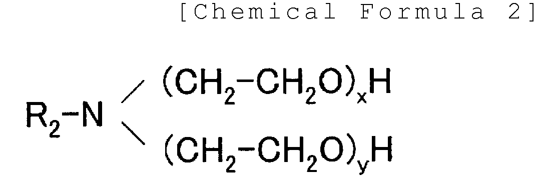

- R₂:: a saturated or unsaturated hydrocarbon group with a carbon number of 12 to 20
1 ≦ x + y ≦ 3

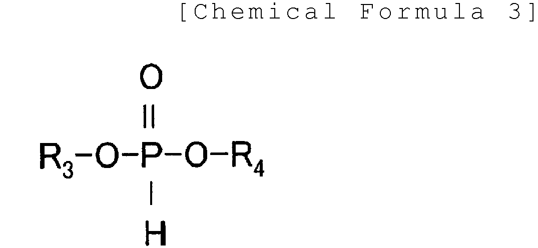

- R₃:: a saturated or unsaturated hydrocarbon group with a carbon number of 12 to 20
- R₄:: a saturated or unsaturated hydrocarbon group with a carbon number of 12 to 20

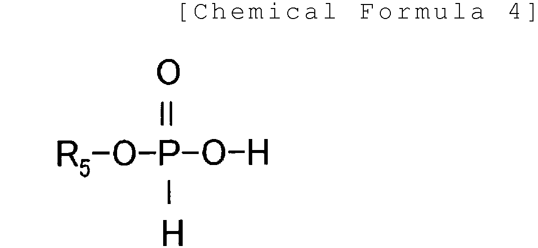

- R₅:: a saturated or unsaturated hydrocarbon group with a carbon number of 12 to 20

The lubricating oil according to the present invention has a specific peak in a ³¹P-nuclear magnetic resonance analysis.

A friction member and a differential with a differential limiting function according to the present invention are characterized in that a lubricating oil is applied thereto, the lubricating oil including at least one of the two additives or a lubricating oil including a thiophosphate diester and/or an amine salt thereof by a specific proportion, that is the lubricating oil according to the present invention. The friction member according to the present invention is applicable to the differential with a differential limiting function according to the present invention.

A first lubricating oil according to the present invention is a lubricating oil used in a friction-typedrivingforcetransmissionapparatus. The lubricating oil includes at least one of an aliphatic amine having a saturated or unsaturated hydrocarbon group with a carbon number of 12 to 20 (expressed by Chemical Formula 1) and an aliphatic amine ethylene oxide adduct having a saturated or unsaturated hydrocarbon group with a carbon number of 12 to 20 (expressed by Chemical Formula 2).

Given that the mass of the lubricating oil is 100%, at least one of the aliphatic amine, the aliphatic amine ethylene oxide adduct, and the aliphatic amine and the aliphatic amine ethylene oxide adduct in total is preferably included by 1.0 to 5.0%.

The saturated or unsaturated hydrocarbon group with a carbon number of 12 to 20 of the aliphatic amine, the aliphatic amine ethylene oxide adduct is preferably an unsaturated hydrocarbon group with a carbon number of 18.

Given that the mass of the lubricating oil is 100%, at least one of an acidic phosphate ester and an acidic thiophosphate ester is preferably included so that a phosphorus content stays in a range of 0.20% ≦ P ≦ 0.50%.

At least one of the acidic phosphate ester and the acidic thiophosphate ester is preferably included in a state where the aliphatic amine having a saturated or unsaturated hydrocarbon group with a carbon number of 12 to 20 and an amine salt thereof are formed.

The lubricating oil preferably includes a hydrocarbon oil as a base oil thereof, wherein a peak absorbency of the lubricating oil at infrared spectral wave numbers of 1,740 ± 20 cm⁻¹ is at most 1.5 in an infrared spectroscopic analysis using a fixed cell for liquid having an optical length of 0.05 mm ± 0.005 mm.

The lubricating oil preferably exhibits a peak of 57 ± 2 ppm in a ³¹P-nuclear magnetic resonance analysis.

Given that the mass of the lubricating oil is 100%, a phosphorus content derived from a thiophosphate diester and/or an amine salt thereof is preferably 0.010% or more.

A second lubricating oil according to the present invention is a lubricating oil used in a friction-typedrivingforcetransmissionapparatus. The lubricating oil includes at least one of a phosphorous acid diester having a saturated or unsaturated hydrocarbon group with a carbon number of 12 to 20 (expressed by Chemical Formula 3) and a phosphorous acid monoester having a saturated or unsaturated hydrocarbon group with a carbon number of 12 to 20 (expressed by Chemical Formula 4).

Given that the mass of the lubricating oil is 100%, at least one of the phosphorous acid monoester, the phosphorous acid diester, and the phosphorous acid monoester and the phosphorous acid diester in total is preferably included by 1.0% to 5.0%.

The saturated or unsaturated hydrocarbon group with a carbon number of 12 to 20 of the phosphorous acid monoester, the phosphorous acid diester is preferably an unsaturated hydrocarbon group with a carbon number of 18.

Given that the mass of the lubricating oil is 100%, at least one of an acidic phosphate ester and an acidic thiophosphate ester is preferably included so that a phosphorus content stays in a range of 0.20% ≦ P ≦ 0.50%.

At least one of the acidic phosphate ester and the acidic thiophosphate ester is preferably included in a state where the aliphatic amine having a saturated or unsaturated hydrocarbon group with a carbon number of 12 to 20 and an amine salt thereof are formed.

The lubricating oil preferably includes a hydrocarbon oil as a base oil thereof, wherein a peak absorbency of the lubricating oil at infrared spectral wave numbers of 1,740 ± 20 cm⁻¹ is at most 1.5 in an infrared spectroscopic analysis using a fixed cell for liquid having an optical length of 0.05 mm ± 0.005 mm.

The lubricating oil preferably exhibits a peak of 57 ± 2 ppm in a ³¹P-nuclear magnetic resonance analysis.

Given that the mass of the lubricating oil is 100%, a phosphorus content derived from a thiophosphate diester and/or an amine salt thereof is preferably 0.010% or more.

A third lubricating oil according to the present invention is a lubricating oil used in a friction-type driving force transmission apparatus, the lubricating oil including: at least one of an aliphatic amine having a saturated or unsaturated hydrocarbon group with a carbon number of 12 to 20 (expressed by Chemical Formula 1) and an aliphatic amine ethylene oxide adduct having a saturated or unsaturated hydrocarbon group with a carbon number of 12 to 20 (expressed by Chemical Formula 2); and at least one of a phosphorous acid diester having a saturated or unsaturated hydrocarbon group with a carbon number of 12 to 20 (expressed by Chemical Formula 3) and a phosphorous acid monoester having a saturated or unsaturated hydrocarbon group with a carbon number of 12 to 20 (expressed by Chemical Formula 4).

Given that the mass of the lubricating oil is 100%, at least one of the aliphatic amine, the aliphatic amine ethylene oxide adduct, and the aliphatic amine and the aliphatic amine ethylene oxide adduct in total is preferably included by 1.0% to 5.0%, and at least one of the phosphorous acid monoester, the phosphorous acid diester, and the phosphorous acid monoester and the phosphorous acid diester in total is preferably included by 1.0% to 5.0%.

Given that the mass of the lubricating oil is 100%, at least one of an acidic phosphate ester and an acidic thiophosphate ester is preferably included so that a phosphorus content stays in a range of 0.20% ≦ P ≦ 0.50%.

At least one of the acidic phosphate ester and the acidic thiophosphate ester is preferably included in a state where the aliphatic amine having a saturated or unsaturated hydrocarbon group with a carbon number of 12 to 20 and an amine salt thereof are formed.

The lubricating oil preferably includes a hydrocarbon oil as a base oil thereof, wherein a peak absorbency of the lubricating oil at infrared spectral wave numbers of 1,740 ± 20 cm⁻¹ is at most 1.5 in an infrared spectroscopic analysis using a fixed cell for liquid having an optical length of 0.05 mm ± 0.005 mm.

The lubricating oil preferably exhibits a peak of 57 ± 2 ppm in a ³¹P-nuclear magnetic resonance analysis.

Given that the mass of the lubricating oil is 100%, a phosphorus content derived from a thiophosphate diester and/or an amine salt thereof is preferably 0.010% or more.

A fourth lubricating oil according to the present invention is a lubricating oil used in a friction-type driving force transmission apparatus, the lubricating oil including: an aliphatic amine having a saturated or unsaturated hydrocarbon group with a carbon number of 12 to 20 (expressed by Chemical Formula 1); and at least one of a phosphorous acid diester having a saturated or unsaturated hydrocarbon group with a carbon number of 12 to 20 (expressed by Chemical Formula 3) and a phosphorous acid monoester having a saturated or unsaturated hydrocarbon group with a carbon number of 12 to 20 (expressed by Chemical Formula 4).

The phosphorous acid diester and/or the phosphorous acid monoester is preferably included in a state where the aliphatic amine and an amine salt thereof are formed.

A fifth lubricating oil according to the present invention is a lubricating oil used in a friction-type driving force transmission apparatus, wherein the lubricating oil exhibits a peak of 57 ± 2 ppm in a ³¹P-nuclear magnetic resonance analysis.

Given that the mass of the lubricating oil is 100%, a phosphorus content derived from the thiophosphate diester and/or the amine salt thereof is preferably 0.010% or more.

Given that the mass of the lubricating oil is 100%, at least one of an acidic phosphate ester and an acidic thiophosphate ester is preferably included so that a phosphorus content stays in a range of 0.20% ≦ P ≦ 0.50%.

The lubricating oil preferably includes a hydrocarbon oil as a base oil thereof, wherein a peak absorbency of the lubricating oil at infrared spectral wave numbers of 1,740 ± 20 cm⁻¹ is at most 1.5 in an infrared spectroscopic analysis using a fixed cell for liquid having an optical length of 0.05 mm ± 0.005 mm.

A first friction member according to the present invention is characterized in that a lubricating oil used in a friction-type driving force transmission apparatus is applied thereto, the lubricating oil including at least one of an aliphatic amine having a saturated or unsaturated hydrocarbon group with a carbon number of 12 to 20 (expressed by Chemical Formula 1) and an aliphatic amine ethylene oxide adduct having a saturated or unsaturated hydrocarbon group with a carbon number of 12 to 20 (expressed by Chemical Formula 2).

Of a pair of friction members sliding with each other, a sliding surface of one of the friction members preferably has a diamond-like carbon film formed thereon.

Of a pair of friction members sliding with each other, a sliding surface of one of the friction members preferably has a tungsten carbide/diamond-like carbon film formed thereon, and a sliding surface of the other friction member is preferably nitrided.

Of a pair of friction members sliding with each other, a sliding surface of one of the friction members is preferably made from an iron-based metal, and a sliding surface of the other friction member is preferably nitrided.

A second friction member according to the present invention is characterized in that a lubricating oil used in a friction-type driving force transmission apparatus is applied thereto, the lubricating oil including at least one of a phosphorous acid diester having a saturated or unsaturated hydrocarbon group with a carbon number of 12 to 20 (expressed by Chemical Formula 3) and a phosphorous acid monoester having a saturated or unsaturated hydrocarbon group with a carbon number of 12 to 20 (expressed by Chemical Formula 4).

Of a pair of friction members sliding with each other, a sliding surface of one of the friction members preferably has a diamond-like carbon film formed thereon.

Of a pair of friction members sliding with each other, a sliding surface of one of the friction members preferably has a tungsten carbide/diamond-like carbon film formed thereon, and a sliding surface of the other friction member is preferably nitrided.

Of a pair of friction members sliding with each other, a sliding surface of one of the friction members is preferably made from an iron-based metal, and a sliding surface of the other friction member is preferably nitrided.

A third friction member according to the present invention is characterized in that a lubricating oil used in a friction-type driving force transmission apparatus is applied thereto, the lubricating oil including: at least one of an aliphatic amine having a saturated or unsaturated hydrocarbon group with a carbon number of 12 to 20 (expressed by Chemical Formula 1) and an aliphatic amine ethylene oxide adduct having a saturated or unsaturated hydrocarbon group with a carbon number of 12 to 20 (expressed by Chemical Formula 2); and at least one of a phosphorous acid diester having a saturated or unsaturated hydrocarbon group with a carbon number of 12 to 20 (expressed by Chemical Formula 3) and a phosphorous acid monoester having a saturated or unsaturated hydrocarbon group with a carbon number of 12 to 20 (expressed by Chemical Formula 4).

Of a pair of friction members sliding with each other, a sliding surface of one of the friction members preferably has a diamond-like carbon film formed thereon.

Of a pair of friction members sliding with each other, a sliding surface of one of the friction members preferably has a tungsten carbide/diamond-like carbon film formed thereon, and a sliding surface of the other friction member is preferably nitrided.

Of a pair of friction members sliding with each other, a sliding surface of one of the friction members is preferably made from an iron-based metal, and a sliding surface of the other friction member is preferably nitrided.

A fourth friction member according to the present invention is characterized in that a lubricating oil used in a friction-type driving force transmission apparatus is applied thereto, the lubricating oil exhibiting a peak of 57 ± 2 ppm in a ³¹P-nuclear magnetic resonance analysis.

Of a pair of friction members sliding with each other, a sliding surface of one of the friction members preferably has a diamond-like carbon film formed thereon.

Of a pair of friction members sliding with each other, a sliding surface of one of the friction members preferably has a tungsten carbide/diamond-like carbon film formed thereon, and a sliding surface of the other friction member is preferably nitrided.

Of a pair of friction members sliding with each other, a sliding surface of one of the friction members is preferably made from an iron-based metal, and a sliding surface of the other friction member is preferably nitrided.

A first gear-type differential with a differential limiting function according to the present invention is characterized in that a lubricating oil used in a friction-type driving force transmission apparatus is applied thereto, the lubricating oil including at least one of an aliphatic amine having a saturated or unsaturated hydrocarbon group with a carbon number of 12 to 20 (expressed by Chemical Formula 1) and an aliphatic amine ethylene oxide adduct having a saturated or unsaturated hydrocarbon group with a carbon number of 12 to 20 (expressed by Chemical Formula 2).

The first gear-type differential with a differential limiting function is preferably a driving force transmission apparatus, the apparatus including: a plurality of planetary gears; a planetary carrier for supporting the plurality of planetary gears so that the plurality of planetary gears are orbitally revolvable and rotatable on their own rotational axes; and a pair of gears disposed coaxial with the planetary carrier and differentially rotatable via the planetary gears, wherein the lubricating oil is applied to between sliding surfaces of the planetary gears and the planetary carrier.

A second gear-type differential with a differential limiting function according to the present invention is characterized in that a lubricating oil used in a friction-type driving force transmission apparatus is applied thereto, the lubricating oil including at least one of a phosphorous acid diester having a saturated or unsaturated hydrocarbon group with a carbon number of 12 to 20 (expressed by Chemical Formula 3) and a phosphorous acid monoester having a saturated or unsaturated hydrocarbon group with a carbon number of 12 to 20 (expressed by Chemical Formula 4).

The second gear-type differential with a differential limiting function is preferably a driving force transmission apparatus, the apparatus including: a plurality of planetary gears; a planetary carrier for supporting the plurality of planetary gears so that the plurality of planetary gears are orbitally revolvable and rotatable on their own rotational axes; and a pair of gears disposed coaxial with the planetary carrier and differentially rotatable via the planetary gears, wherein the lubricating oil is applied to between sliding surfaces of the planetary gears and the planetary carrier.

A third gear-type differential with a differential limiting function according to the present invention is characterized in that a lubricating oil used in a friction-type driving force transmission apparatus is applied thereto, the lubricating oil including: at least one of an aliphatic amine having a saturated or unsaturated hydrocarbon group with a carbon number of 12 to 20 (expressed by Chemical Formula 1) and an aliphatic amine ethylene oxide adduct having a saturated or unsaturated hydrocarbon group with a carbon number of 12 to 20 (expressed by Chemical Formula 2); and at least one of a phosphorous acid diester having a saturated or unsaturated hydrocarbon group with a carbon number of 12 to 20 (expressed by Chemical Formula 3) and a phosphorous acid monoester having a saturated or unsaturated hydrocarbon group with a carbon number of 12 to 20 (expressed by Chemical Formula 4).

The third gear-type differential with a differential limiting function is preferably a driving force transmission apparatus, including: a plurality of planetary gears; a planetary carrier for supporting the plurality of planetary gears so that the plurality of planetary gears are orbitally revolvable and rotatable on their own rotational axes; and a pair of gears disposed coaxial with the planetary carrier and differentially rotatable via the planetary gears, wherein the lubricating oil is applied to between sliding surfaces of the planetary gears and the planetary carrier.

A fourth gear-type differential with a differential limiting function according to the present invention is characterized in that a lubricating oil used in a friction-type driving force transmission apparatus is applied thereto, wherein, given that the mass of the lubricating oil is 100%, a phosphorus content derived from a thiophosphate diester (Chemical Formula 5) and/or an amine salt thereof (Chemical Formula 6) is preferably 0.010% or more.

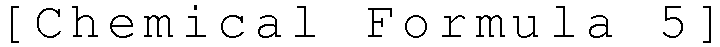

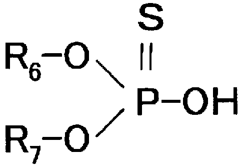

- R₆:: a saturated or unsaturated hydrocarbon group with a carbon number of 12 to 20
- R₇:: a saturated or unsaturated hydrocarbon group with a carbon number of 12 to 20

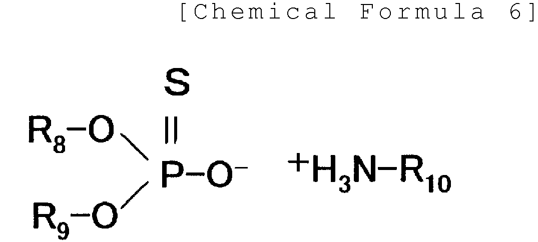

- R₈:: a saturated or unsaturated hydrocarbon group with a carbon number of 12 to 20
- R₉:: a saturated or unsaturated hydrocarbon group with a carbon number of 12 to 20
- R₁₀:: a saturated or unsaturated hydrocarbon group with a carbon number of 12 to 20

The gear-type differential with a differential limiting function is preferably a driving force transmission apparatus, the apparatus including: a plurality of planetary gears; a planetary carrier for supporting the plurality of planetary gears so that the plurality of planetary gears are orbitally revolvable and rotatable on their own rotational axes; and a pair of gears disposed coaxial with the planetary carrier and differentially rotatable via the planetary gears, wherein the lubricating oil is applied to between sliding surfaces of the planetary gears and the planetary carrier.

### EFFECT OF THE INVENTION

The lubricating oil according to the present invention, when mixed with the specific additives, succeeds in improving the µ-v characteristics toward positive gradient. As a result, the friction member and the gear-type differential with a differential limiting function (friction-type differential limiting device) wherein the lubricating oil according to the present invention is used, can both ensure remarkable quietness.

BRIEF DESCRIPTION OF DRAWINGS

Fig. 1 is an illustration of a center differential with a differential limiting function.
Fig. 2 is an enlarged view of a structural part of the center differential with a differential limiting function.
Fig. 3 is an illustration of sliding contacts in the center differential with a differential limiting function.
Figs. 4 illustrate NMR spectra of sample oils F, G, and H.
Figs. 5 illustrate NMR spectra of sample oils F, N, M, and A.
Figs. 6 illustrate NMR spectra of sample oils G, E, and H.
Fig. 7 illustrates IR spectral subtraction between sample oils P and F.
Fig. 8 illustrates IR spectral subtraction between sample oils R and F.
Fig. 9 illustrates IR spectral subtraction between sample oils J and F.
Fig. 10 illustrates IR spectral subtraction between sample oils L and F.
Fig. 11 illustrates IR spectral subtraction between sample oils A and F.
Fig. 12 illustrates IR spectral subtraction between sample oils E and G.
Fig. 13 illustrates an IR spectrum of oleylamine.
Fig. 14 illustrates an IR spectrum of dioleyl hydrogen phosphite.
Fig. 15 illustrates IR spectral subtraction between sample oils B and F.
Fig. 16 illustrates an IR spectrum of polyoxyethylene oleylamine.
Fig. 17 illustrates IR spectral subtraction between sample oils U and S.
Fig. 18 illustrates IR spectral subtraction between sample oils V and T.
Fig. 19 illustrates an NMR spectrum of a model sample oil a.
Fig. 20 illustrates an NMR spectrum of the sample oil U.
Fig. 21 illustrates an IR spectrum of the sample oil A.
Fig. 22 illustrates an IR spectrum of the sample oil B.
Fig. 23 illustrates an IR spectrum of the sample oil D.
Fig. 24 illustrates an IR spectrum of the sample oil E.
Fig. 25 illustrates an IR spectrum of the sample oil F.
Fig. 26 illustrates an IR spectrum of the sample oil G.
Fig. 27 illustrates an IR spectrum of the sample oil U.
Fig. 28 illustrates an IR spectrum of the sample oil V.
Fig. 29 illustrates an IR spectrum of a sample oil W.
Fig. 30 illustrates an IR spectrum of a non-ester hydrocarbon-containing base oil commercially available (sample oil S).
Fig. 31 illustrates an IR spectrum of a diester-containing base oil commercially available (sample oil T).
Figs. 32 are illustrations of a ring-on-block friction test apparatus.
Figs. 33 are illustrations of a running-in pattern of the friction test.
Figs. 34 are illustrations of a performance measurement pattern of the friction test.
Fig. 35 illustrates a measurement result of µ-v characteristics of the sample oils E and F.
Fig. 36 illustrates a measurement result of µ-v gradients of the sample oils E and F for sliding members respectively made from different materials.
Fig. 37 illustrates a measurement result of µ-v gradients of the sample oils F, O, P, and A.
Fig. 38 illustrates a measurement result of µ-v gradients of the sample oils F, A, and B.
Fig. 39 illustrates a measurement result of µ-v gradients of the sample oils N, J, A, and B.
Fig. 40 illustrates a measurement result of µ-v gradients of the sample oils M, Q, R, and A.
Fig. 41 illustrates a measurement result of µ-v gradients of the sample oils M, L, and A.
Fig. 42 illustrates a measurement result of µ-v gradients of the sample oils F and A.
Fig. 43 illustrates a measurement result of µ-v gradients of the sample oils G and E.
Fig. 44 illustrates a measurement result of µ-v gradients of the sample oil S, sample oil S + phosphorous acid diester, sample oil S + aliphatic amine, and sample oil U.
Fig. 45 illustrates a measurement result of µ-v gradients of the sample oils T and V.
Fig. 46 illustrates a measurement result of µ-v gradients of the sample oils F, P, R, J, and L.
Fig. 47 illustrates a measurement result of µ-v gradients of the sample oils A, D, and E.
Fig. 48 illustrates a measurement result of µ-v gradients of the sample oils U, V, and W.
Fig. 49 illustrates a measurement result of µ-v gradients of the sample oils F and A.
Fig. 50 illustrates a measurement result of µ-v gradients of sample oils G and E.
Fig. 51 illustrates a measurement result of µ-v gradients of the sample oils V and U.
Fig. 52 illustrates a TOF-SIMS analysis result of phosphor-containing coatings of the sample oils V and U.
Fig. 53 illustrates a TOF-SIMS analysis result of ester-containing coatings of the sample oils V and U.
Fig. 54 illustrates an XPS analysis result of the sample oils V and U.
Fig. 55 illustrates a measurement result of µ-v characteristics of the sample oils in an initial stage.
Fig. 56 illustrates a measurement result of µ-v characteristics of the sample oils after a thermal load is applied thereto.
Fig. 57 illustrates changes with time of µ-v gradients under the thermal load.
Figs. 58 are illustrations of effects exerted by additives in a lubricating oil according to the present invention.
Figs. 59 are illustrations of a solid contact between friction members in which a conventional lubricating oil is used.
Fig. 60 is an illustration of a differential with a differential limiting function according to a first modified embodiment of the present invention.
Fig. 61 is an illustration of a differential with a differential limiting function according to a second modified embodiment of the present invention.
Fig. 62 is an illustration of a gear mechanism in the differential with a differential limiting function according to the second modified embodiment.

### EXEMPLARY EMBODIMENT FOR CARRYING OUT THE INVENTION

### First Lubricating Oil

A lubricating oil according to the present invention is a lubricating oil used in a friction-type driving force transmission apparatus, the lubricating oil including at least one of an aliphatic amine having a saturated or unsaturated hydrocarbon group with a carbon number of 12 to 20 (expressed by Chemical Formula 1) and an aliphatic amine ethylene oxide adduct having a saturated or unsaturated hydrocarbon group with a carbon number of 12 to 20 (expressed by Chemical Formula 2).

When the aliphatic amine expressed by Chemical Formula 1 and the aliphatic amine ethylene oxide adduct expressed by Chemical Formula 2 are included in the lubricating oil according to the present invention, µ-v characteristics with positive gradient are obtained when used in the friction-type differential limiting device. More specifically, the lubricating oil including these additives, when applied to a friction surface of the friction-type differential limiting device, is thought to prevent solid contact thereon.

In the case where the saturated or unsaturated hydrocarbon groups (hydrocarbon groups expressed by R₁ and R₂ in Chemical Formulas 1 and 2) of the aliphatic amine and the aliphatic amine ethylene oxide adduct have a carbon number of 11 or less, it fails to ensure an enough adsorption film thicknesseffectiveforpreventingthesolidcontact. The hydrocarbon group with a carbon number of 21 or more results in a lower polarity, leading to a less adsorptivity on the friction surface.

As is known from Chemical Formula 2, an amount of the aliphatic amine ethylene oxide adduct (x + y) stays in the range of 1 to 3. The amount to be added larger than 3 overly increases the polarity, undermining the solubility in the base oil. As a result, the ethylene oxide is likely to separate out from the lubricating oil.

Given that the mass of the lubricating oil according to the present invention is 100%, at least one of the aliphatic amine, the aliphatic amine ethylene oxide adduct, and the aliphatic amine and the aliphatic amine ethylene oxide adduct in total is preferably included by 1.0% to 5.0%. As far as the content of the aliphatic amine and/or the aliphatic amine ethylene oxide adduct is 1.0% to 5.0% by mass, µ-v characteristics can be more effectively improved toward positive gradient in the friction-type differential limiting device where the lubricating oil is used.

The content of the aliphatic amine and/or the aliphatic amine ethylene oxide adduct less than 1.0% by mass fails to attain an expected durability and desirable µ-v characteristics. The additive content more than 5.0% by mass leads to excess formation of the adsorption film, causing chemical wear or inviting deposition of the additive ingredients from the lubricating oil. Therefore, the additive content is more preferably 1.5% to 4.0% by mass.

The saturated or unsaturated hydrocarbon group of the aliphatic amine, the aliphatic amine ethylene oxide adduct with a carbon number of 12 to 20 is preferably an unsaturated hydrocarbon group with a carbon number of 18. In the lubricating oil according to the present invention, the hydrocarbon group of the additive added thereto as FM may be a saturated or unsaturated hydrocarbon group with a carbon number of 12 to 20, however, the hydrocarbon group is preferably an unsaturated hydrocarbon group with a carbon number of 18 because an effect obtained by the additive is thereby improved, and the unsaturated hydrocarbon group allows a larger volume of additive to be dissolved in the lubricating oil, providing a better durability. The saturated hydrocarbon group is preferably an alkenyl group, and the unsaturated hydrocarbon group with a carbon number of 18 is preferably an oleyl group.

Given that the mass of the lubricating oil according to the present invention is 100%, at least one of an acidic phosphate ester and an acidic thiophosphate ester is preferably included so that a phosphorus content stays in a range of 0.20% ≤ P ≤ 0.50%.

At least one of the acidic phosphate ester and the acidic thiophosphate ester is preferably included because, when used in a differential gear of the friction-type differential limiting device, wear and seizure of the gear are prevented from happening.

The phosphorus content below 0.20% by mass fails to ensure an enough wear resistance and seizure proofness. Thephosphoruscontentlargerthan0.50% by mass causes an excessive reaction of an extreme pressure agent, resulting in the occurrence of chemical wear or corrosion damage. The phosphorus content is more desirably 0.20% to 0.40% by mass.

The acidic phosphate ester and the acidic thiophosphate ester may be a monoester, diester, and triester, or a mixture of these esters.

At least one of the acidic phosphate ester and the acidic thiophosphate ester is preferably included in a state where the aliphatic amine having a saturated or unsaturated hydrocarbon group with a carbon number of 12 to 20 and an amine salt thereof are formed. At least one of the acidic phosphate ester and the acidic thiophosphate ester forms an amine salt, thereby more effectively improving µ-v characteristics toward positive gradient while preventing wear and seizure of the gear. The aliphatic amine having a saturated or unsaturated hydrocarbon group with a carbon number of 12 to 20 wherein at least one of the acidic phosphate ester and the acidic thiophosphate ester forms an amine salt is preferably the aliphatic amine expressed by Chemical Formula 1.

To form the aliphatic amine and the amine salt, at least one of an acidic phosphate ester or an acidic thiophosphate ester having an OH group is preferably included as a phosphorus content of the extreme pressure additive.

Similarly to any conventional lubricating oils, the lubricating oil according to the present invention may include a base oil and an additive mixed with the base oil.

The lubricating oil according to the present invention preferably includes a hydrocarbon oil as a base oil thereof, wherein a peak absorbency of the lubricating oil at infrared spectral wave numbers of 1,740 ± 20 cm⁻¹ is at most 1.5 in an infrared spectroscopic analysis using a fixed cell for liquid having an optical length of 0.05 mm ± 0.005 mm.

The base oil is preferably a non-ester base oil (hydrocarbon oil). As an ester content of the base oil increases, the additive (FM) having a polar group is less adsorbed, meaning that the base oil preferably includes as little ester component as possible. The peak at the infrared spectral wave numbers of 1,740 ± 20 cm⁻¹ in the infrared spectroscopic analysis (FT-IR) indicates a peak of the ester content. Therefore, the base oil includes less ester as the peak absorbency in 1,740 ± 20 cm-¹ is smaller in the lubricating oil FT-IR.

The lubricating oil according to the present invention preferably exhibits a peak of 57 ± 2 ppm in a ³¹P-nuclear magnetic resonance analysis. In the ³¹P-nuclear magnetic resonance analysis (NMR), a peak assigned to the thiophosphate diester is detected at near 57 ppm, meaning that the lubricating oil exhibiting a peak of 57 ± 2 ppm in NMR includes the thiophosphate diester. The lubricating oil including the thiophosphate diester can more effectively attain µ-v characteristics with positive gradient while preventing wear and seizure of the gear in the friction-type driving force transmission apparatus. When the peak of 57 ± 2 ppm is exhibited in NMR, µ-v characteristics can be effectively improved toward positive gradient, while wear and seizure of the gear are prevented from happening.

Given that the mass of the lubricating oil is 100%, a phosphorus content associated with a thiophosphate diester and/or an amine salt thereof is preferably more than 0.010%. The phosphorus content less than 0.010% is too small to fully exert an expected effect of the additive. The thiophosphate diester is preferably a compound expressed by expressed by Chemical Formula 5, and the amine salt thereof is preferably a compound expressed by expressed by Chemical Formula 6.

### Second Lubricating Oil

A lubricating oil according to the present invention is a lubricating oil used in a friction-type driving force transmission apparatus. The lubricating oil includes at least one of a phosphorous acid diester having a saturated or unsaturated hydrocarbon group with a carbon number of 12 to 20 (expressed by Chemical Formula 3) and a phosphorous acid monoester having a saturated or unsaturated hydrocarbon group with a carbon number of 12 to 20 where R₄ of Chemical Formula 3 is hydrogen (expressed by Chemical Formula 4).

The phosphorous acid diester and the phosphorous acid monoester included in the lubricating oil according to the present invention serves a purpose similarly to that of aliphatic amine and/or the aliphatic amine ethylene oxide adduct according to the expressed by first invention and exerts an effect similar to that of the first invention. The phosphorous acid diester and/or the phosphorous acid monoester, when included in the lubricating oil, favorably attain µ-V characteristics with positive gradient in the friction-type differential limiting device. More specifically, the lubricating oil including these additives, when applied to a friction surface of the friction-type differential limiting device, is thought to prevent solid contact thereon.

In the case where the saturated or unsaturated hydrocarbon groups with a carbon number of 12 to 20 (hydrocarbon groups expressed by R₃ and R₄ in expressed by Chemical Formula 3) of the phosphorous acid diester and the saturated or unsaturated hydrocarbon group with a carbon number of 12 to 20 (hydrocarbon group expressed by R₅ in expressed by Chemical Formula 4) of the phosphorous acid monoester respectively have a carbon number of 11 or less, it fails to ensure an enough adsorption film thickness effective for preventing the solid contact. The hydrocarbon group with a carbon number 21 or more results in a lower polarity, leading to a less adsorptivity on the friction surface.

Given that the mass of the lubricating oil according to the present invention is 100%, at least one of the phosphorous acid monoester, the phosphorous acid diester, and the phosphorous acid monoester and the phosphorous acid diester in total is preferably included by 1.0% to 5.0%. As far as a content of the phosphorous acid monoester and/or the phosphorous acid diester stays in the range of 1.0% to 5.0% by mass, µ-v characteristics can be more effectively improved toward positive gradient in the friction-type differential limiting device where the lubricating oil is used.

The content of the phosphorous acid monoester and/or the phosphorous acid diester less than 1.0% by mass fails to attain an expected durability and desirable µ-v characteristics. The additive content more than 5.0% by mass leads to excess formation of the adsorption film, causing chemical wear or inviting deposition of the additive ingredients from the lubricating oil. The additive content is more desirably 1.5% to 4.0% by mass.

The saturated or unsaturated hydrocarbon group with a carbon number of 12 to 20 of the phosphorous acid monoester, the phosphorous acid diester is preferably an unsaturated hydrocarbon group with a carbon number of 18. In the lubricating oil according to the present invention, the hydrocarbon group of the additive added thereto as FMmaybe a saturated or unsaturated hydrocarbon group with a carbon number of 12 to 20, however, the hydrocarbon group is preferably an unsaturated hydrocarbon group with a carbon number of 18 because an effect obtained by the additive is thereby improved, and the unsaturated hydrocarbon group allows a large volume of additive to be dissolved in the lubricating oil, providing a better durability. The saturated hydrocarbon group is preferably an alkenyl group, and the unsaturated hydrocarbon group with a carbon number of 18 is preferably an oleyl group.

Given that the mass of the lubricating oil is 100%, at least one of an acidic phosphate ester and an acidic thiophosphate ester is preferably included so that a phosphorus content stays in a range of 0.20% ≦ P ≦ 0.50%.

At least one of the acidic phosphate ester and the acidic thiophosphate ester is preferably included because, when used in a differential gear of the friction-type differential limiting device, wear and seizure of the gear are prevented from happening.

The phosphorus content below 0.20% by mass fails to ensure an enough wear resistance and seizure proofness. Thephosphoruscontentlargerthan0.50% by mass causes an excessive reaction of an extreme pressure agent, resulting in the occurrence of chemical wear or corrosion damage. The phosphorus content is more desirably 0.20% to 0.40% by mass.

The acidic phosphate ester and the acidic thiophosphate ester may be a monoester, diester, and triester, or a mixture of these esters.

At least one of the acidic phosphate ester and the acidic thiophosphate ester is preferably included in a state where the aliphatic amine having a saturated or unsaturated hydrocarbon group with a carbon number of 12 to 20 and an amine salt thereof are formed. At least one of the acidic phosphate ester and the acidic thiophosphate ester forms an amine salt, thereby more effectively improving µ-v characteristics toward positive gradient while preventing wear and seizure of the gear.

To form the aliphatic amine and the amine salt, at least one of an acidic phosphate ester or an acidic thiophosphate ester having an OH group is preferably included as a phosphorus content of the extreme-pressure agent.

Similarly to any conventional lubricating oils, the lubricating oil according to the present invention may include a base oil and an additive mixed with the base oil.

The lubricating oil according to the present invention preferably includes a hydrocarbon oil as a base oil thereof, wherein a peak absorbency of the lubricating oil at infrared spectral wave numbers of 1,740 ± 20 cm⁻¹ is at most 1.5 in an infrared spectroscopic analysis using a fixed cell for liquid having an optical length of 0.05 mm ± 0.005 mm.

The base oil is preferably a non-ester base oil (hydrocarbon oil). As an ester content in the base oil increases, the additive (FM) having a polar group is less adsorbed, meaning that the base oil preferably includes as little ester component as possible. The peak at the infrared spectral wave numbers of 1,740 ± 20 cm⁻¹ in the infrared spectroscopic analysis (FT-IR) indicates a peak of the ester content. Therefore, the base oil includes less ester as the peak absorbency at 1,740 ± 20 cm⁻¹ is smaller in the lubricating oil FT-IR.

The lubricating oil according to the present invention preferably exhibits a peak of 57 ± 2 ppm in a ³¹P-nuclear magnetic resonance analysis. In the ³¹P-nuclear magnetic resonance analysis (NMR), a peak assigned to the thiophosphate diester is detected at near 57 ppm, meaning that the lubricating oil exhibiting a peak of 57 ± 2 ppm in NMR includes the thiophosphate diester. The lubricating oil including the thiophosphate diester can more effectively improve µ-v characteristics toward positive gradient while preventing wear and seizure of the gear in the friction-type driving force transmission apparatus. When the peak of 57 ± 2 ppm is exhibited in NMR, µ-v characteristics can be effectively improved toward positive gradient, while wear and seizure of the gear are prevented from happening.

Given that the mass of the lubricating oil is 100%, a phosphorus content associated with the thiophosphate diester and/or the thiophosphate diester amine salt is preferably 0.010% or more. The phosphorus content less than 0.010% is too small to fully exert an effect of the additive. The thiophosphate diester is preferably a compound expressed by Chemical Formula 5, and the amine salt of the thiophosphate diester is preferably a compound expressed by Chemical Formula 6.

### Third Lubricating Oil

A third lubricating oil according to the present invention is a lubricating oil used in a friction-type driving force transmission apparatus, the lubricating oil including: at least one of an aliphatic amine having a saturated or unsaturated hydrocarbon group with a carbon number of 12 to 20 (expressed by Chemical Formula 1) and an aliphatic amine ethylene oxide adduct having a saturated or unsaturated hydrocarbon group with a carbon number of 12 to 20 (expressed by Chemical Formula 2); and at least one of a phosphorous acid diester having a saturated or unsaturated hydrocarbon group with a carbon number of 12 to 20 (expressed by Chemical Formula 3) and a phosphorous acid monoester having a saturated or unsaturated hydrocarbon group with a carbon number of 12 to 20 where R₄ of expressed by Chemical Formula 3 is hydrogen (expressed by Chemical Formula 4).

The lubricating oil according to the present invention includes both of the additives respectively mixed with the first lubricating oil and the second lubricating oil, thereby exerting the effects according to these inventions at once. When the aliphatic amine and/or the aliphatic amine ethylene oxide adduct and the phosphorous acid diester and/or phosphorous acid monoester are included in the lubricating oil according to the present invention, µ-v characteristics with positive gradient are favorably attained in the friction-type differential limiting device. More specifically, the lubricating oil including these additives, when applied to a friction surface of the friction-type differential limiting device, is thought to prevent solid contact thereon.

In the case where the saturated or unsaturated hydrocarbon groups (hydrocarbon groups expressed by R₁ and R₂ in Chemical Formulas 1 and 2) of the aliphatic amine and the aliphatic amine ethylene oxide adduct have a carbon number of 11 or less, it fails to ensure an enough adsorption film thicknesseffectiveforpreventingthesolidcontact. The hydrocarbon group with a carbon number of 21 or more results in a lower polarity, leading to a less adsorptivity on the friction surface.

As is known from Chemical Formula 2, an amount of the aliphatic amine ethylene oxide adduct (x + y) stays in the range of 1 to 3. The amount to be added larger than 3 overly increases the polarity, undermining the solubility in the base oil. As a result, the ethylene oxide is likely to separate out from the lubricating oil.

In the case where the saturated or unsaturated hydrocarbon groups with a carbon number of 12 to 20 (hydrocarbon groups expressed by R₃ and R₄ in Chemical Formula 3) of the phosphorous acid diester and the saturated or unsaturated hydrocarbon group with a carbon number of 12 to 20 (hydrocarbon group expressed by R₄ in Chemical Formula 4) of the phosphorous acid monoester respectively have a carbon number of 11 or less, it fails to ensure an enough adsorption film thickness effective for preventing the solid contact. The hydrocarbon group with a carbon number of 21 or more results in a lower polarity, leading to a less adsorptivity on the friction surface.

Given that the mass of the lubricating oil is 100%, at least one of the aliphatic amine, the aliphatic amine ethylene oxide adduct, and the aliphatic amine and the aliphatic amine ethylene oxide adduct in total is preferably included by 1.0% to 5.0%, and at least one of the phosphorous acid monoester, the phosphorous acid diester, and the phosphorous acid monoester and the phosphorous acid diester in total is preferably included by 1.0% to 5.0%. When the content of the aliphatic amine and/or the aliphatic amine ethylene oxide adduct is 1.0% to 5.0% by mass, and the content of the phosphorous acid diester and/or the phosphorous acid monoester is 1.0% to 5.0% by mass, the µ-v characteristics are more effectively improved toward positive gradient in the friction-type differential limiting device where the lubricating oil is used.

In the case where the additive content of the aliphatic amine and/or the aliphatic amine ethylene oxide adduct and the additive content of the phosphorous acid diester and/or the phosphorous acid monoester are less than 1.0% by mass, not only durability but also desirable µ-v characteristics are undermined. The additive content more than 5.0% by mass leads to excess formation of the adsorption film, causing chemical wear or inviting deposition of the additive ingredients from the lubricating oil. Therefore, the content of the aliphatic amine and/or the aliphatic amine ethylene oxide adduct and the content of the phosphorous acid diester and/or the phosphorous acid monoester are more desirably 1.5% to 4.0% by mass.

The saturated or unsaturated hydrocarbon group of the phosphorous acid diester, the phosphorous acid monoester with a carbon number of 12 to 20 is preferably an unsaturated hydrocarbon group with a carbon number of 18. In the lubricating oil according to the present invention, the hydrocarbon group of the additive added thereto as FM may be a saturated or unsaturated hydrocarbon group with a carbon number of 12 to 20, however, the hydrocarbon group is preferably an unsaturated hydrocarbon group with a carbon number of 18 because an effect obtained by the additive is thereby improved, and the unsaturated hydrocarbon group allows a large volume of additive to be dissolved in the lubricating oil, providing a better durability. The saturated hydrocarbon group is preferably an alkenyl group, and the unsaturated hydrocarbon group with a carbon number of 18 is preferably an oleyl group.

Given that the mass of the lubricating oil according to the present invention is 100%, at least one of an acidic phosphate ester and an acidic thiophosphate ester is preferably included so that a phosphorus content stays in a range of 0.20%≤P≤0.50%.

At least one of the acidic phosphate ester and the acidic thiophosphate ester is preferably included because, when used in a differential gear of the friction-type differential limiting device, wear and seizure of the gear are prevented from happening.

The phosphorus content below 0.20% by mass fails to ensure an enough wear resistance and seizure proofness. Thephosphoruscontentlargerthan0.50% by mass causes an excessive reaction of an extreme pressure agent, resulting in the occurrence of chemical wear or corrosion damage. The phosphorus content is more desirably 0.20% to 0.40% by mass.

The acidic phosphate ester and the acidic thiophosphate ester may be a monoester, diester, and triester, or a mixture of these esters.

At least one of the acidic phosphate ester and the acidic thiophosphate ester is preferably included in a state where the aliphatic amine having a saturated or unsaturated hydrocarbon group with a carbon number of 12 to 20 and an amine salt thereof are formed. At least one of the acidic phosphate ester and the acidic thiophosphate ester forms an amine salt, thereby more effectively improving µ-v characteristics toward positive gradient while preventing wear and seizure of the gear. The aliphatic amine having the saturated or unsaturated hydrocarbon group with a carbon number of 12 to 20 wherein at least one of the acidic phosphate ester and the acidic thiophosphate ester forms an amine salt is preferably the aliphatic amine expressed by expressed by Chemical Formula 22.

To form the aliphatic amine and the amine salt, at least one of an acidic phosphate ester or an acidic thiophosphate ester having an OH group is preferably included as a phosphorus content of the extreme-pressure agent.

Similarly to any conventional lubricating oils, the lubricating oil according to the present invention may include a base oil and an additive mixed with the base oil.

The lubricating oil according to the present invention preferably includes a hydrocarbon oil as a base oil thereof, wherein a peak absorbency of the lubricating oil at infrared spectral wave numbers of 1,740 ± 20 cm⁻¹ is at most 1.5 in an infrared spectroscopic analysis using a fixed cell for liquid having an optical length of 0.05 mm ± 0.005 mm.

The base oil is preferably a non-ester base oil (hydrocarbon oil). As an ester content in the base oil is larger, the additive (FM) having a polar group is less adsorbed, meaning that the base oil preferably includes as little ester component as possible. The peak at the infrared spectral wave numbers of 1,740 ± 20 cm⁻¹ in the infrared spectroscopic analysis (FT-IR) indicates a peak of the ester content. Therefore, the base oil includes less ester as the peak absorbency at 1,740 ± 20 cm-¹ is smaller in the lubricating oil FT-IR.

The lubricating oil according to the present invention preferably exhibits a peak of 57 ± 2 ppm in a 31^{P}-nuclear magnetic resonance analysis. In the ³¹P-nuclear magnetic resonance analysis (NMR), a peak assigned to the thiophosphate diester is detected at near 57 ppm, meaning that the lubricating oil exhibiting a peak of 57 ± 2 ppm in NMR includes the thiophosphate diester. The lubricating oil including the thiophosphate diester can more effectively improve µ-v characteristics toward positive gradient while preventing wear and seizure of the gear in the friction-type driving force transmission apparatus. When the peak of 57 ± 2 ppm is exhibited in NMR, µ-v characteristics can be effectively improved toward positive gradient, while wear and seizure of the gear are prevented from happening.

Given that the mass of the lubricating oil according to the present invention is 100%, a phosphorus content derived from a thiophosphate diester and/or an amine salt thereof is preferably 0.010% or more. The phosphorus content less than 0.010% is too small to fully exert an effect of the additive. The thiophosphate diester is preferably a compound expressed by expressed by Chemical Formula 5, and the amine salt of the thiophosphate diester is preferably a compound expressed by expressed by Chemical Formula 6.

### Fourth Lubricating Oil

A fourth lubricating oil according to the present invention is a lubricating oil used in a friction-type driving force transmission apparatus. The lubricating oil includes an aliphatic amine having a saturated or unsaturated hydrocarbon group with a carbon number of 12 to 20 (expressed by Chemical Formula 1) and at least one of a phosphorous acid diester having a saturated or unsaturated hydrocarbon group with a carbon number of 12 to 20 (expressed by Chemical Formula 3) and a phosphorous acid monoester having a saturated or unsaturated hydrocarbon group with a carbon number of 12 to 20 (expressed by Chemical Formula 4).

The lubricating oil according to the present invention includes the aliphatic amine that can be mixed with the first lubricating oil and the additives respectively mixed with the second lubricating oil, thereby exerting the effects according to these inventions at once. When the aliphatic amine and/or the aliphatic amine ethylene oxide adduct and the phosphorous acid diester and/or phosphorous acid monoester are included in the lubricating oil according to the present invention, µ-v characteristics favorably have positive gradient in the friction-type differential limiting device. More specifically, the lubricating oil including these additives, when applied to a friction surface of the friction-type differential limiting device, is thought to prevent solid contact thereon.

In the case where the saturated or unsaturated hydrocarbon group (hydrocarbon group expressed by R₁ in Chemical Formula 1) of the aliphatic amine and the aliphatic amine ethylene oxide adduct has a carbon number equal to or less than 11, it fails to ensure an enough adsorption film thickness effective for preventing the solid contact. The hydrocarbon group with a carbon number equal to or more than 21 results in a lower polarity, reducing an adsorptivity to the friction surface.

The phosphorous acid diester (following Chemical Formula 7) and/or the phosphorous monoester (following Chemical Formula 8) is preferably included in the lubricating oil according to the present invention in a state where the aliphatic amine and an amine salt thereof are formed. The amine salt is oil-soluble, therefore, is homogeneously dissolved (dispersed) in the base oil of the lubricating oil. The amine salt thus homogeneously dissolved (dispersed) in the base oil of the lubricating oil without the occurrence of layer separation or deposition, when applied to a friction surface, can prevent solid contact thereon.

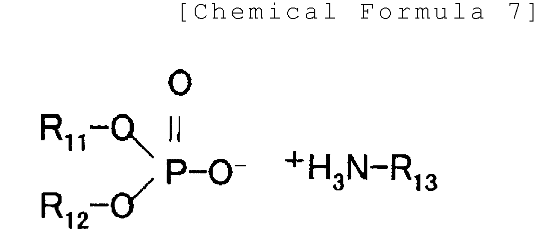

- R₁₁:: a saturated or unsaturated hydrocarbon group with a carbon number of 12 to 20
- R₁₂:: a saturated or unsaturated hydrocarbon group with a carbon number of 12 to 20
- R₁₃:: a saturated or unsaturated hydrocarbon group with a carbon number of 12 to 20

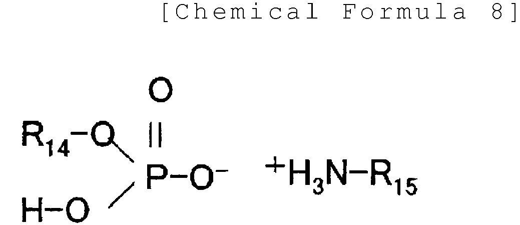

- R₁₄:: a saturated or unsaturated hydrocarbon group with a carbon number of 12 to 20
- R₁₅:: a saturated or unsaturated hydrocarbon group with a carbon number of 12 to 20

### Fifth Lubricating Oil

A fifth lubricating oil according to the present invention exhibits a peak of 57 ± 2 ppm in a ³¹P-nuclear magnetic resonance analysis. In the ³¹P-nuclear magnetic resonance analysis (NMR), a peak assigned to the thiophosphate diester is detected at near 57 ppm, meaning that the lubricating oil exhibiting a peak at 57 ± 2 ppm in NMR includes the thiophosphate diester. The lubricating oil including the thiophosphate diester can more effectively improve µ-**v** characteristics toward positive gradient while preventing wear and seizure of the gear in the friction-type driving force transmission apparatus. When the peak of 57 ± 2 ppm is exhibited in NMR, µ-**v** characteristics can be effectively improved toward positive gradient, while wear and seizure of the gear are prevented from happening.

Given that the mass of the lubricating oil according to the present invention is 100%, a phosphorus content derived from the thiophosphate diester and/or the thiophosphate diester amine salt is preferably 0.010% or more. The phosphorus content less than 0.010% is too small to fully exert an effect of the additive.

The amine salt of the thiophosphate diester is preferably a compound expressed by Chemical Formula 3, and the amine salt of the thiophosphate diester is preferably a compound expressed by Chemical Formula 8.

Given that the mass of the lubricating oil is 100%, at least one of an acidic phosphate ester and an acidic thiophosphate ester is preferably included so that a phosphorus content stays in a range of 0.20% ≦ P ≦ 0.50%.

At least one of the acidic phosphate ester and the acidic thiophosphate ester is preferably included because, when used in a differential gear of the friction-type differential limiting device, wear and seizure of the gear are prevented from happening.

The phosphorus content below 0.20% by mass fails to ensure an enough wear resistance and seizure proofness. The phosphorus content exceeding 0.50% by mass overly accelerates a reactivity of an extreme-pressure agent, causing chemical wear or corrosion damage. The phosphorus content is more desirably 0.20% to 0.40% by mass.

The acidic phosphate ester and the acidic thiophosphate ester may be a monoester, diester, and triester, or a mixture of these esters.

The lubricating oil according to the present invention preferably includes a hydrocarbon oil as a base oil thereof, wherein a peak absorbency of the lubricating oil at infrared spectral wave numbers of 1, 740 ± 20 cm⁻¹ is at most 1 . 5 in an infrared spectroscopic analysis using a fixed cell for liquid having an optical length of 0.05 mm ± 0.005 mm.

As described so far, the base oil of the lubricating oil according to the present invention is a non-ester base oil (hydrocarbon oil). As an ester content of the base oil is larger, the additive (FM) having a polar group is less adsorbed, meaning that the base oil preferably includes as little ester component as possible. The peak at the infrared spectral wave numbers of 1, 740 ± 20 cm⁻¹ in the infrared spectroscopic analysis (FT-IR) indicates a peak of the ester content. Therefore, the base oil includes less ester as the peak absorbency at 1,740 ± 20 cm⁻¹ is smaller in the lubricating oil FT-IR.

### First Friction Member

A friction member according to the present invention is characterized in that a lubricating oil used in a friction-type driving force transmission apparatus is applied thereto, the lubricating oil including at least one of an aliphatic amine having a saturated or unsaturated hydrocarbon group with a carbon number of 12 to 20 (expressed by Chemical Formula 1) and an aliphatic amine ethylene oxide adduct having a saturated or unsaturated hydrocarbon group with a carbon number of 12 to 20 (expressed by Chemical Formula 2).

Thus, the first lubricating oil is applied to the friction member according to the present invention. According to the friction member provided by the present invention, µ-v characteristics of the friction member are improved toward positive gradient, and an expected quietness is ensured during the friction in the presence of the lubricating oil including the additive serving to prevent solid contact when applied to a surface of the friction member used in the friction-type driving force transmission apparatus.

The friction member according to the present invention is characterized in that, of a pair of friction members sliding with each other, a sliding surface of one of the friction members preferably has a diamond-like carbon film formed thereon. A sliding movement of a friction member under demanding conditions (sliding movement at high contact pressures or high temperatures) wears a sliding surface of the friction member. The diamond-like carbon film (DLC film), when formed on the sliding surface, can control the wear of the friction member. The DLC film, which is not very aggressive against an opponent member, can slow down deterioration of the lubricating oil.

The DLC film may be formed on the sliding surface in a manner similar to any conventional DLC films. The film thickness of the DLC film may be suitably decided depending on sliding conditions of the friction members.

The friction member according to the present invention is characterized in that, of a pair of friction members sliding with each other, a sliding surface of one of the friction members preferably has a tungsten carbide/diamond-like carbon film formed thereon, and a sliding surface of the other friction member is preferably nitrided. Further, the sliding surface of the other friction member is preferably made from an iron-based metal and then nitrided.

Similarly to the formation of the DLC film, the tungsten carbide/diamond-like carbon film (WC/C film), when formed on the sliding surface, can control the wear of the friction member. The WC/C film includes a multilayered structure where a tungsten carbide-enriched layer and a diamond-like carbon-enriched layer are alternately stacked on each other. The multilayered structure where the two layers are alternately stacked can prevent the friction members from wearing.

When the other sliding surface is nitrided, a nitrided film is formed thereon. The nitrided film having a high degree of hardness can prevent the friction member from wearing against aggression from the friction member where the WC/C film is formed.

The formations of the DLC film and the WC/C film are not particularly limited, and these film may be formed by any conventional methods. The film thicknesses of these films may be suitably decided without limitation depending on use conditions of the friction members.

The friction member according to the present invention is characterized in that, of a pair of friction members sliding with each other, a sliding surface of one of the friction members is preferably made from an iron-based metal, and a sliding surface of the other friction member is preferably nitrided. The friction member according to the present invention, though neither of the DLC film nor the WC/C film is formed thereon, can be prevented from wearing by the lubricating oil.

### Second Friction Member

A friction member according to the present invention is characterized in that a lubricating oil used in a friction-type driving force transmission apparatus is applied thereto, the lubricating oil including at least one of a phosphorous acid diester having a saturated or unsaturated hydrocarbon group with a carbon number of 12 to 20 (expressed by Chemical Formula 3) and a phosphorous acid monoester having a saturated or unsaturated hydrocarbon group with a carbon number of 12 to 20 (expressed by Chemical Formula 4).

Thus, the second lubricating oil is applied to the friction member according to the present invention. According to the friction member provided by the present invention, µ-**v** characteristics of the friction member are improved toward positive gradient, and an expected quietness is ensured during the friction in the presence of the lubricating oil including the additive serving to prevent solid contact when applied to a surface of the friction member used in the friction-type driving force transmission apparatus.

The friction member according to the present invention is characterized in that, of a pair of friction members sliding with each other, a sliding surface of one of the friction members preferably has a diamond-like carbon film formed thereon. A sliding movement of a friction member under demanding conditions (sliding movement at high contact pressures or high temperatures) wears a sliding surface of the friction member. The diamond-like carbon film (DLC film), when formed on the sliding surface, can control the wear of the friction member. The DLC film, which is not very aggressive against an opponent member, can slow down deterioration of the lubricating oil.

The DLC film may be formed on the sliding surface in a manner similar to any conventional DLC films. The film thickness of the DLC film may be suitably decided depending on sliding conditions of the friction members.

The friction member according to the present invention is characterized in that, of a pair of friction members sliding with each other, a sliding surface of one of the friction members preferably has a tungsten carbide/diamond-like carbon film formed thereon, and a sliding surface of the other friction member is preferably nitrided. Further, the sliding surface of the other friction member is preferably made from an iron-based metal and then nitrided.

Similarly to the formation of the DLC film, the tungsten carbide/diamond-like carbon film (WC/C film), when formed on the sliding surface, can control the wear of the friction member. The WC/C film includes a multilayered structure where a tungsten carbide-enriched layer and a diamond-like carbon-enriched layer are alternately stacked on each other. The multilayered structure where the two layers are alternately stacked can prevent the friction members from wearing.

When the other sliding surface is nitrided, a nitrided film is formed thereon. The nitrided film having a high degree of hardness can prevent the friction member from wearing against aggression from the friction member where the WC/C film is formed.

The formations of the DLC film and the WC/C film are not particularly limited, and these film may be formed by any conventional methods. The film thicknesses of these films may be suitably decided without limitation depending on use conditions of the friction members.

The friction member according to the present invention is characterized in that, of a pair of friction members sliding with each other, a sliding surface of one of the friction members is preferably made from an iron-based metal, and a sliding surface of the other friction member is preferably nitrided. The friction member according to the present invention, though neither of the DLC film nor the WC/C film is formed thereon, can prevent the friction members from wearing by the lubricating oil.

### Third Friction Member

A friction member according to the present invention is characterized in that a lubricating oil used in a friction-type driving force transmission apparatus is applied thereto, the lubricating oil including: at least one of an aliphatic amine having a saturated or unsaturated hydrocarbon group with a carbon number of 12 to 20 (expressed by Chemical Formula 1) and an aliphatic amine ethylene oxide adduct having a saturated or unsaturated hydrocarbon group with a carbon number of 12 to 20 (expressed by Chemical Formula 2); and at least one of a phosphorous acid diester having a saturated or unsaturated hydrocarbon group with a carbon number of 12 to 20 (expressed by Chemical Formula 3) and a phosphorous acid monoester having a saturated or unsaturated hydrocarbon group with a carbon number of 12 to 20 (expressed by Chemical Formula 4).

Thus, the third lubricating oil is applied to the friction member according to the present invention. According to the friction member provided by the present invention, µ-**v** characteristics of the friction member are improved toward positive gradient, and an expected quietness is ensured during the friction in the presence of the lubricating oil including the additive serving to prevent solid contact when applied to a surface of the friction member used in the friction-type driving force transmission apparatus.

The friction member according to the present invention is characterized in that, of a pair of friction members sliding with each other, a sliding surface of one of the friction members preferably has a diamond-like carbon film formed thereon. A sliding movement of a friction member under demanding conditions (sliding movement at high contact pressures or high temperatures) wears a sliding surface of the friction member. The diamond-like carbon film (DLC film), when formed on the sliding surface, can control the wear of the friction member. The DLC film, which is not very aggressive against an opponent member, can slow down deterioration of the lubricating oil.

The DLC film may be formed on the sliding surface in a manner similar to any conventional DLC films. The film thickness of the DLC film may be suitably decided depending on sliding conditions of the friction members.

The friction member according to the present invention is characterized in that, of a pair of friction members sliding with each other, a sliding surface of one of the friction members preferably has a tungsten carbide/diamond-like carbon film formed thereon, and a sliding surface of the other friction member is preferably nitrided. Further, the sliding surface of the other friction member is preferably made from an iron-based metal and then nitrided.

Similarly to the formation of the DLC film, the tungsten carbide/diamond-like carbon film (WC/C film), when formed on the sliding surface, can control the wear of the friction member. The WC/C film includes a multilayered structure where a tungsten carbide-enriched layer and a diamond-like carbon-enriched layer are alternately stacked on each other. The multilayered structure where the two layers are alternately stacked can prevent the friction members from wearing.

When the other sliding surface is nitrided, a nitrided film is formed thereon. The nitrided film having a high degree of hardness can prevent the friction member from wearing against aggression from the friction member where the WC/C film is formed.

The formations of the DLC film and the WC/C film are not particularly limited, and these film may be formed by any conventional methods. The film thicknesses of these films may be suitably decided without limitation depending on use conditions of the friction members.

The friction member according to the present invention is characterized in that, of a pair of friction members sliding with each other, a sliding surface of one of the friction members is preferably made from an iron-based metal, and a sliding surface of the other friction member is preferably nitrided. The friction member according to the present invention, though neither of the DLC film nor the WC/C film is formed thereon, can be prevented from wearing by the lubricating oil.

### Fourth Friction Member

A fourth friction member according to the present invention is characterized in that a lubricating oil used in a friction-type driving force transmission apparatus is applied thereto, the lubricating oil exhibiting a peak of 57 ± 2 ppm in a ³¹P-nuclear magnetic resonance analysis.

Thus, the fifth lubricating oil is applied to the friction member according to the present invention. According to the friction member provided by the present invention, µ-**v** characteristics of the friction member are improved toward positive gradient, and an expected quietness is ensured during the friction in the presence of the lubricating oil including the additive serving to prevent solid contact when applied to a surface of the friction member used in the friction-type driving force transmission apparatus.

The friction member according to the present invention is characterized in that, of a pair of friction members sliding with each other, a sliding surface of one of the friction members preferably has a diamond-like carbon film formed thereon. A sliding movement of a friction member under demanding conditions (sliding movement at high contact pressures or high temperatures) wears a sliding surface of the friction member. The diamond-like carbon film (DLC film), when formed on the sliding surface, can control the wear of the friction member. The DLC film, which is not very aggressive against an opponent member, can slow down deterioration of the lubricating oil.

The DLC film may be formed on the sliding surface in a manner similar to any conventional DLC films. The film thickness of the DLC film may be suitably decided depending on sliding conditions of the friction members.

The friction member according to the present invention is characterized in that, of a pair of friction members sliding with each other, a sliding surface of one of the friction members preferably has a tungsten carbide/diamond-like carbon film formed thereon, and a sliding surface of the other friction member is preferably nitrided. Further, the sliding surface of the other friction member is preferably made from an iron-based metal and then nitrided.

Similarly to the formation of the DLC film, the tungsten carbide/diamond-like carbon film (WC/C film), when formed on the sliding surface, can control the wear of the friction member. The WC/C film includes a multilayered structure where a tungsten carbide-enriched layer and a diamond-like carbon-enriched layer are alternately stacked on each other. The multilayered structure where the two layers are alternately stacked can prevent the friction members from wearing.

When the other sliding surface is nitrided, a nitrided film is formed thereon. The nitrided film having a high degree of hardness can prevent the friction member from wearing against aggression from the friction member where the WC/C film is formed.

The formations of the DLC film and the WC/C film are not particularly limited, and these film may be formed by any conventional methods. The film thicknesses of these films may be suitably decided without limitation depending on use conditions of the friction members.

The friction member according to the present invention is characterized in that, of a pair of friction members sliding with each other, a sliding surface of one of the friction members is preferably made from an iron-based metal, and a sliding surface of the other friction member is preferably nitrided. The friction member according to the present invention, though neither of the DLC film nor the WC/C film is formed thereon, can be prevented from wearing by the lubricating oil.

### First Differential with a Differential Limiting Function

A gear-type differential with a differential limiting function according to the present invention is characterized in that a lubricating oil used in a friction-type driving force transmission apparatus is applied thereto, the lubricating oil including at least one of an aliphatic amine having a saturated or unsaturated hydrocarbon group with a carbon number of 12 to 20 (expressed by Chemical Formula 1) and an aliphatic amine ethylene oxide adduct having a saturated or unsaturated hydrocarbon group with a carbon number of 12 to 20 (expressed by Chemical Formula 2).

Thus, the first lubricating oil is applied to the differential with a differential limiting function according to the present invention. According to the differential with a differential limiting function provided by the present invention, µ-**v** characteristics of the friction member are improved toward positive gradient, and an expected quietness is ensured during the friction in the presence of the lubricating oil including the additive serving to prevent solid contact when applied to a surface of the friction member used in the friction-type driving force transmission apparatus.

The gear-type differential with a differential limiting function according to the present invention is a driving force transmission apparatus, including: a plurality of planetary gears; a planetary carrier for supporting the plurality of planetary gears so that the plurality of planetary gears are orbitally revolvable and rotatable on their own rotational axes; and a pair of gears disposed coaxial with the planetary carrier anddifferentiallyrotatableviatheplanetarygears, wherein a lubricating oil is applied to between sliding surfaces of the planetary gears and the planetary carrier.

The differential with a differential limiting function according to the present invention is a differential wherein a torque is distributed by the planetary gears, and a high contact pressure is applied to the sliding surfaces of the planetary gears and the planetary carrier. Under such demanding conditions, µ-**v** characteristics are improved toward positive gradient, and an expected quietness is ensured as far as the lubricating oil is applied to between the sliding surfaces.

### Second Differential with a Differential Limiting Function

A gear-type differential with a differential limiting function according to the present invention is characterized in that a lubricating oil used in a friction-type driving force transmission apparatus is applied thereto, the lubricating oil including at least one of a phosphorous acid diester having a saturated or unsaturated hydrocarbon group with a carbon number of 12 to 20 (expressed by Chemical Formula 3) and a phosphorous acid monoester having a saturated or unsaturated hydrocarbon group with a carbon number of 12 to 20 (expressed by Chemical Formula 4).

Thus, the second lubricating oil is applied to the differential with a differential limiting function according to the present invention. According to the differential with a differential limiting function provided by the present invention, µ-**v** characteristics of the friction member are improved toward positive gradient, and an expected quietness is ensured during the friction in the presence of the lubricating oil including the additive serving to prevent solid contact when applied to a surface of the friction member used in the friction-type driving force transmission apparatus.

The gear-type differential with a differential limiting function according to the present invention is a driving force transmission apparatus, including: a plurality of planetary gears; a planetary carrier for supporting the plurality of planetary gears so that the plurality of planetary gears are orbitally revolvable and rotatable on their own rotational axes; and a pair of gears disposed coaxial with the planetary carrier anddifferentiallyrotatableviatheplanetarygears, wherein a lubricating oil is applied to between sliding surfaces of the planetary gears and the planetary carrier.

The differential with a differential limiting function according to the present invention is a differential wherein a torque is distributed by the planetary gears, and a high contact pressure is applied to the sliding surfaces of the planetary gears and the planetary carrier. Under such demanding conditions, µ-**v** characteristics are improved toward positive gradient, and an expected quietness is ensured as far as the lubricating oil is applied to between the sliding surfaces.

### Third Differential with a Differential Limiting Function

A gear-type differential with a differential limiting function according to the present invention is characterized in that a lubricating oil used in a friction-type driving force transmission apparatus is applied thereto, the lubricating oil including: at least one of an aliphatic amine having a saturated or unsaturated hydrocarbon group with a carbon number of 12 to 20 (expressed by Chemical Formula 1) and an aliphatic amine ethylene oxide adduct having a saturated or unsaturated hydrocarbon group with a carbon number of 12 to 20 (expressed by Chemical Formula 2); and at least one of a phosphorous acid diester having a saturated or unsaturated hydrocarbon group with a carbon number of 12 to 20 (expressed by Chemical Formula 3) and a phosphorous acid monoester having a saturated or unsaturated hydrocarbon group with a carbon number of 12 to 20 (expressed by Chemical Formula 4).

Thus, the third lubricating oil is applied to the differential with a differential limiting function according to the present invention. According to the differential with a differential limiting function provided by the present invention, µ-**v** characteristics of the friction member according to the present invention are improved toward positive gradient, and an expected quietness is ensured during the friction in the presence of the lubricating oil including the additive serving to prevent solid contact when applied to a surface of the friction member used in the friction-type driving force transmission apparatus.

The gear-type differential with a differential limiting function is a driving force transmission apparatus, including: a plurality of planetary gears; a planetary carrier for supporting the plurality of planetary gears so that the plurality of planetary gears are orbitally revolvable and rotatable on their own rotational axes; and a pair of gears disposed coaxial with the planetary carrier and differentially rotatable via the planetary gears, wherein a lubricating oil is applied to between sliding surfaces of the planetary gears and the planetary carrier.

### Fourth Differential with a Differential Limiting Function

A fourth gear-type differential with a differential limiting function according to the present invention is characterized in that a lubricating oil used in a friction-type driving force transmission apparatus is applied thereto, the lubricating oil exhibiting a peak of 57 ± 2 ppm in a ³¹P-nuclear magnetic resonance analysis.

The fourth differential with a differential limiting function according to the present invention is a gear-type differential with a differential limiting function characterized in that a lubricating oil used in a friction-type driving force transmission apparatus is applied thereto, wherein, given that the mass of the lubricating oil is 100%, a phosphorus content of the lubricating oil derived from at least one of a thiophosphate diester (expressed by Chemical Formula 5) and an amine salt thereof (expressed by Chemical Formula 6) is at least 0.010%.

Thus, the lubricating oil thus characterized is applied to the differential with a differential limiting function according to the present invention. According to the differential with a differential limiting function provided by the present invention, µ-**v** characteristics of the friction member according to the present invention are improved toward positive gradient, and an expected quietness is ensured during the friction in the presence of the lubricating oil including the additive serving to prevent solid contact when applied to a surface of the friction member used in the friction-type driving force transmission apparatus.

The gear-type differential with a differential limiting function is a driving force transmission apparatus, including: a plurality of planetary gears; a planetary carrier for supporting the plurality of planetary gears so that the plurality of planetary gears are orbitally revolvable and rotatable on their own rotational axes; and a pair of gears disposed coaxial with the planetary carrier anddifferentiallyrotatableviatheplanetarygears, wherein a lubricating oil is applied to between sliding surfaces of the planetary gears and the planetary carrier.

### First to Fourth Differentials with a Differential Limiting Function

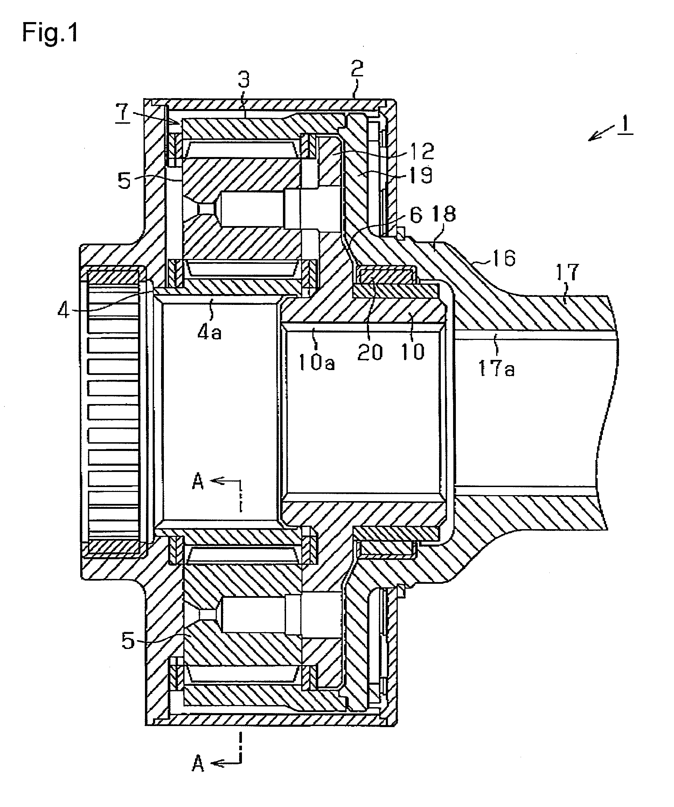

Any of the differentials with a differential limiting function according to the inventions described so far is specifically a center differential with a differential limiting function structurally characterized as illustrated in Fig. 1.

A center differential with a differential limiting function 1 illustrated in Fig. 1 includes a housing 2 having a substantially cylindrical shape. The housing 2 houses therein a planetary gear mechanism 7 including a ring gear 3, a sun gear 4 coaxially disposed in the ring gear 3, a plurality of planetary gears 5 to be meshed with the ring gear 3 and the sun gear 4, and a planetary carrier 6 supporting the planetary gears 5 so that these planetary gears are orbitally revolvable and rotatable on their own rotational axes.

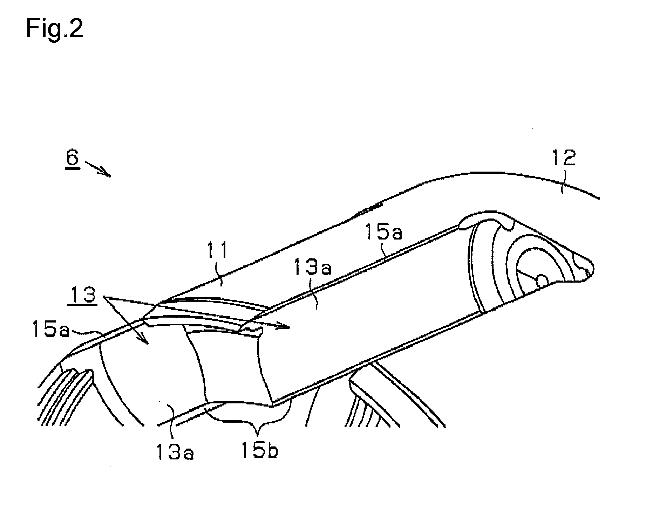

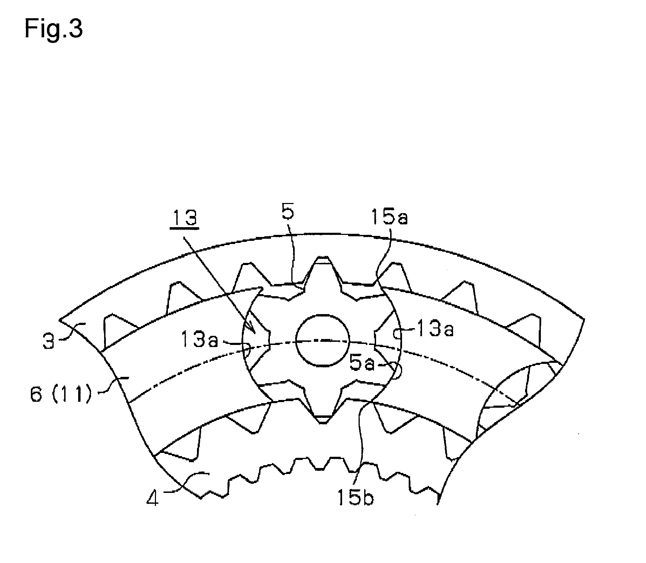

As illustrated in Figs. 1 to 3, the planetary carrier 6 has a shaft portion 10 coaxially juxtaposed to the sun gear 4 (on the right side of Fig. 1) in a rotatable manner and a support portion 11 rotatably supporting the planetary gears 5. The shaft portion 10 has a hollow inside, and a flange portion 12 extending radially outward is formed in an outer periphery of the shaft portion 10. The support portion 11 axially extending from the flange portion 12 is coaxially disposed between the ring gear 3 and the sun gear 4.

The support portion 11 is formed in a substantially cylindrical shape and has a plurality of holding apertures 13 axially extending. These holding apertures 13 are spaced at equal intervals along a circumferential direction of the support portion 11. The holding apertures 13 have a circular shape in cross section, and inner diameters of the holding apertures 13 are almost equal to outer diameters of the planetary gears 5. The inner diameters of the holding apertures 13 are larger than a radial thickness of the support portion 11. A wall surface 13a of each holding aperture 13 has two openings 15a and 15b which are respectively open on outer and inner peripheries of the support portion 11. When the planetary gears 5 are inserted in the holding apertures 13, the planetary gears 5 are rotatably supported with top lands 5a thereof slidably contacting the wall surfaces 13a of the holding apertures 13 and further meshed with the ring gear 3 and the sun gear 4 through the openings 15a and 15b formed on two radial sides of the wall surfaces 13a. In the center differential with a differential limiting function 1, helical gears are used as the planetary gears 5.

As illustrated in Fig. 1, an output member 16 is coupled with the ring gear 3. The output member 16 has a shaft portion 17 coaxially juxtaposed to the shaft portion 10 of the planetary carrier 6. The shaft portion 17 has a hollow inside similarly to the shaft portion 10 of the planetary carrier 6. A diametrically large portion 18 is connected to an end part of the shaft portion 17 on the side of the planetary carrier 6. The diametrically large portion 18 is coaxially disposed so as to surround a radially outer side of the shaft portion 10 of the planetary carrier 6. A flange portion 19 extending radially outward is formed at an edge part of the diametrically large portion 18. When the flange portion 19 is coupled with an axial end of the ring gear 3, the output member 16 rotates integral with the ring gear 3.

The housing 2 is coupled with the diametrically large portion 18 of the output member 16 to rotate integral with the output member 16 and the ring gear 3 . The planetary carrier 6 is supported by a bearing (needle bearing) 20 interposed between the shaft portion 10 thereof and the diametrically large portion 18 of the output member 16 to be rotatable relative to the output member 16 and the ring gear 3. The sun gear 4 has a hollow inside, and an end part of the sun gear 4 is externally mounted in a rotatable manner on an end part of the shaft portion 10 of the planetary carrier 6. Accordingly, the sun gear 4 is supported rotatably relative to the planetary carrier 6.

The sun gear 4, the shaft portion 10 of the planetary carrier 6, and the shaft portion 17 of the output member 16 are provided with spline-fitting portions 4a, 10a, and 17a respectively formed in inner peripheries thereof. In the center differential with a differential limiting function 1, the spline-fitting portion 10a formed in the shaft portion 10a of the planetary carrier 6 constitutes a drive torque input unit, and the spline-fitting portion 4a of the sun gear 4 and the spline-fitting portion 17a formed in the shaft portion 17 of the output member 16 respectively constitute a first output unit and a second output unit.

When the planetary gears 5 supported by the planetary carrier 6 are orbitally revolved and rotated on their own rotational axes, a drive torque input to the planetary carrier 6 is transmitted by the orbital revolution and the rotation of the planetary gears 5 supported by the planetary carrier 6 with a differential therebetween being allowed. The transmitted drive torque is input to the sun gear 4 and the ring gear 3 (output member 16) meshed with the respective planetary gears 5 by a predefined distribution ratio. The center differential with a differential limiting function 1 is configured as a center differential gear of a four-wheel drive car, wherein the sun gear 4 constituting the first output unit is coupled with a drive shaft on front-wheel side and the output member 16 constituting the second output unit is coupled with a drive shaft on rear-wheel side. When a torque reaction force is generated in a drive system of the car, the differential is limited based on a thrusting force resulting from a rotational reaction force between the gears meshed with each other and a frictional force between the sliding surfaces which are the top lands 5a and planetary carrier 6-side sliding surfaces of the planetary gears 5 (wall surfaces 13a of the holding apertures 13).

The wall surfaces 13a of the holding apertures 13 serving as the sliding surfaces are preferably nitrided (for example, ion nitriding or gas nitrocarburizing). The top lands 5a of the planetary gears 5 are preferably treated so that multiple thin layers of tungsten carbide/diamond-like carbon are formed thereon.

The sliding surfaces of the center differential with a differential limiting function 1 illustrated in Figs. 1 to 3 are not only sliding surfaces of the planetary gears 5 and the housing 2 but also surfaces of the gears sliding with each other and sliding surfaces of the gears and the housing (washer provided in the housing). Therefore, preferably, these surfaces are nitrided (for example, ion nitriding or gas nitrocarburizing) and multiple thin layers of tungsten carbide/diamond-like carbon are formed thereon.

### Examples

Hereinafter, the present invention is described in further detail referring to examples.

### Preparation of Lubricating Oil

In examples of the present invention, lubricating oils (sample oils A - W) were prepared.

Sample Oil A is prepared from a commercially available gear oil (differential gear oil, viscosity grade: 75W-85, hereinafter called sample oil F) used as a base oil, Oleylamine (supplied by Lion Corporation, trade name: AMINE OD) which is an aliphatic amine having an unsaturated hydrocarbon group with a carbon number of 18 expressed by the following Chemical Formula 9 by 3.0% by mass, and Dioleyl Hydrogen Phosphite (supplied by Johoku Chemical Co . , Ltd., trade name: JP-218-OR) which is a phosphorous acid diester expressed by the following Chemical Formula 10 by 1.52% by mass. The percentages by mass of the oleylamine and the dioleyl hydrogen phosphite to be added are expressed given that the mass of the prepared lubricating oil is 100% (mass percentages hereinafter described are similarly expressed).

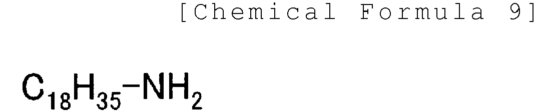

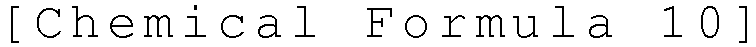

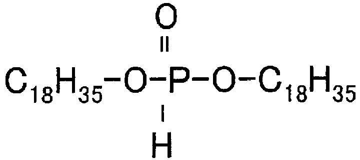

Sample Oil B is prepared from the sample oil F used as a base oil, Polyoxyethylene Oleylamine (supplied by Lion Corporation, trade name: Esomin O/12) which is an aliphatic amine ethylene oxide adduct having an unsaturated hydrocarbon group with a carbon number of 18 (oleyl group) expressed by the following Chemical Formula 11 where x + y equals 2 (more specifically, x and y are both 1) by 3.0% by mass, and Dioleyl Hydrogen Phosphite expressed by Chemical Formula 6 by 1.52% by mass.

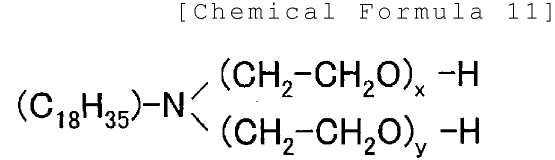

Sample Oil C is prepared from the sample oil F used as a base oil, Polyoxyethylene Oleylamine (supplied by Lion Corporation, trade name: Esomin O/20) which is an amine ethylene oxide adduct having an unsaturated hydrocarbon group with a carbon number of 18 (oleyl group) expressed by Chemical Formula 11 where x+y equals 10 by 3. 0% by mass, and Dioleyl Hydrogen Phosphite expressed by Chemical Formula 6 by 1.52% by mass.

Sample Oil D is prepared from the mixture of sample oil F and a commercial available gear oil (hypoid gear oil LSD, viscosity grade: 85W-90, hereinafter called sample oil G) by 50:50 percentage by mass, Oleylamine expressed by Chemical Formula 5 was further added by 3.0% by mass, Dioleyl Hydrogen Phosphite expressed by Chemical Formula 6 was further added by 1.52% by mass.

Sample Oil E is prepared from the sample oil G, Oleylamine expressed by Chemical Formula 9 by 3.0% by mass, and Dioleyl Hydrogen Phosphite expressed by Chemical Formula 6 by 1.52% by mass.

The sample oil H is a commercially available gear oil (differential gear oil, viscosity grade: 75W-85).

Sample Oils I and J are prepared from the sample oil F used as a base oil, Oleylamine expressed by Chemical Formula 9 by respectively 0.1% by mass (sample oil I) and by 1.0% by mass (sample oil J), and Dioleyl Hydrogen Phosphite expressed by Chemical Formula 6 was further added to the resulting oils by 1.52% by mass.

Sample oils K and L are prepared from the sample oil F used as a base oil, Oleylamine expressed by Chemical Formula 9 by 3.0% by mass, and Dioleyl Hydrogen Phosphite expressed by Chemical Formula 10 by 0.1 mass (sample oil K) and by 1.0% by mass (sample oil L).

Sample Oil M is prepared from the sample oil F used as a base oil, Oleylamine expressed by Chemical Formula 9 by 3.0% by mass.

Sample Oil N is prepared from the sample oil F used as a base oil, Dioleyl Hydrogen Phosphite expressed by Chemical Formula 10 by 1.52% by mass.

Sample Oil O is prepared from the sample oil F used as a base oil, Hexylamine (supplied by Tokyo Chemical Industry Co., Ltd., trade name: Hexylamine) which is an aliphatic amine having a saturated hydrocarbon group with a carbon number of 6 expressed by the following Chemical Formula 12 by 1.14% by mass, and Dioleyl Hydrogen Phosphite expressed by Chemical Formula 10 by 1.52% by mass, where a nitrogen content of the prepared sample oil was equal to that of the sample oil A.

[Chemical Formula 12] **C₆H₁₃-NH₂**

Sample Oil P is prepared from the sample oil F used as a base oil, Dodecylamine (supplied by Lion Corporation, trade name: Amine 12D) which is an aliphatic amine having a saturated hydrocarbon group with a carbon number of 12 expressed by the following Chemical Formula 13 by 2.08% by mass, and Dioleyl Hydrogen Phosphite expressed by Chemical Formula 10 by 1.52% by mass, where a nitrogen content of the prepared sample oil was equal to that of the sample oil A.

[Chemical Formula 13] **C₁₂H₂₅-NH₂**

Sample Oil Q is prepared from the sample oil F used as a base oil, Oleylamine expressed by the following Chemical Formula 9 by 3.0% by mass, and Diethyl Hydrogen Phosphite (supplied by Johoku Chemical Co., Ltd., trade name: JP-202) which is a phosphorous acid diester having a saturated hydrocarbon group with a carbon number of 2 expressed by the following Chemical Formula 14 by 0.35% by mass, where a phosphorus content of the prepared sample oil was equal to that of the sample oil A.

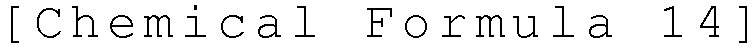

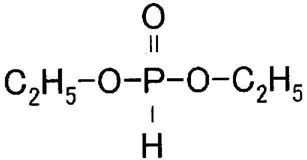

Sample Oil R is prepared from the sample oil F used as a base oil, Oleylamine expressed by the Chemical Formula 9 by 3. 0% by mass, and Dilauryl Hydrogen Phosphite (supplied by Johoku Chemical Co., Ltd., trade name: JP-213-D) which is a phosphorous acid diester having a saturated hydrocarbon group with a carbon number of 12 expressed by the following Chemical Formula 15 by 1.16% by mass, where a phosphorus content of the prepared sample oil was equal to that of the sample oil A.

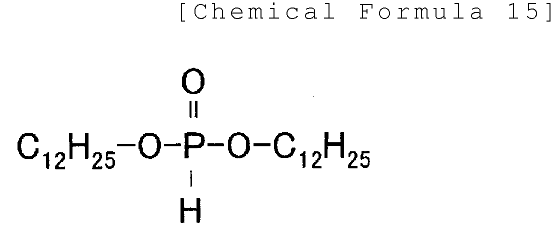

The sample oil S is a non-ester hydrocarbon-containing base oil which is a Group III hydrogenated purified mineral oil commercially available (supplied by SK Lubricants Co. , Ltd. , trade name: YUBASE 4).

The sample oil T is a diester-containing base oil commercially available (supplied by Kao Corporation, trade name: VINYCIZER 50).

Sample Oil U is prepared from the sample oil S used as a base oil, Oleylamine expressed by Chemical Formula 9 by 3.0% by mass, and Dioleyl Hydrogen Phosphite expressed by Chemical Formula 10 by 1.52% by mass.

Sample Oil V is prepared from the sample oil T used as a base oil, Oleylamine expressed by Chemical Formula 9 by 3.0% by mass, and Dioleyl Hydrogen Phosphite expressed by Chemical Formula 10 by 1.52% by mass.

Sample oil W is prepared from sample oil V by 10% by mass, and the sample oil U by 90% by mass.

The compositions of the sample oils A to W are recited in Tables 1 to 4. Tables 1 to 4 recite an analysis result on whether the phosphate ester, thiophosphate ester, and amine salt were contained in the sample oils and further recite an analysis result of the phosphorus contents and types of the base oils of the respective sample oils.

**[Table 1]**

| Sample Oils | | | | | | | |
|---|---|---|---|---|---|---|---|
| | A | B | C | D | E | F | G |
| mass% of aliphatic amine | 3.0 mass% (C18, unsaturated) | | | 3.0 mass% (C18, unsaturated) | 3.0 mass% (C18, unsaturated) | | |
| mass% of polyoxyethylene oleyl amine | | 3.0 mass% (C18, unsaturated) (x+y=2) | 3.0 mass% (C18, unsaturated) (x+y=10) | | | | |
| mass% of phosphorous acid diester | 1.52 mass% (C18, unsaturated) | 1.52 mass% (C18 ,unsaturated) | 1.52 mass% (C18, unsaturated) | 1.52 mass% (C18 ,unsaturated) | 1.52 mass% (C18 ,unsaturated) | | |
| whether acidic phosphate ester ester is contained | Yes | Yes | Yes | Yes | Yes | Yes | Yes |
| whether acidic thiophosphate ester is contained | Yes | Yes | Yes | Yes | Yes | Yes | No |
| phosphorus content of oil | 0.23 mass% | 0.23 mass% | 0.23 mass% | 0.28 mass% | 0.33 mass% | 0.16 mass% | 0.26 mass% |
| whether amine salt is contained | Yes | No | unmeasured | Yes | Yes | No | No |
| whether thiophosphate diester is contained | Yes (0.069 mass%P) | unmeasured | unmeasured | Yes | Yes (0.061 mass%P) | No | No |
| absorbency near IR spectrum 1, 740 cm⁻¹ | 1.5 or more | 1.5 or more | unmeasured | 1.2 | 0.0 | 1.5 or more | 0.0 |
| uniformity in mixing | ○ | ○ | × | ○ | ○ | ○ | ○ |
| evaluation of µ-v gradient | ⊚ | ○ | unassessable | ⊚ | ⊚ | Δ | ⊚ |
| µ-v gradient | 1.000 | 0.998 | | 1.001 | 1.007 | 0.990 | 1.000 |

**Table 2**

| Sample Oils | | | | | | |
|---|---|---|---|---|---|---|
| | H | I | J | K | L | M |
| mass% of aliphatic amine | | 0.1 mass% (C1B, unsaturated) | 1.0 mass% (C18 ,unsaturated) | 3.0 mass% (C18, unsaturated) | 3.0 mass% (C18, unsaturated) | 3.0 mass% (C18, unsaturated) |
| mass% of polyoxyethylene oleyl amine | | | | | | |
| mass% of phosphorous acid diester | | 1.52 mass% (C18 ,unsaturated) | 1.52 mass% (C18, unsaturated) | 0.1 mass% (C18, unsaturated) | 1.0 mass% (C18, unsaturated) | |
| whether acidic phosphate ester is contained | Yes | Yes | Yes | Yes | Yes | Yes |
| whether acidic thiophosphate ester is contained | Yes | Yes | Yes | Yes | Yes | Yes |
| phosphorus content of oil | 0.18 mass% | 0.23 mass% | 0.23 mass% | 0.16 mass% | 0.20 mass% | 0.16 mass% |
| whether amine salt is contained | Yes | unmeasured | Yes | unmeasured | Yes | unmeasured |
| whether thiophosphate diester is contained | Yes, trace level (0.008 mass%P) | unmeasured | unmeasured | unmeasured | unmeasured | No |
| absorbency near IR spectrum 1, 740 cm⁻¹ | 1.5 or more | 1.5 or more | 1.5 or more | 1.5 or more | 1.5 or more | 1.5 or more |
| uniformity in mixing | ○ | ○ | ○ | ○ | ○ | ○ |
| evaluation of µ-v gradient | ○ | Δ | ○ | Δ | ○ | Δ |
| µ-v gradient | 0.996 | 0.991 | 0.997 | 0.994 | 0.996 | 0.993 |

**Table 3**

| Sample Oils | | | | | |
|---|---|---|---|---|---|
| | N | O | P | Q | R |
| mass% of aliphatic amine | | 1.14 mass% (C6, saturated) | 2.08 mass% (C12, saturated) | 3.0 mass% (C18, unsaturated) | 3.0 mass% (C18, unsaturated) |
| mass% of polyoxyethylene oleyl amine | | | | | |
| mass% of phosphorous acid diester | 1.52 mass% (C18, unsaturated) | 1.52 mass% (C18, unsaturated) | 1.52 mass% (C18 , unsaturated) | 0.35 mass% (C2,saturated) | 1.16 mass% (C12, saturated) |
| whether acidic phosphate ester is contained | Yes | Yes | Yes | Yes | Yes |
| whether acidic thiophosphate ester is contained | Yes | Yes | Yes | Yes | Yes |
| phosphorus content of oil | 0.23 mass% | 0.16 mass% | 0.23 mass% | 0.23 mass% | 0.23 mass% |
| whether amine salt is contained | No | unmeasured | Yes | unmeasured | Yes |
| whether thiophosphate diester is contained | Yes, trace level (0.009 mass%P) | unmeasured | unmeasured | unmeasured | unmeasured |
| absorbency near IR spectrum 1, 740 cm⁻¹ | 1.5 or more | 1.5 or more | 1.5 or more | 1.5 or more | 1.5 or more |
| uniformity in mixing | ○ | ○ | ○ | ○ | ○ |
| evaluation of µ-v gradient | Δ | Δ | ○ | Δ | ○ |
| µ-v gradient | 0.990 | 0.991 | 0.996 | 0.994 | 0.997 |

**Table 4**

| Sample Oils | | | | | |
|---|---|---|---|---|---|
| | S | T | U | V | W |
| mass% of aliphatic amine | | | 3.0 mass% (C18, saturated) | 3.0 mass% (C18 ,unsaturated) | 3.0 mass% (C18, unsaturated) |
| mass% of polyoxyethylene oleyl amine | | | | | |
| mass% of phosphorous acid diester | | | 1.52 mass% (C18 ,unsaturated) | 1.52 mass% (C18 ,unsaturated) | 1.52 mass% (C18, unsaturated) |
| whether acidic phosphate ester is contained | | | | | |
| whether acidic thiophosphate ester is contained | No | No | No | No | No |
| phosphorus content of oil | 0.00 mass% | 0.00 mass% | 0.08 mass% | 0.08 mass% | 0.08 mass% |
| whether amine salt is contained | No | No | Yes | Yes | Yes |
| whether thiophosphate diester is contained | No | No | No | No | No |
| absorbency near IR spectrum 1, 740 cm⁻¹ | 0.0 | 1.5 or more | 0.0 | 1.5 or more | 1.3 |
| uniformity in mixing | | | ○ | ○ | ○ |
| evaluation of µ-v gradient | ○ | Δ | ⊚ | ○ | ○ |
| µ-v gradient | 0.989 | 0.989 | 1.002 | 0.995 | 0.997 |

Mixing Uniformity of Lubricating oil After the sample oils A to E, I to R, and U to W were prepared, they were left at rest at room temperature for over a week. Then, the sample oils were visually observed.

Of all of the visually observed sample oils, there were neither separated layers nor deposited materials in any of the sample oils but the sample oil C. This confirmed that the materials were uniformly mixed in these sample oils and the FMs respectively added to the sample oils were evenly dissolved (dispersed) therein. The sample oils, where the FMs were dissolved (dispersed) in the base oils with neither separated layers nor deposited materials, can effectively avoid solid contact when they are applied to the friction surfaces.

In contrast to these sample oils, after the sample oil C containing the polyoxyethylene oleylamine which is the amine ethylene oxide adduct having an unsaturated hydrocarbon group with a carbon number of 18 expressed by Chemical Formula 11 where x+y equals 10 was left at rest at room temperature for 12 hours or more, the layer separation was detected, indicating that the uniform mixing failed in this sample oil.

On the other hand, the uniform mixing was confirmed in the sample oil B containing the polyoxyethylene oleylamine which is the aliphatic amine ethylene oxide adduct having an unsaturated hydrocarbon group with a carbon number of 18 expressed by Chemical Formula 11 where x + y equals 2.

This demonstrates that the solubility of the aliphatic amine ethylene oxide adduct in the base oils lowers as x + y is larger. It is known from the result that x + y is preferably about 2 ± 1 when the aliphatic amine ethylene oxide adduct is dissolved in the base oils.

### Analysis of Phosphate Ester and Thiophosphate Ester

The sample oils F, G, H, N, M, A, and E were analyzed by a ³¹P-nuclear magnetic resonance analysis (Nuclear Magnetic Resonance: hereinafter abbreviated to NMR) . An analyzer, ECA-500, supplied by JEOL Ltd. was used for single pulse measurement by proton decoupling. CDCl₃ (deuterated chloroform) was used as a measurement solvent, and PO₄ was a reference value (0 ppm) of chemical shift.

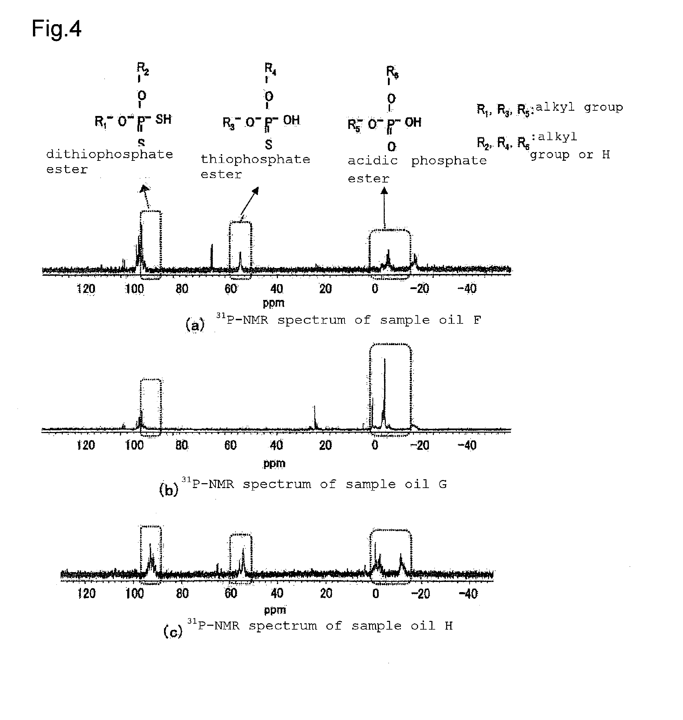

Figs. 4(a) to (c) illustrate ³¹P-NMR spectra of the sample oils F, G, and H. Referring to the illustrations of Figs. 4(a) and (c), peaks at near -13 ppm and -5 ppm assigned to the acidic phosphate ester, a peak at near 55 ppm assigned to the thiophosphate ester, and a peak at near 93 ppm assigned to the dithiophosphate ester are detected. Referring to the illustration of Fig. 4(b), peaks at near -13 ppm and -5 ppm assigned to the acidic phosphate ester, and a peak at near 93 ppm assigned to the dithiophosphate ester are detected.

According to the results illustrated the drawings, each of the sample oils A, B, D, and I to R which is the sample oil F mixed with the additives and the sample oil E which is the sample oil G mixed with the additive include phosphate esters and thiophosphate esters.

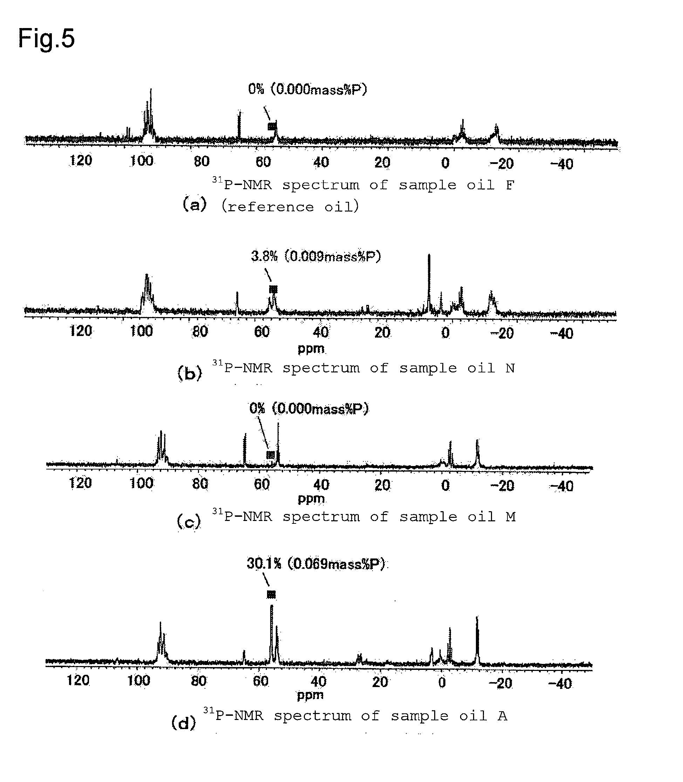

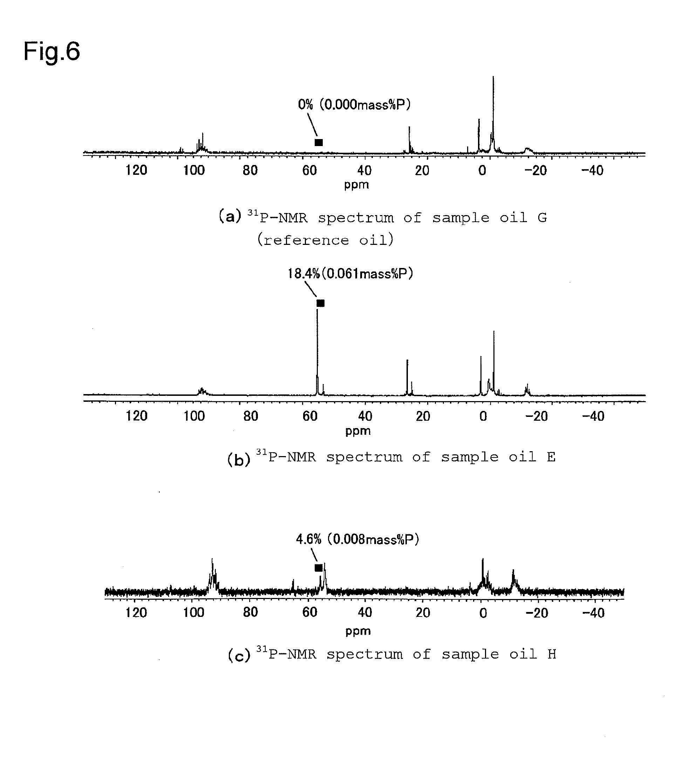

Figs. 5 and 6 illustrate ³¹P-NMR spectra of the sample oils N, M, A, E, and H. Fig. 5 (a) illustrates the NMR spectrum of the sample oil F as a reference oil, (b) illustrates the NMR spectrum of the sample oil N, (c) illustrates the NMR spectrum of the sample oil M, and (d) illustrates the NMR spectrum of the sample oil A. Fig. 6 (a) illustrates the NMR spectrum of the sample oil G as a reference oil, (b) illustrates the NMR spectrum of the sample oil E, and (c) illustrates the NMR spectrum of the sample oil H.

It is confirmed from the illustrations of Figs. 5 and 6 that a peak assigned to the thiophosphate diester is observed at near 57 ppm (peak with ■ in the drawings) in the NMR spectra of the sample oils N, A, and E to which the phosphorous acid diester is added.

It is confirmed that a peak intensity of the thiophosphate diester (peak with ■ in the drawings) is high in the sample oil A (Fig. 5(d)) and the sample oil E (Fig. 6(b)) to which the oleylamine and dioleyl hydrogen phosphite are both added.

No distinct peak assigned to the thiophosphate diester can be confirmed at near 57 ppm in the NMR spectra of the reference sample oil F (Fig. 5(a)) and the sample oil G (Fig. 6(a)).

In the NMR spectra of Figs. 5 and 6, a ratio of a peak area assigned to the thiophosphate diester exhibited at 57±2 ppm to a peak total area was calculated. Further, a thiophosphate diester content of each sample oil was calculated as a phosphorus content reduced value based on the phosphorus content of each sample oil and the peak area ratio at 57±2 ppm. The calculated values are also shown in the spectral drawings.

As illustrated in Figs. 5 and 6, none of the sample oils F, M, and G contains the thiophosphate diester. The ample oil N contains the thiophosphate diester by only such a small percentage as 0.009 mass%P. On the other hand, the sample oils A and E contain the thiophosphate diester by a larger percentage, 0.06 mass%P or more.

### Analysis of Amine Salt Formation

The sample oils A, B, E, F, G, J, L, P, R, S, and U were subjected to a Fourier transform infrared spectroscopic analysis (FT-IR). Avatar 360 supplied by Thermo Nicolet Corporation was used as an analyzer to perform IR spectrum measurement 32 times by the use of a KBr fixed cell for liquid having an optical length of 0.10 mm. The same analyzer was used for IR spectrum measurement of the additives alone according to single reflection ATR.

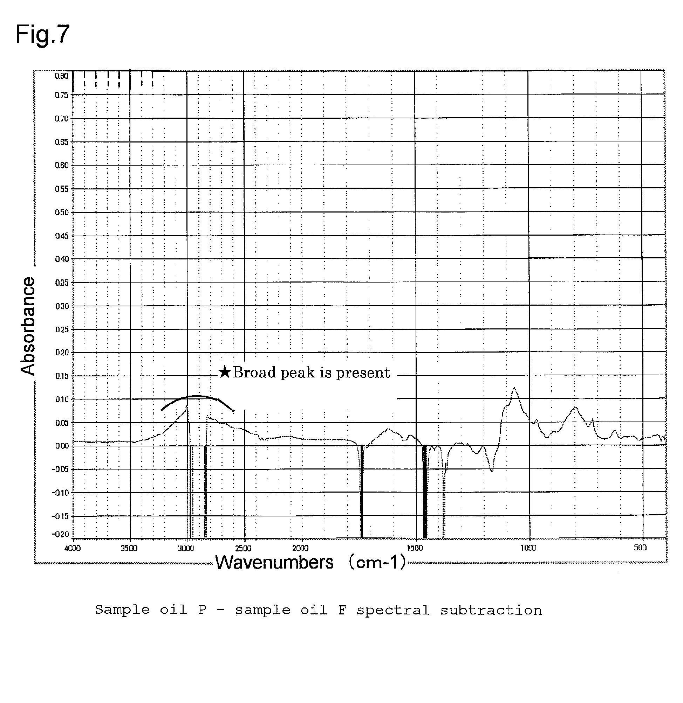

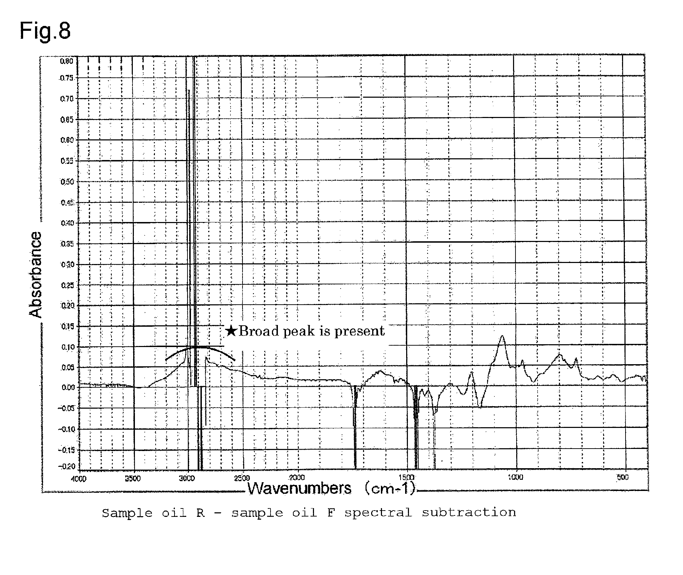

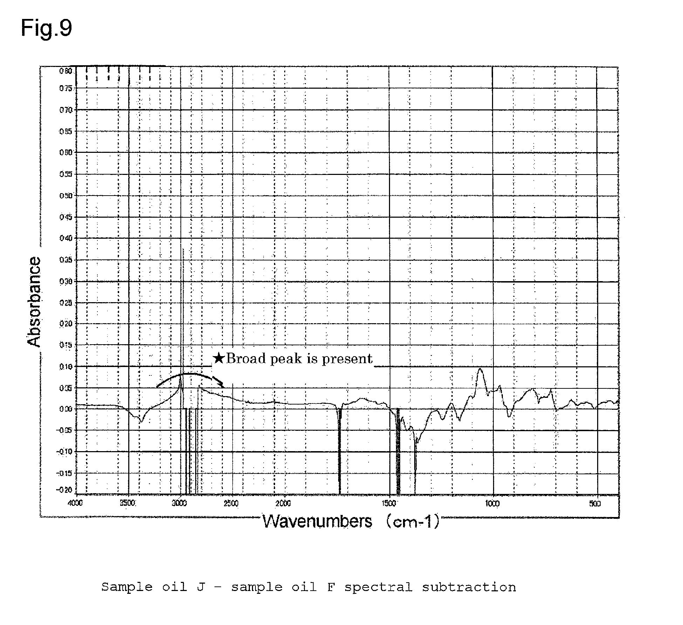

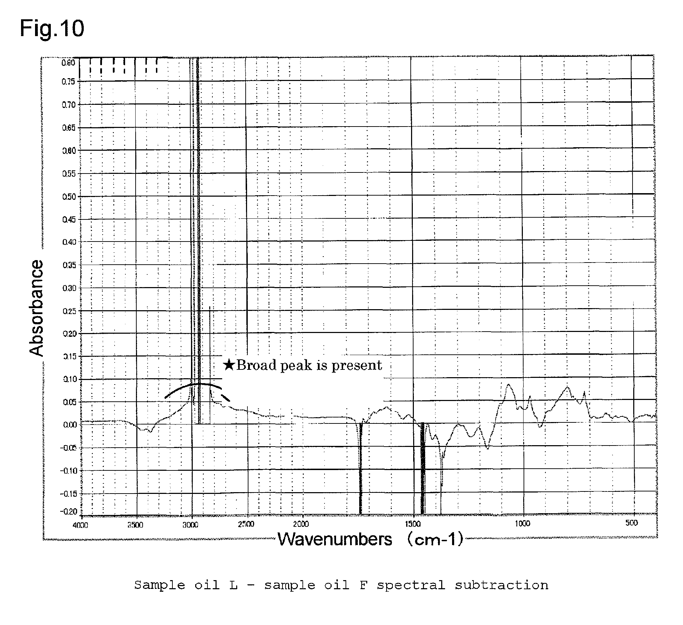

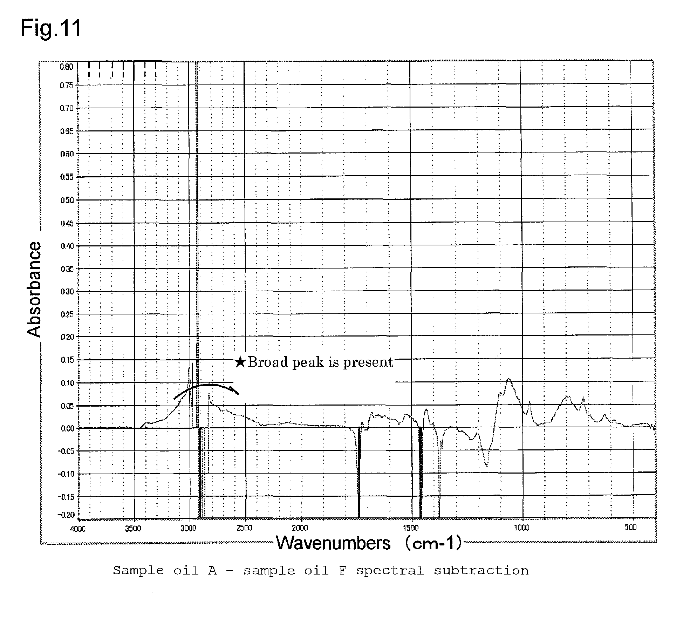

Figs. 7 to 11 illustrate differences between the IR spectrum of the sample oil F and the IR spectra of the sample oils P, R, J, L, and A obtained by mixing the different aliphatic amines respectively having different hydrocarbon groups and phosphorous acid diesters respectively having different hydrocarbon groups with the sample oil F (spectral subtraction) . In these illustrations of spectral subtraction, a peak associated with an additive amount of the sample oil A larger than that of the sample oil F appears as a positive value of absorbency.

Fin. 12 illustrates a spectral subtraction between the sample oil G and the sample oil E obtained by mixing the oleylamine which is the aliphatic amine and the dioleyl hydrogen phosphite which is the phosphorous acid diester with the sample G.

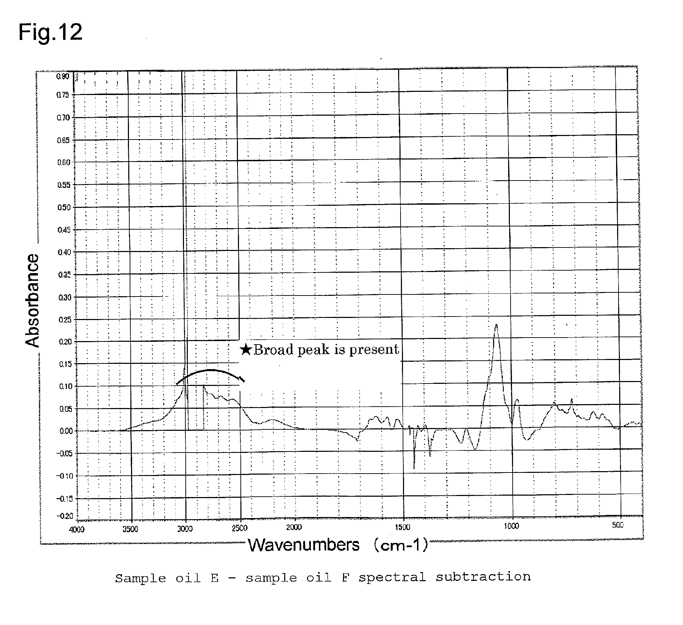

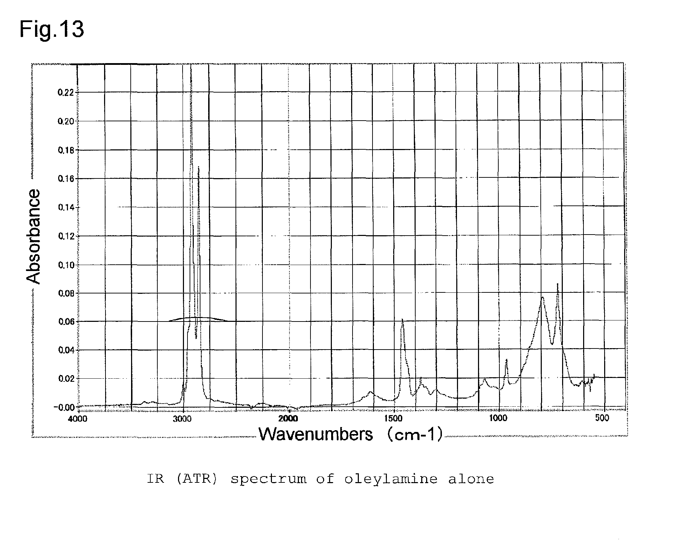

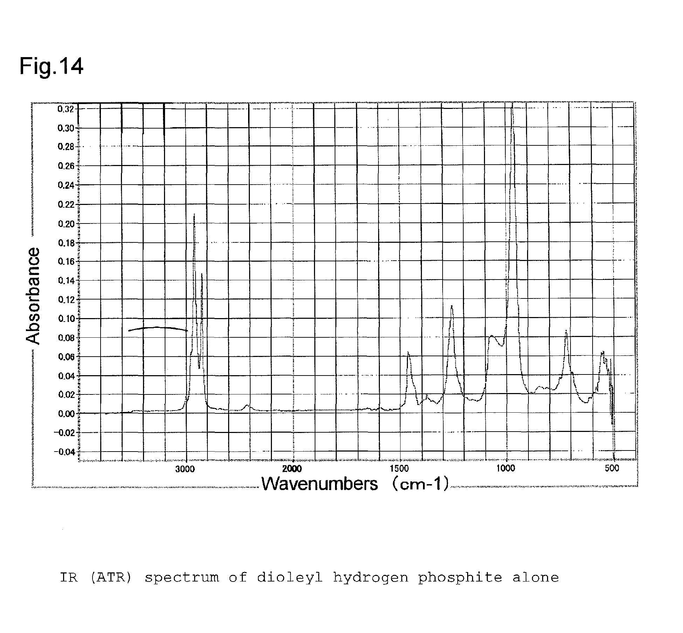

In all of the illustrations of spectral subtraction in Figs. 7 to 12, a broad peak was confirmed at near the wave number of 2, 900 cm⁻¹. For comparison, Figs. 13 and 14 illustrate IR spectra of the oleylamine alone and the dioleyl hydrogen phosphite alone. Such a broad peak was not detected at near the wave number of 2,900 cm⁻¹ in any of the spectra of these additives.

The broad peaks at near the wave number of 2,900 cm⁻¹ in the illustrations of spectral subtraction in Figs. 7 to 12 are probably associated with the amine salt. Therefore, the phosphate esters and thiophosphate esters included in the sample oils F and G identified from the NMR analyses of Figs. 4 to 6, the sample oils P, R, M, L, and A respectively obtained by adding the additives to the sample oil F, and the sample oil E obtained by adding the additive to the sample oil G are thought to be the acidic phosphate ester or acidic thiophosphate ester. Further, it is thought that the oleylamine salt of the acidic phosphate ester or acidic thiophosphate ester is formed in the sample oils P, R, J, L, A, and E.

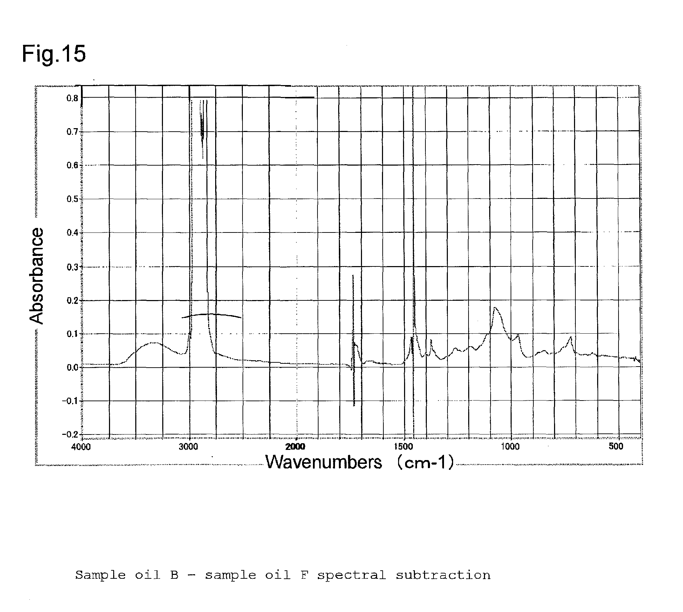

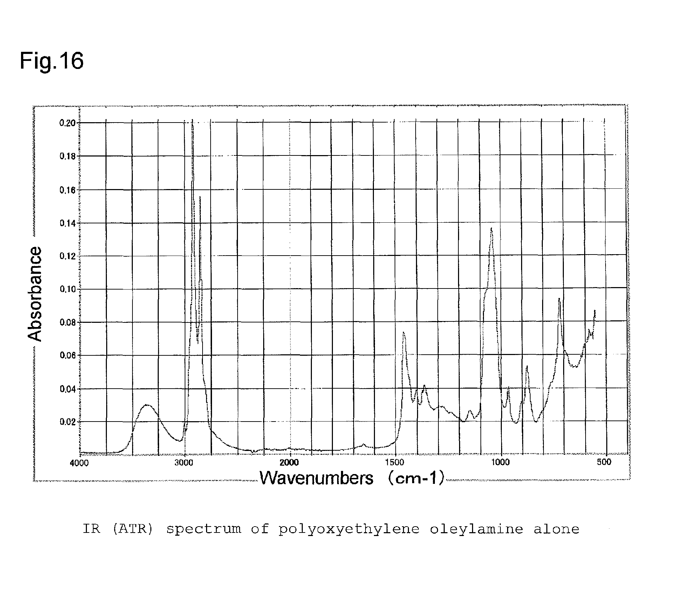

Fig. 15 illustrates a spectral subtraction between the sample oil B mixed with the polyoxyethylene oleylamine as an amine-based additive and the sample oil F used as the base oil thereof. Fig. 16 illustrates an IR spectrum of the polyoxyethylene oleylamine alone. Fig. 15 showed no broad peak at near 2,900 cm⁻¹.

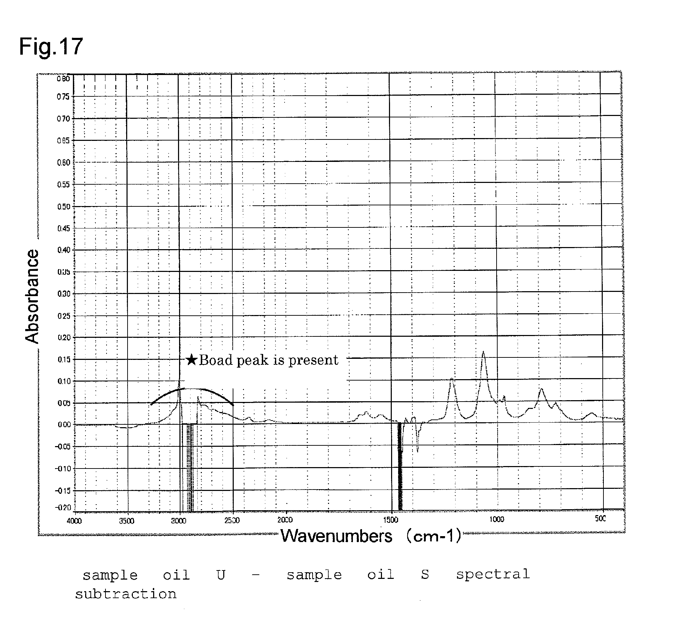

Fig. 17 illustrates a spectral subtraction between the sample oil S and the sample oil U obtained by mixing the oleylamine and dioleyl hydrogen phosphite which is an example of the phosphorous acid diester with the sample oil S.

Referring to Fig. 17, a broad peak is confirmed at near the wave number of 2,900 cm⁻¹, teaching that the amine salt is formed in the sample oil U.

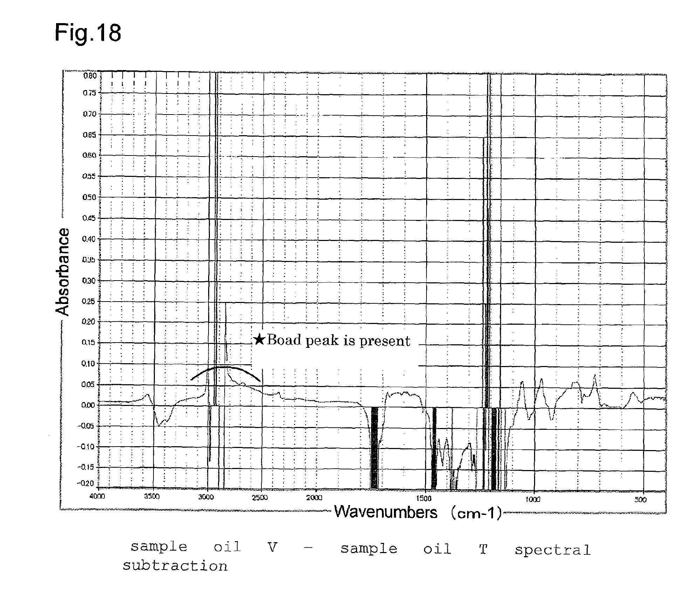

Fig. 18 illustrates a spectral subtraction between the sample oil T and the sample oil V obtained by mixing the oleylamine and dioleyl hydrogen phosphite which is an example of the phosphorous acid diester with the sample oil T.

Referring to Fig. 18, a broad peak is confirmed at near the wave number of 2,900 cm⁻¹, teaching that the amine salt is formed in the sample V where the diester-containing base oil is used.

### Analysis of Acidic Phosphate Ester Amine Salt

The dioleyl hydrogen phosphite expressed by Chemical Formula 6 was added by 1.52% by mass to the sample oil S including the hydrocarbon-containing base oil to prepare a model sample oil a.

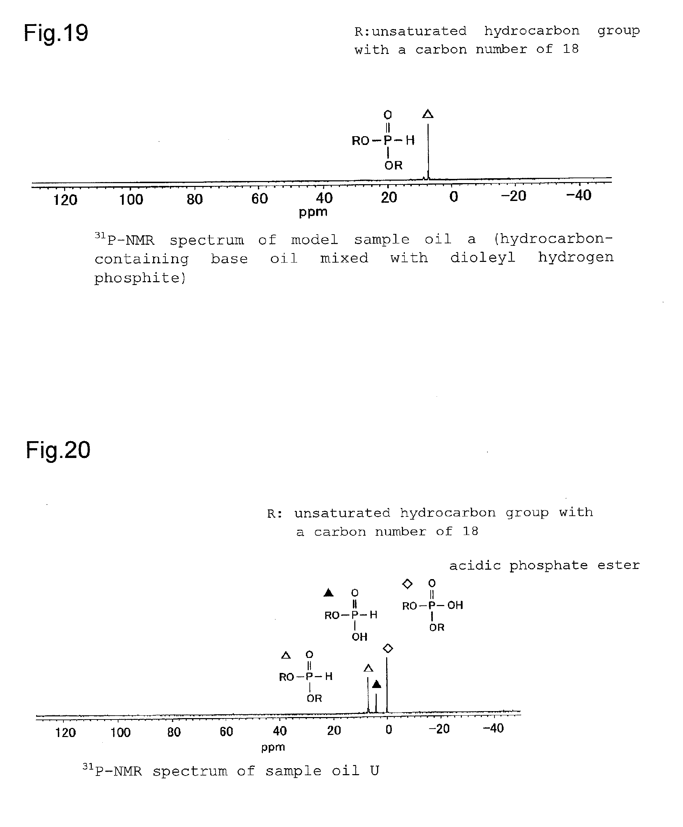

The sample oil U which is the sample oil S containing the oleylamine by 3.0% by mass and the dioleyl hydrogen phosphite expressed by Chemical Formula 6 by 1.52% by mass, and the model sample oil a were subjected to an NMR analysis in a similar manner. Figs. 19 and 20 illustrate NMR spectra of the model sample oil a and the sample oil U.

In Fig. 19, a peak associated with the dioleyl hydrogen phosphite which is an example of the phosphorous acid diester was confirmed at near 7 ppm marked with Δ.

According to the NMR spectrum of Fig. 20, there are distinct peaks at near 4 ppm marked with ▲ and 0 ppm marked with ◇ as well as a peak at near 7 ppm associated with the phosphorous acid diester. These peaks are assigned to the phosphorous acid monoester (▲) and the acidic phosphate ester (◇). Comparing peak intensities, the acidic phosphate ester (◇) has a largest peak. It was confirmed from the spectral subtraction of the FT-IR analysis (Fig. 17) that the amine salt was formed in the sample oil U.

It is known from these results that the amine salt of the acidic phosphate ester expressed by Chemical Formulas 7 and 8 is formed in the sample oil U containing the oleylamine and dioleyl hydrogen phosphite.

According to the uniformity observation of each of the prepared oils, neither separation of layers nor deposited materials was detected in the sample oil U uniformly mixed. This led to the confirmation that the generated amine salt of the acidic phosphate ester is oil-soluble.

### Composition Analysis of Ester-Containing Base Oils

The sample oils A, B, D, E, F, G, U, V, and W were subjected to Fourier transform infrared spectroscopic analysis (FT-IR).

Avatar 360 supplied by Thermo Nicolet Corporation was used as an analyzer to perform IR spectrum measurement 32 times by the use of a KBr fixed cell for liquid having an optical length of 0.05 mm.

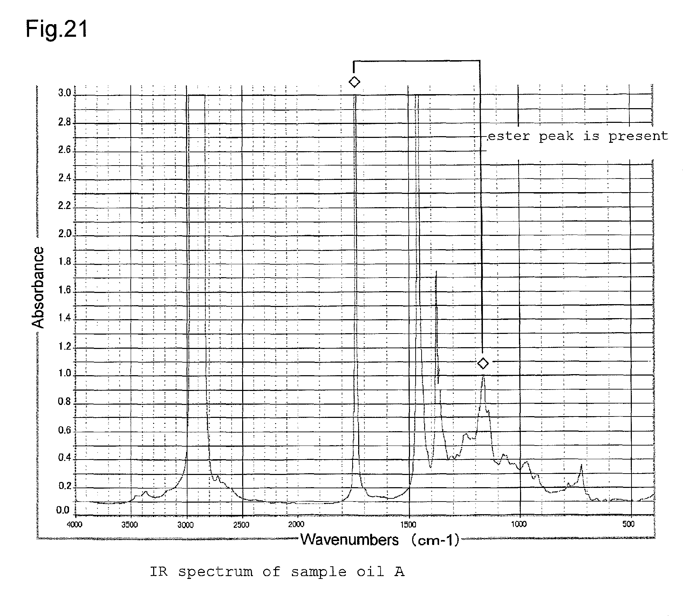

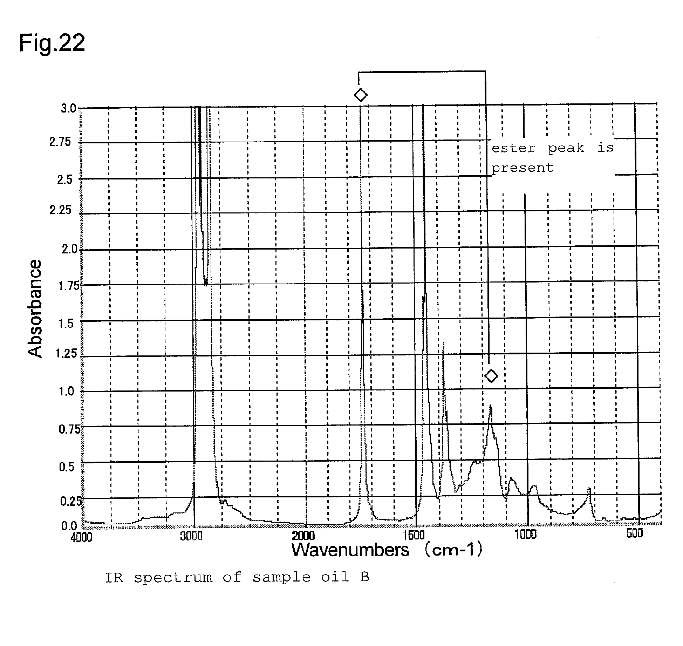

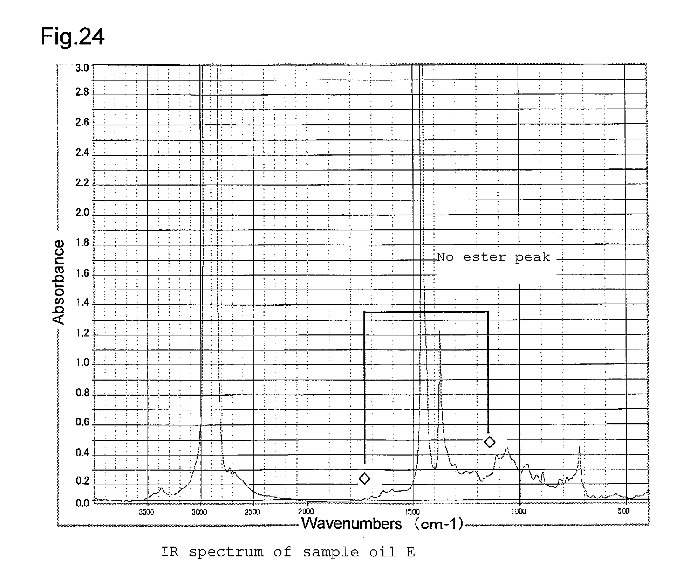

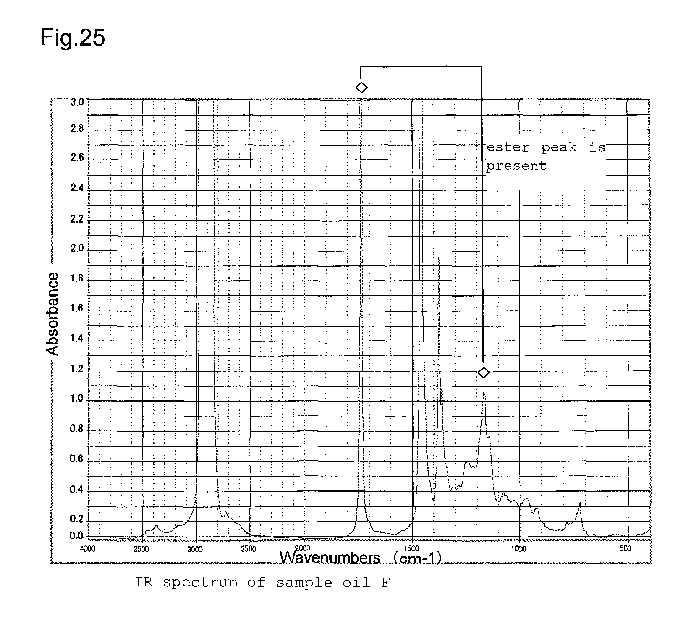

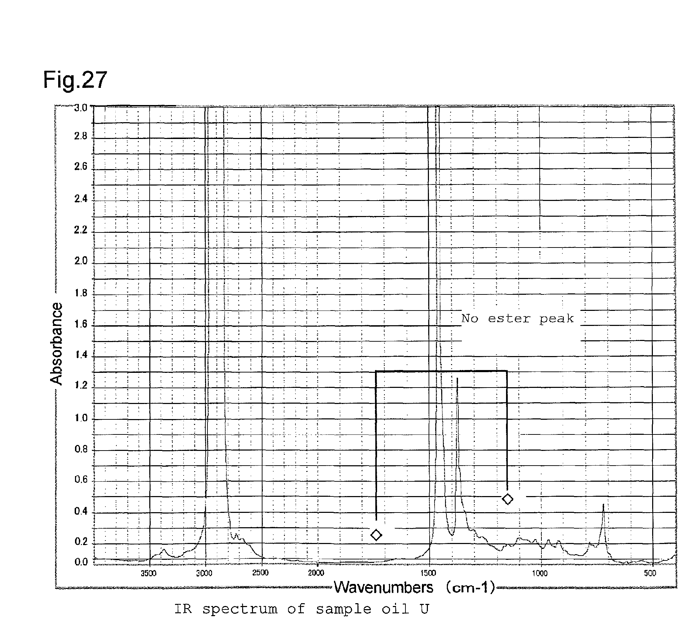

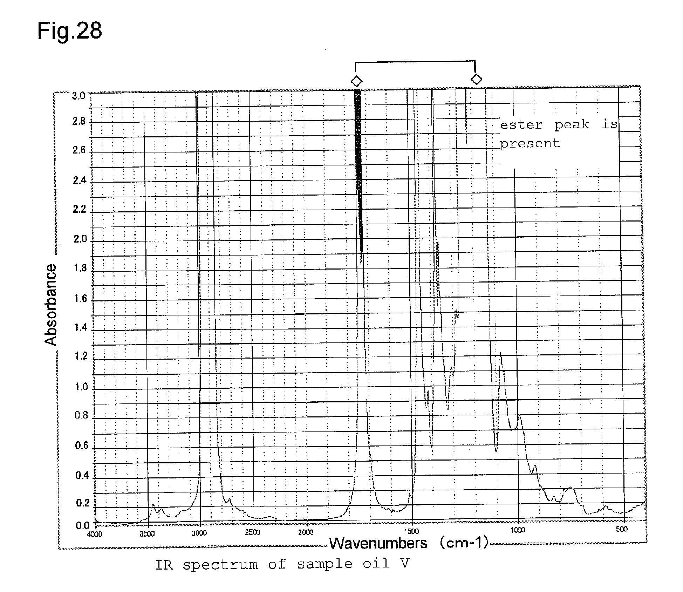

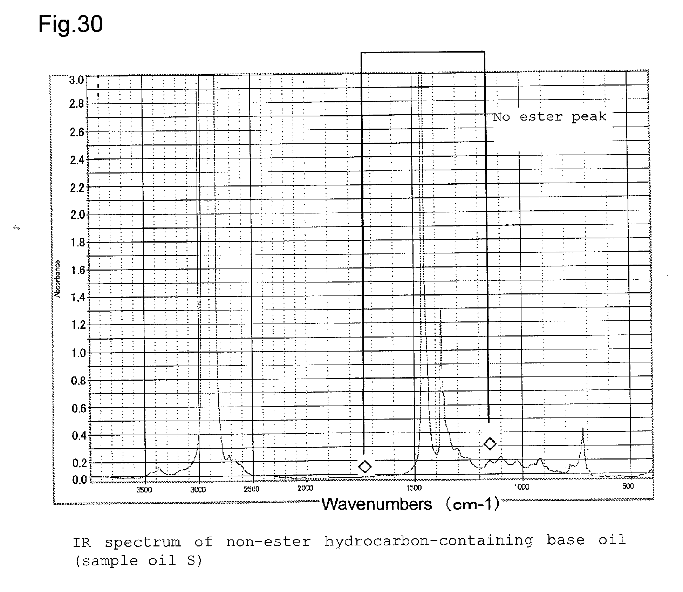

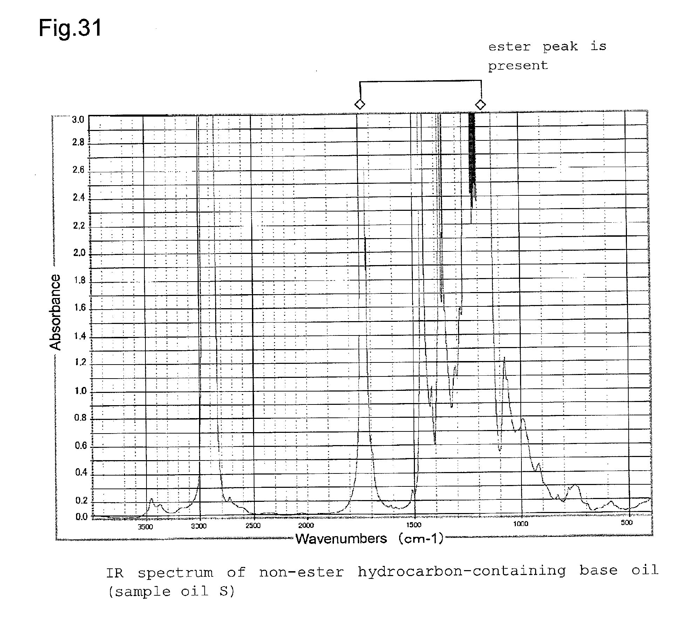

Figs. 21 to 29 illustrate the measured IR spectra. For comparison, IR spectra measurement was also performed under the same conditions for the non-ester hydrocarbon-containing base oil (sample oil S) which is the Group III hydrogenated purified mineral oil and the diester-containing base oil (sample oil T) both commercially available. Figs. 30 and 31 illustrate the spectra of these sample oils.

The spectra of the sample oils A, B, D, F, V, and W in the drawings show peaks associated with the ester structure at near the wave numbers of 1,740 cm⁻¹ and 1, 170 cm⁻¹. All of the sample oils show an absorbency exceeding 1.0 at their peak intensities near 1,740 cm⁻¹. It is known from the result that all of the sample oils have high ester contents in their whole compositions and these peaks are irrelevant to the additives thereof but are mostly associated with their base oils.

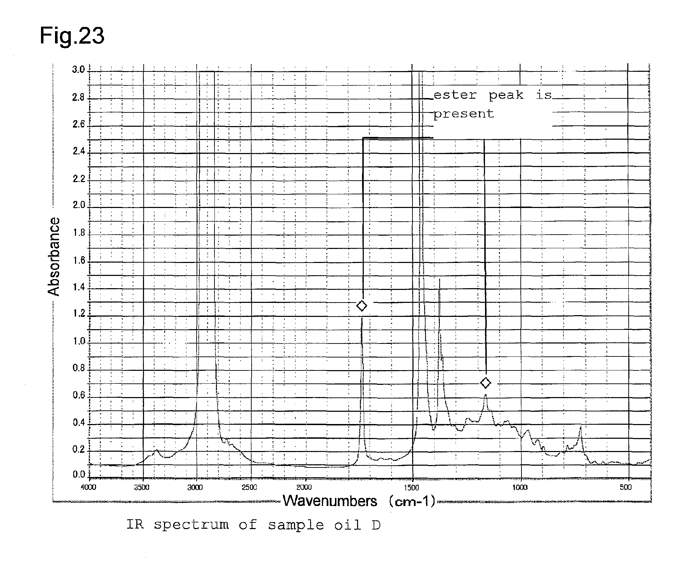

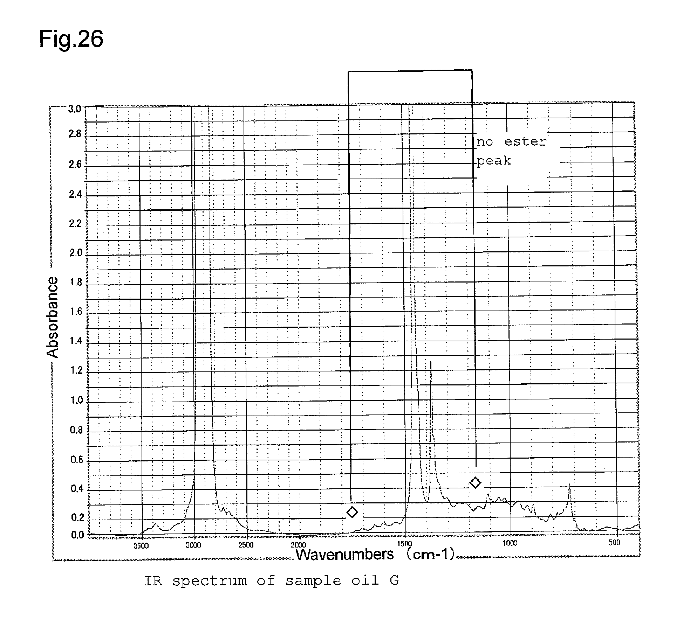

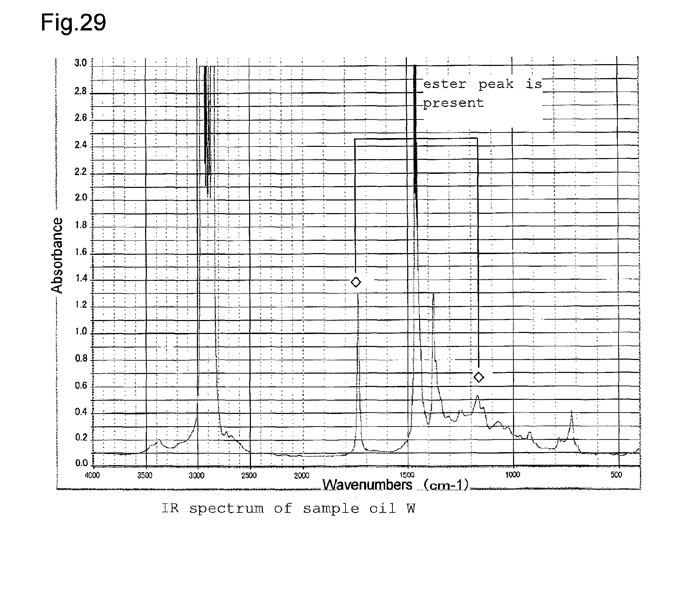

In any of the sample oils A, B, F, V, and T illustrated in Figs. 21, 22, 25, 28, and 31, a peak intensity at near 1,740 cm⁻¹ marks an absorbency exceeding 1.5, teaching that the ester contents of the base oils in these sample oils are particularly large. In the sample oils D and W illustrated in Figs. 23 and 29, a peak intensity at near 1,740 cm⁻¹ marks an absorbency equal to or lower than 1.5. The IR spectra of the sample oils G, E, and U illustrated in Figs. 26, 24, and 27 show no peaks associated with the ester structure at near the wave numbers of 1, 740 cm⁻¹ and 1, 170 cm⁻¹ similarly to the IR spectrum of the non-ester hydrocarbon-containing base oil illustrated in Fig. 30.

As recited in Tables 1 to 4, it can be determined from these results that the sample oils A, B, D, F, V, T, and W include the ester-containing base oils as their base oils. Of these sample oils, however, the sample oils D and W contain relatively small volumes of ester-containing base oils. On the other hand, the principal ingredients of the sample oil G, the sample oil E containing the sample oil G as its base oil, and the sample oil U are the hydrocarbon-containing base oils.

### Evaluation

The friction characteristics of the respective sample oils were assessed.

### Evaluation Method and Evaluation Result

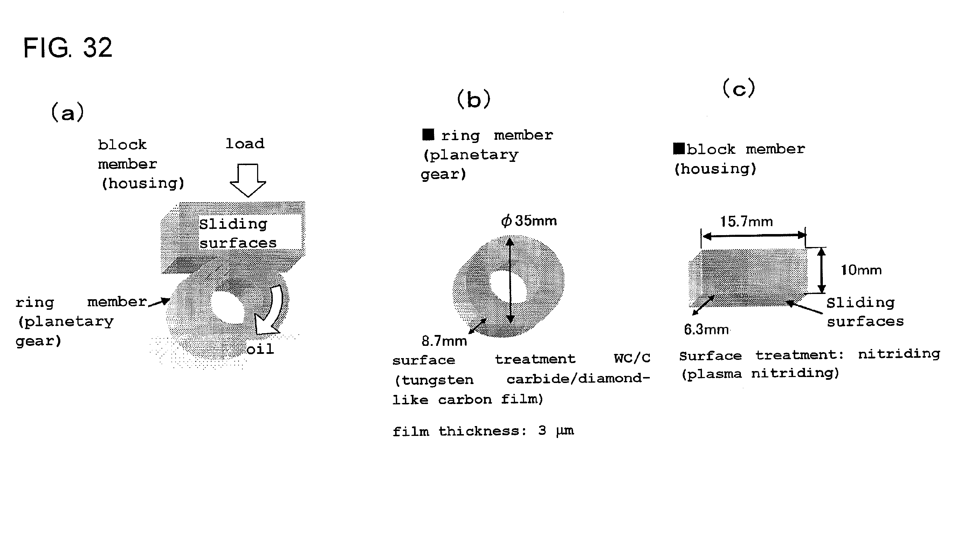

A friction test was performed by the use of a ring-on-block friction test apparatus supplied by Takachihoseiki Co., Ltd. Describing the friction test performed by the test apparatus, a block member is subject to a load and a ring member is rotated to cause a friction therebetween (sliding movement) as shown in Fig. 32 (a). When a lower section of the ring member dipped in a lubricating oil is rotated, the lubricating oil is splashed upward and spread on a friction surface.

Figs. 32(b) and (c) are illustrations of the block and ring members with dimensions thereof. Describing the ring member, a WC/C film having a thickness of about 3 µm (a multilayered structure where a tungsten carbide-enriched layer and a diamond-like carbon-enriched layer are alternately stacked on each other) is formed on carburized SCM 420. The block member was plasma-nitrided FCD 600. The ring member had a surface roughness of 7 to 10 µm in ten point height of irregularities RzJIS (JIS B 0601:2001), and the block member had a surface roughness of 3 to 5 µm in ten point height of irregularities RzJIS.

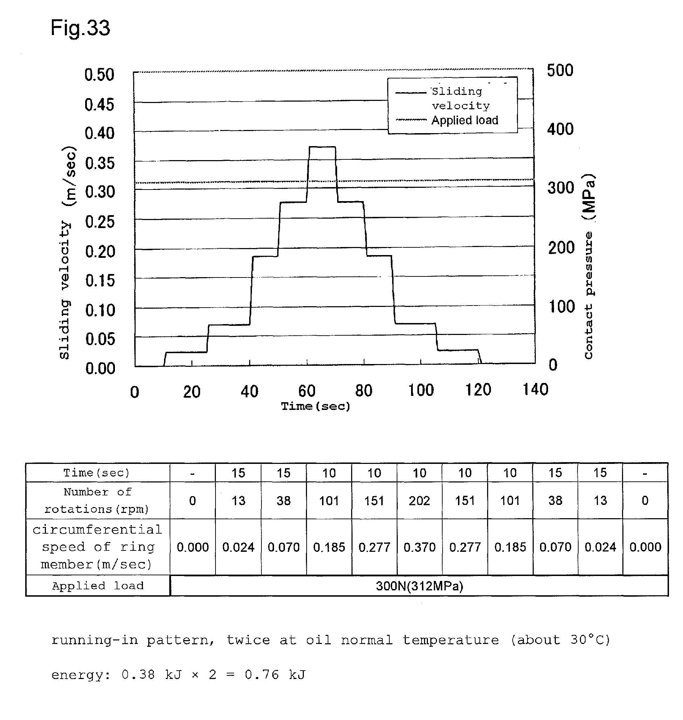

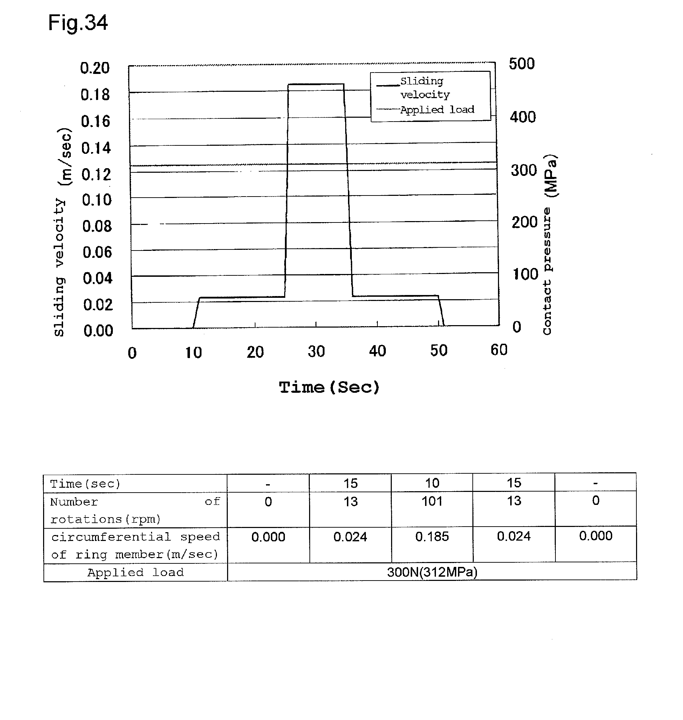

During the friction test, oil temperatures were set to normal temperature (30°C), and a performance measurement pattern was applied after a running-in pattern was repeated twice. Figs. 33 and 34 respectively illustrate the running-in pattern and the performance measurement pattern. A running-in load was 0.76 kJ. A sliding velocity was accelerated and then decelerated through different stages. The µ-V characteristics (= degree of dependency of a friction coefficient on sliding velocities) were evaluated by evaluating a degree of dependency of a friction coefficient at the contact pressure of 312 MPa and the decelerated sliding velocities of 0.024 m/s and 0.185 m/s.

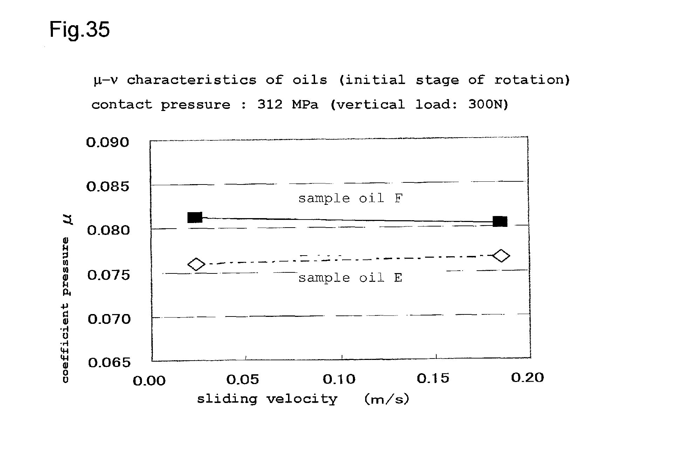

Fig. 35 illustrates the µ-V characteristics of the sample oils E and F. The µ-V gradients of these sample oils were calculated from the µ-V characteristics illustrated in Fig. 35 and used for the evaluation. The µ-V gradients were calculated from [µ at the sliding velocity of 0.185m/s]/( µ at the sliding velocity of 0.024 m/s)]. When the µ-V gradient is positive or close to positive gradient, a better anti-vibration is attained.

It is confirmed from Fig. 35 that the µ-V characteristics of the sample oil E are improved toward positive gradient (favorable characteristics) as compared to the sample oil F which is a conventional oil (commercial oil, base oil). This confirmed that the sample oil E achieved remarkable anti-vibration.

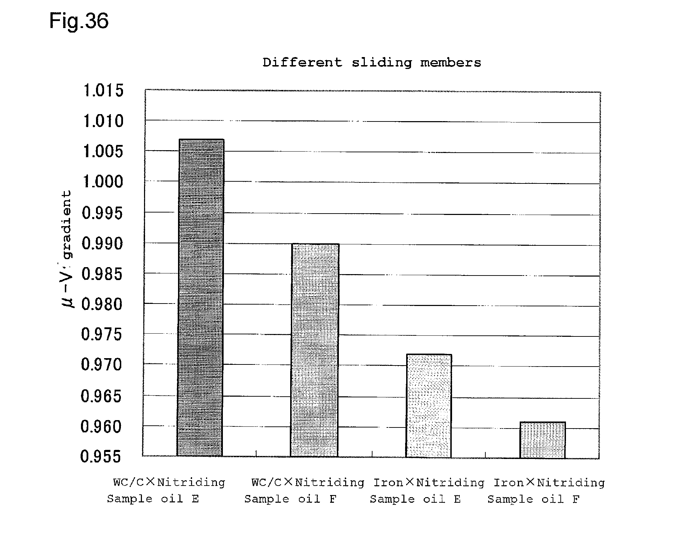

The friction test by the friction test apparatus was further performed, in which SCMB21 carburized and then sulphonitrided was used as the ring member and nitrocarburized FCD 600 was used as the block member to measure the µ-V gradients. The same test conditions were applied. Fig. 36 illustrates a measurement result of the µ-V gradients. The illustration of Fig. 36 includes the µ-V gradients of Fig. 35.

As illustrated in Fig. 36, it was confirmed that not only the sliding members coated with the WC/C film and nitrided film but the sliding members coated with the iron-based mediums and the nitrided film improved the µ-V characteristics when the sample oils E and F were simply applied thereto. The sliding members coated with the WC/C film and nitrided film, in particular, greatly improved the µ-V characteristics.

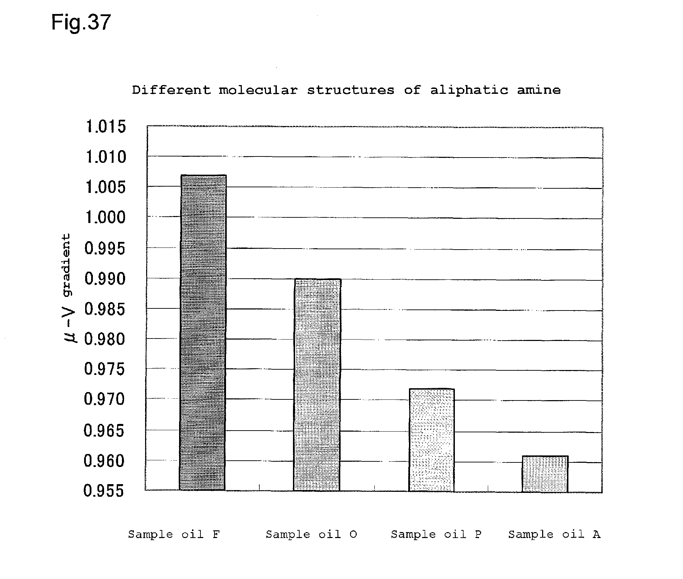

Fig. 37 illustrates a measurement result of the µ-V gradients of the sample oils A, F, O, and P similarly measured. The result was evaluated; △ for the gradient of µ-V characteristics (µ-V gradient) less than 0.995, ○ for at least 0.995 to less than 1.000, and ⊚ for 1.000 or more in Fig. 37.

The sample oils A, O, and P are the lubricating oils obtained by adding the aliphatic amine to the sample oil F, where the hydrocarbon group of the aliphatic amine is differently structured (carbon number of the hydrocarbon group is different) . As illustrated in Fig. 37, the µ-V gradients of the sample oils A and P respectively with a carbon number of 12 or more were evaluated ○ with at least 0.995, and the µ-V gradient of the sample oil A with a carbon number of 18 was evaluated ⊚ with 1.000 or more. Thus, the µ-V gradient of the sample oil A with carbon number of 18 is particularly favorable.

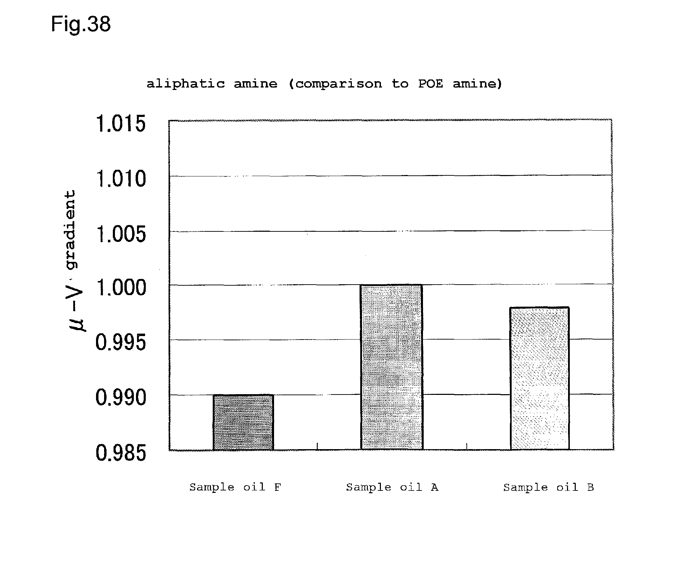

Fig. 38 illustrates a measurement result of the µ-V gradients of the sample oils A, B, and F similarly measured.

The sample oils A and B are the lubricating oils obtained by adding the aliphatic amine or the aliphatic amine ethylene oxide adduct, respectively, to the sample oil F, where the additive is differently structured. Referring to Fig. 38, the µ-V gradient of the sample oil B, to which the aliphatic amine ethylene oxide adduct (polyoxyethylene oleylamine) was added, was ○ with at least 0.995, and the µ-V gradient of the sample oil A, to which the aliphatic amine (oleylamine) was added, was ⊚ with 1.000 or more. This teaches that the aliphatic amine and the aliphatic amine ethylene oxide adduct are both effective additives for improving the µ-V gradient.

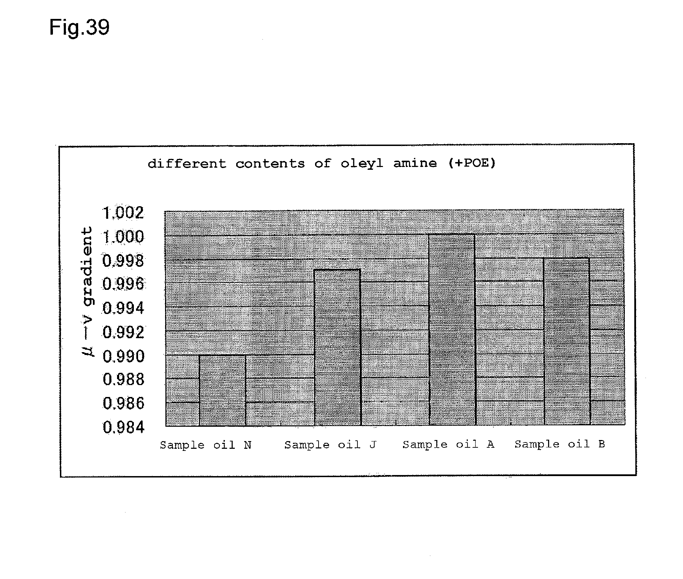

Fig. 39 illustrates a measurement result of the µ-V gradients of the sample oils A, B, J, and N similarly measured.

These sample oils are the lubricating oils obtained by adding the aliphatic amine or the aliphatic amine ethylene oxide adduct, respectively, to the sample oil F, where the mass% of the additive to be added is different. Referring to Fig. 39, the µ-V gradient of the sample oil J containing the aliphatic amine (oleylamine) by 1.00% was ○ with at least 0.995, and the µ-V gradient of the sample oil A containing the same by 3.00% was ⊚ with 1.000 or more. This teaches that the µ-V gradient improves as the aliphatic amine is more included.

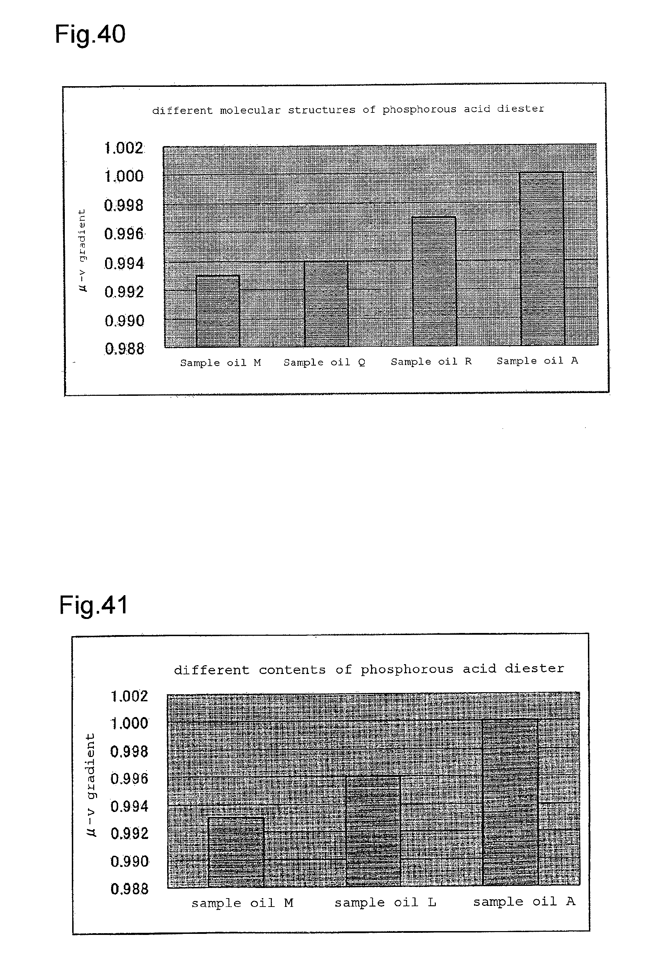

Fig. 40 illustrates a measurement result of the µ-V gradients of the sample oils A, M, Q, and R similarly measured.

These sample oils are the lubricating oils obtained by adding the phosphorous acid diester having an unsaturated hydrocarbon group to the sample oil M, where the carbon number of the hydrocarbon group of the additive is different. As illustrated in Fig. 40, the µ-V gradients of the sample oils A and R, where the carbon number of the hydrocarbon group of the phosphorous acid diester is 12 or more, were evaluated ○ with at least 0.995, and the µ-V gradient of the sample oil A where the carbon number is 18 was evaluated ⊚ with 1.000 or more. This teaches that the sample oil A where the carbon number is 18 achieved remarkable µ-V gradient.

Fig. 41 illustrates a measurement result of the µ-V gradients of the sample oils A, M, and L similarly measured.

These sample oils are the lubricating oils obtained by adding the phosphorous acid diester to the sample oil M, where the additive is differently structured. As illustrated in Fig. 41, the µ-V gradient of the sample oil L containing the phosphorous acid diester by 1.00% was evaluated ○ with at least 0.995, and the µ-V gradient of the sample oil A containing the phosphorous acid diester by 1.52% was evaluated ⊚ with 1.000 or more. This teaches that the µ-V gradient improves as the phosphorous acid diester is more included.

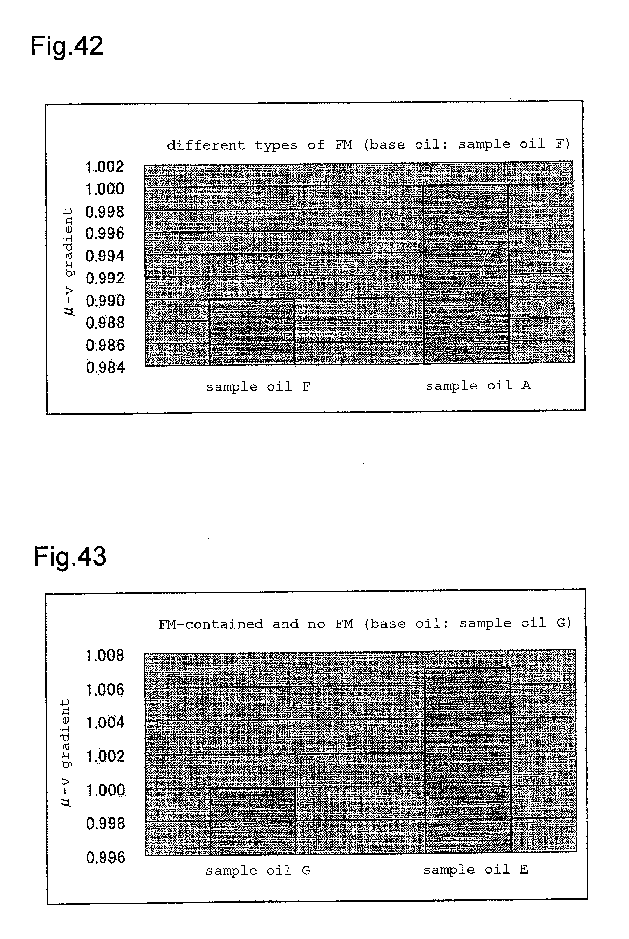

Fig. 42 illustrates a measurement result of the µ-V gradients of the sample oils A and F similarly measured.

The sample oil A is the lubricating oil obtained by adding the aliphatic amine and the phosphorous acid diester to the sample oil F which isanester-basedlubricatingoil. Referring to Fig. 42, the µ-V gradient of the sample oil Awas evaluated ⊚ with 1.000 or more.

Fig. 43 illustrates a measurement result of the µ-V gradients of the sample oils G and E similarly measured.

The sample oil E is the lubricating oil obtained by adding the aliphatic amine and the phosphorous acid diester to the sample oil G which is a non-ester lubricating oil. Referring to Fig. 43, the µ-V gradient of the sample oil E was evaluated ⊚ with 1.000 or more.

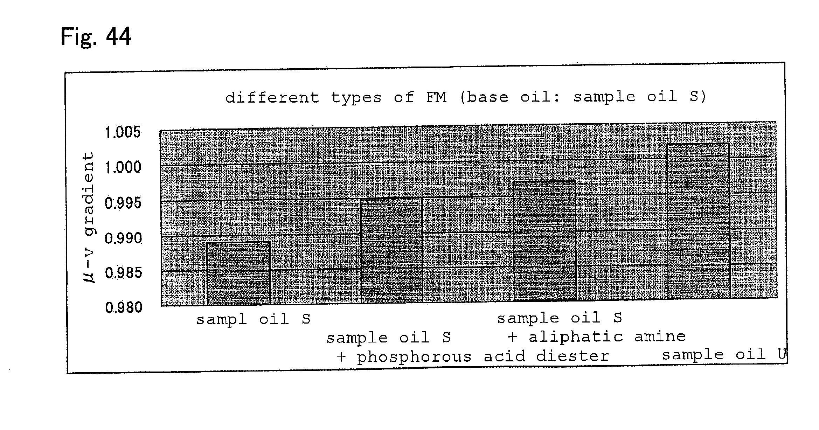

Fig. 44 illustrates a measurement result of the µ-V gradients of the sample oils S and U, and sample oils respectively obtained by adding the phosphorous acid diester expressed by Chemical Formula 6 by 1.52% by mass to the sample oil S (sample oil S + phosphorous acid diester) and by adding the aliphatic amine expressed by Chemical Formula 5 by 3.00% by mass to the sample oil S (sample oil S + aliphatic amine).

The sample oil U, S + phosphorous acid diester, and S + aliphatic amine are the lubricating oils obtained by adding the aliphatic amine and/or phosphorous acid diester to the sample oil S which is a mineral oil. As illustrated in Fig. 44, the µ-V gradient of the lubricating oil containing the aliphatic amine and the phosphorous acid diester alone in the mineral oil was assessed ○ with at least 0.995, and the µ-V gradient of the sample oil U containing the two additives both was evaluated ⊚ with 1.000 or more.

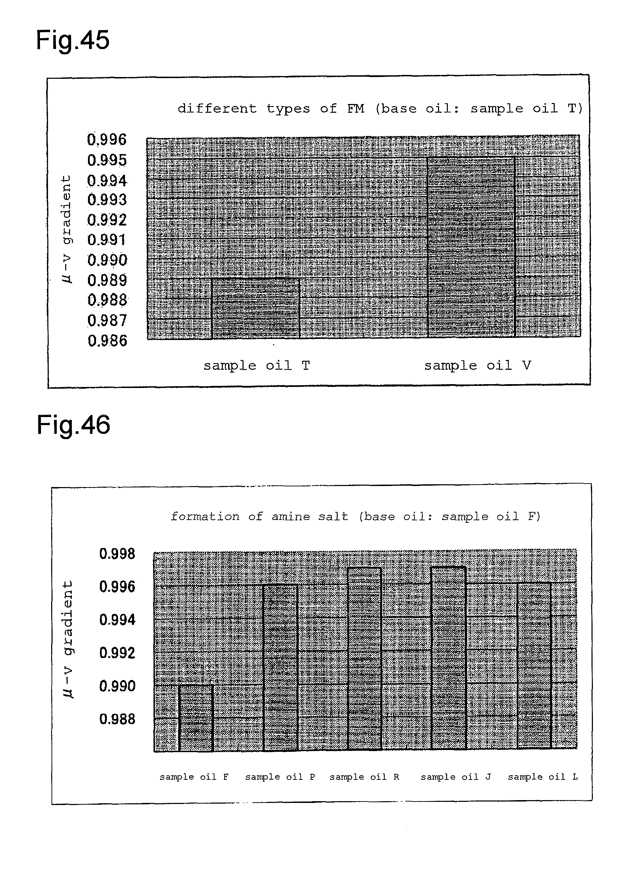

Fig. 45 illustrates a measurement result of the µ-V gradients of the sample oils T and V similarly measured.

The sample oil V is the lubricating oil obtained by adding the aliphatic amine and the phosphorous acid diester to the sample oil T which is an ester-based lubricating oil. According to the illustration of Fig. 45, the µ-V gradient of the sample oil V was evaluated ○ with at least 0.995.

Thus, it was learnt from the illustrations of Figs. 42 to 45 that it improved the µ-V gradient to add the aliphatic amine and the phosphorous acid diester as additives both whether the base oil is an ester-based or non-ester lubricating oil.

Fig. 46 illustrates a measurement result of the µ-V gradients of the sample oils F, J, L, P, and R similarly measured.

The sample oils (sample oils A, J, L, P, and R) are the lubricating oils in which the aliphatic amine and the phosphorous acid diester were both added to the sample oil F, where these additives form the amine salt. It was confirmed from the illustration of Fig. 46 that the µ-V gradient was improved in the sample oil F used as a base oil mixed with the aliphatic amine and the phosphorous acid diester forming the amine salt.

The µ-V gradients of the sample oils S and U were measured and observed (see Fig .44). The sample oil U is the lubricating oil obtained by adding the aliphatic amine and the phosphorous acid diester both to the sample oil S, where these additives form the amine salt. It was confirmed that the µ-V gradient was improved in sample oil U including sample oil S used as a base oil mixed with the aliphatic amine and the phosphorous acid diester forming the amine salt.

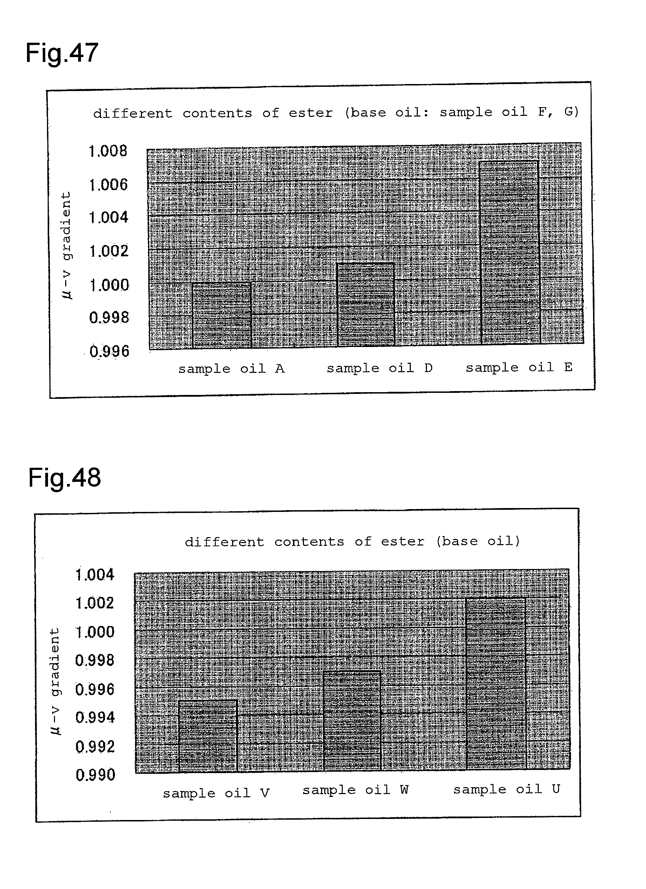

Fig. 47 illustrates a measurement result of the µ-V gradients of the sample oils A, D, and E similarly measured.

The sample oil A contains the sample oil F as its base oil, and the sample oil E contains the sample oil G as its base oil. The sample oil D contains a mixture of the sample oils F and G as its base oil. It was known from the illustration of Fig. 47 that the µ-V gradients of the sample oils D and E were higher than that of the sample oil A, and the sample oil E exhibited the highest µ-V gradient.

Fig. 48 illustrates a measurement result of the µ-V gradients of the sample oils U, V, and W similarly measured.

The sample oil V contains the sample oil T as its base oil, and the sample oil U contains the sample oil S as its base oil. The sample oil W is a mixture of the sample oils V and U, and contains mixture of the sample oils S and T as its base oil. It was known from the illustration of Fig. 48 that the µ-V gradients of the sample oils U and W were higher than that of the sample oil V, and the sample oil U exhibited the highest µ-V gradient.

It was learnt from the illustrations of Figs. 47 and 48 that it improved the µ-V gradient to remove any ester component from the base oils.

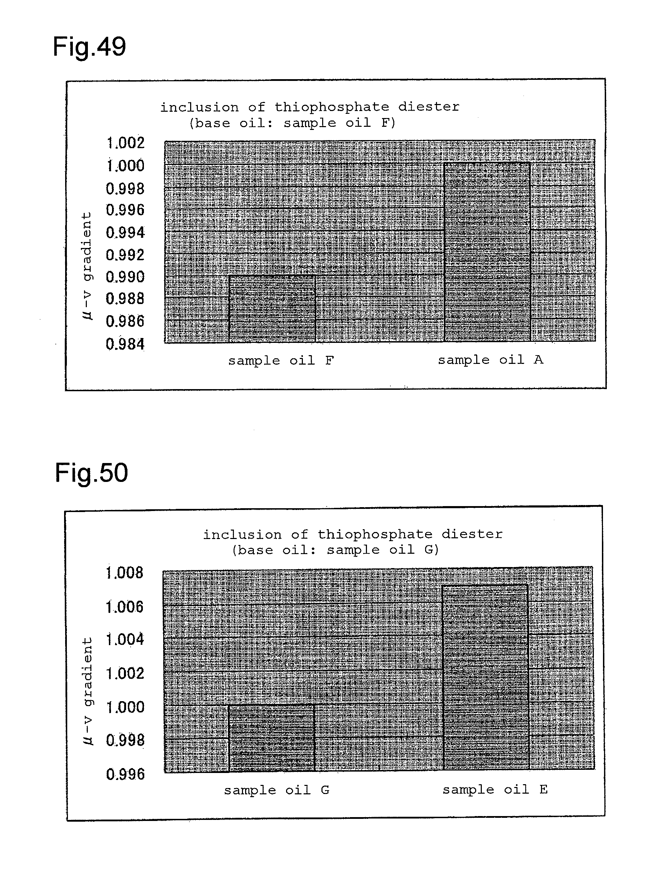

Figs. 49 and 50 respectively illustrate measurement results of the µ-V gradients of the sample oils A, F, E, and G similarly measured.

The sample oil A is the lubricating oil obtained by adding the phosphorous acid diester to the sample oil F. The sample oil E is the lubricating oil obtained by adding the phosphorous acid diester to the sample oil G. It is known from the illustrations of Figs. 49 and 50 that the sample oils A and E containing the thiophosphate diester exhibited the µ-V gradients higher than those of the base oils not containing the thiophosphate diester (sample oils F and G). Thus, it was known that the thiophosphate diester is an effective additive for improving the µ-V gradient.

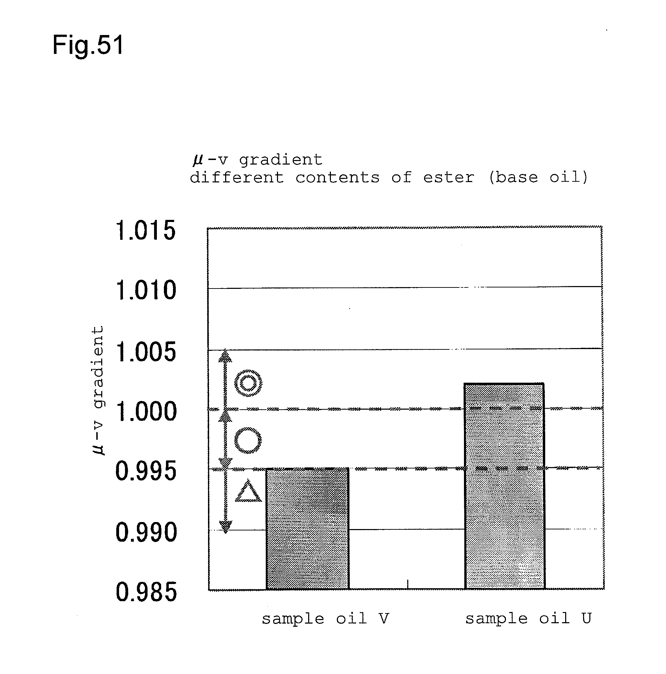

According to the running-in pattern wherein a pressing force was set to 294 N (309 MPa), sliding velocity was set to 160 rpm (0.293 m/s), and sliding time was set to 30 minutes, the µ-V characteristics of the sample oils U and V were measured in the friction test apparatus. The performance measurement pattern was similar to that of the friction test. Fig. 51 illustrates a measurement result of the µ-V gradients.

As illustrated in Fig. 51, there was an improvement of the µ-V gradient in the sample oil U containing the mineral oil from which the ester-containing base oil is removed as compared to the sample oil V containing the ester-containing base oil by 100%. The sample oil U, in particular, achieves positive µ-V gradient because the ester-containing base oil is removed therefrom.

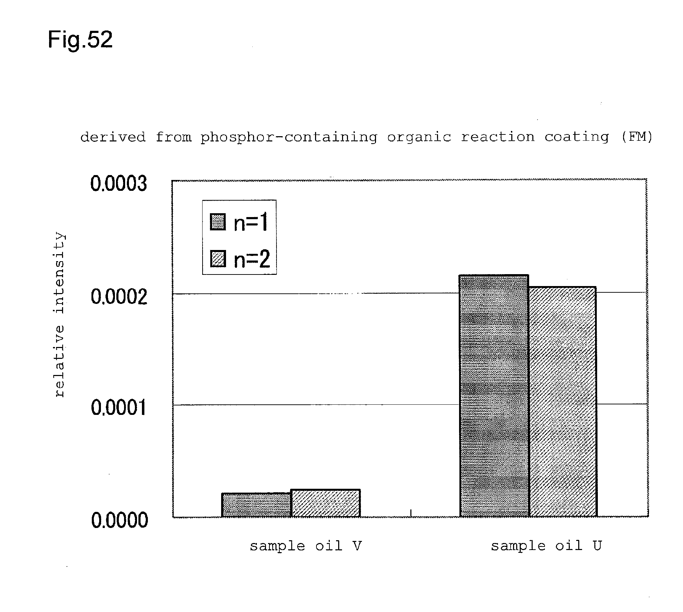

The sliding surfaces of the blocks tested by the friction test apparatus where the µ-V gradients were measured were analyzed by the TOF-SIMS analysis. Fig. 52 illustrates an analysis result of the TOF-SIMS analysis. Fig. 52 illustrates relative strengths of phosphor-based organic reaction coatings derived from the phosphorous acid diester (C₃₆H₇₀O₄ P/T) where C⁻, CH⁻, O⁻, OH⁻, and C₂H⁻ are mixedly used.

It was confirmed from the illustration of Fig. 52 that the sample oil U using the mineral-contained base oil included more ingredients of the phosphor-based organic reaction coating, meaning that more phosphorous acid diester was adsorbed to the sliding surface of the block.

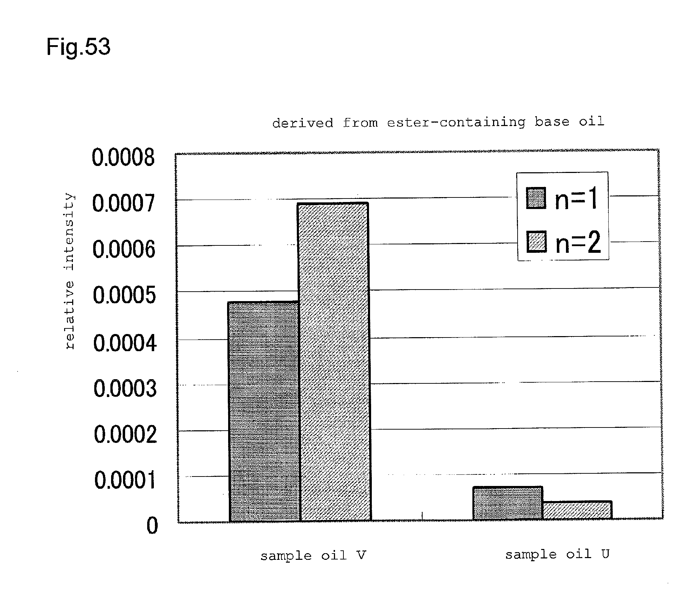

The sliding surfaces of the blocks tested by the friction test apparatus were analyzed by the TOF-SIMS analysis. Fig. 53 illustrates an analysis result of the TOF-SIMS analysis. Fig. 53 illustrates relative strengths of Fe⁺-basedreaction coatings (C₂₇H₅₃O₂ Fe/Fe) derived from the ester-containing base oil.

It was confirmed from the illustration of Fig. 53 that the sample oil V included more ingredients of the reaction coating derived from the ester-containing base oil. It is read from the result that the ingredients of the reaction coating derived from the ester-containing base oil possibly interfere with adsorption of the additive (FM) in the lubricating oil. The relative intensity similarly confirmed in the sample oil U, however, is probably a noise.

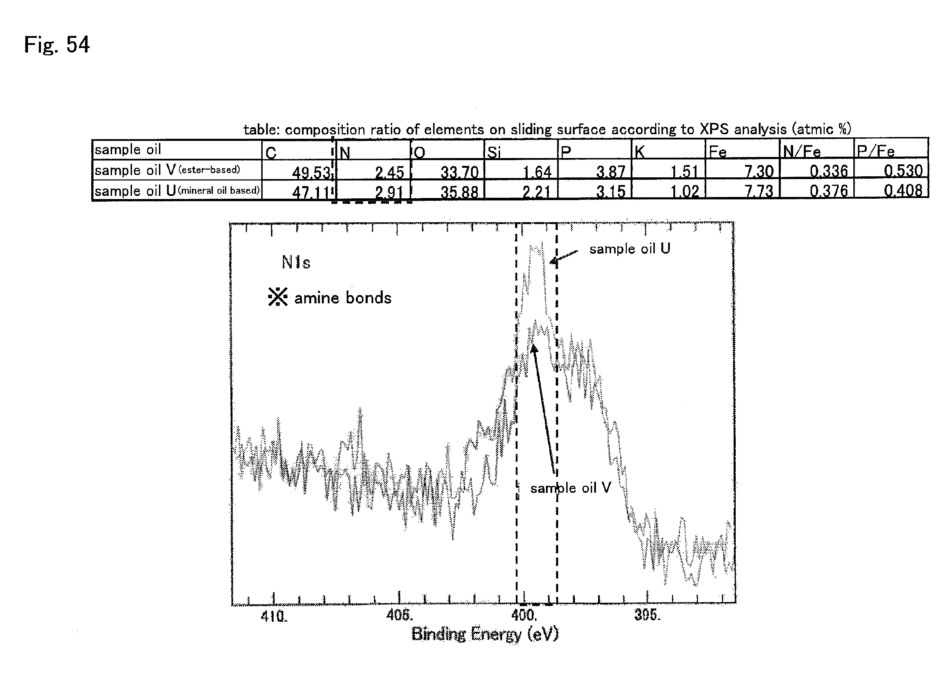

The sliding surfaces of the blocks tested by the friction test apparatus were analyzed by an XPS analysis, a result of which is illustrated in Fig. 54.

Referring to the illustration of Fig. 54, a higher peak associated with amine bonds is confirmed in the sample oil U as compared to the sample oil V, suggesting that more amine-based additive (FM) is adsorbed in the sample oil U than the sample oil V.

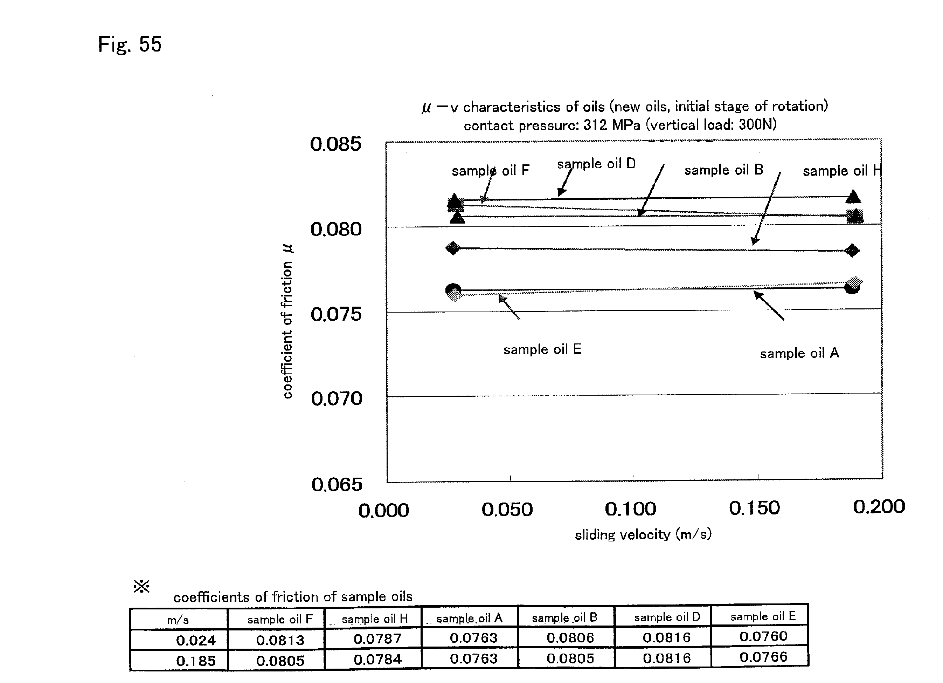

Fig. 55 illustrates the µ-V characteristics of the respective sample oils in an initial stage. During the initial stage, the sample oils A, B, D, and E were improved in µ-V characteristics toward positive gradient (favorable characteristics) as compared to the sample oils F and H which are conventional oils (commercial oil, base oil). The sample oils A, D, and E, in particular, exhibit the positive gradient in µ-V characteristics (remarkable anti-vibration).

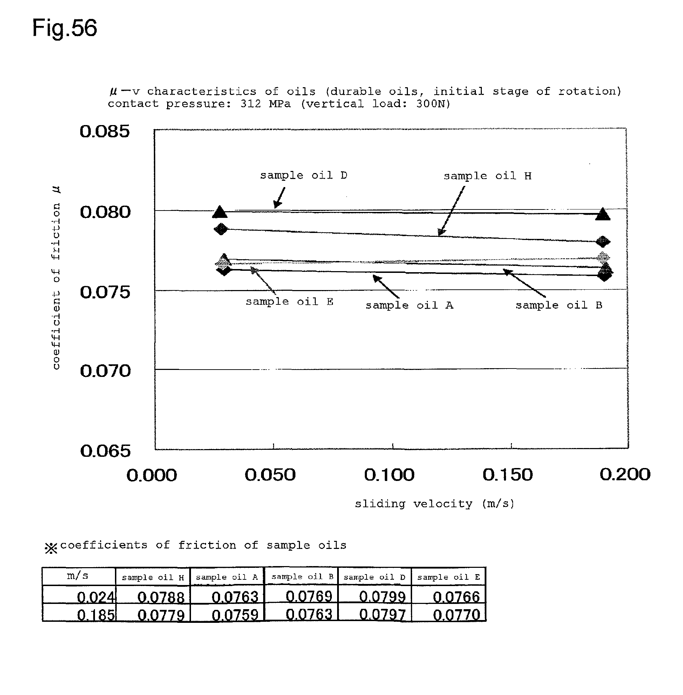

Fig. 56 illustrates the µ-V characteristics of the sample oils A, B, D, E, F, and H after the application of a thermal load thereto; 110°C and 300 h. The temperature of the thermal load (110°C) is an almost highest temperature in engine heat and friction-caused self heat which may be applied to the lubricating oil after the center differential with a differential limiting function is actually mounted in a vehicle. After the anti-vibration was confirmed, the µ-V characteristics of the sample oils A, B, D, and E were improved toward positive gradient (favorable characteristics) as compared to the conventional sample oil H. The sample oil E, in particular, succeeded in keeping the positive gradient after the thermal load 300 h is applied (remarkable anti-vibration).

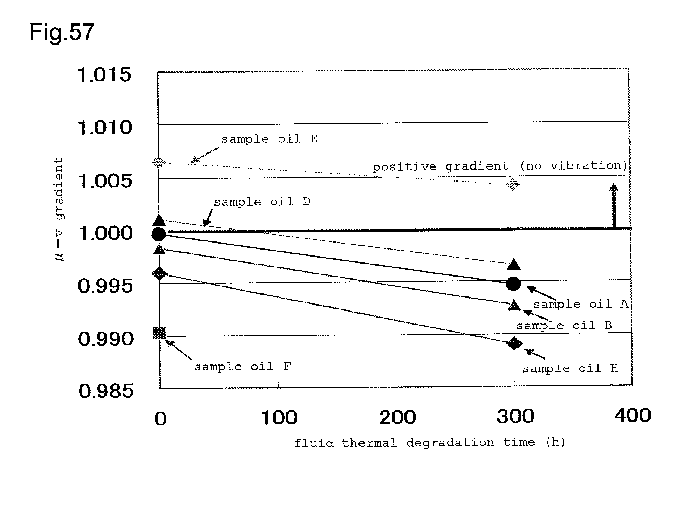

Fig. 57 illustrates changes with time of the µ-V gradients after the thermal load application. The µ-V gradient on a longitudinal axis is a value obtained by dividing a friction coefficient in a fast rotation area by a friction coefficient in a slow rotation area. When the value is 1 or more, the µ-V gradient is positive, indicating a remarkable resistance to vibration. As illustrated in Fig. 57, the sample oils A, B, D, and E have smaller drops of the µ-V gradients after the thermal load application (toward positive gradient) than the sample oil H. The sample oils D and E are better in durability because of the µ-V characteristics than the sample oil H. The sample oil E, in particular, keeps its positive µ-V gradient after the 300 h fluid thermal degradation at 110°C, thus exhibiting a remarkable resistance to vibration.

In the sample oil E, a degree of degradation of the µ-V gradient is relatively small due to the fluid thermal degradation. This is because the FM, which may be degraded and thereby diminished, is still effectively adsorbed to the friction surface in the sample oil E whose base oil is not an ester-containing base oil having a polar group.

As recited in Tables 1 to 4, the sample oils A and B, D to E, I to P, R, and U to W contain the aliphatic amine or the aliphatic amine ethylene oxide adduct having an unsaturated hydrocarbon group with a carbon number of 12 to 18, and the phosphorous acid diester having a saturated or unsaturated hydrocarbon group with a carbon number of 12 to 18. These additives are generally known to form an organic adsorption film on a friction surface. The organic adsorption film thus obtained is thought to reduce a friction coefficient under low sliding velocity conditions where a ratio of solid contacts increases as an average oil film thickness lessens in the presence of solid contact and oil film forming areas both, improving the µ-V characteristics toward positive gradient. An adsorption - desorption balance of the additive decides a state of formation of the adsorption film. Therefore, the µ-V characteristics are different depending on the state of formation of the adsorption film on the friction surface.

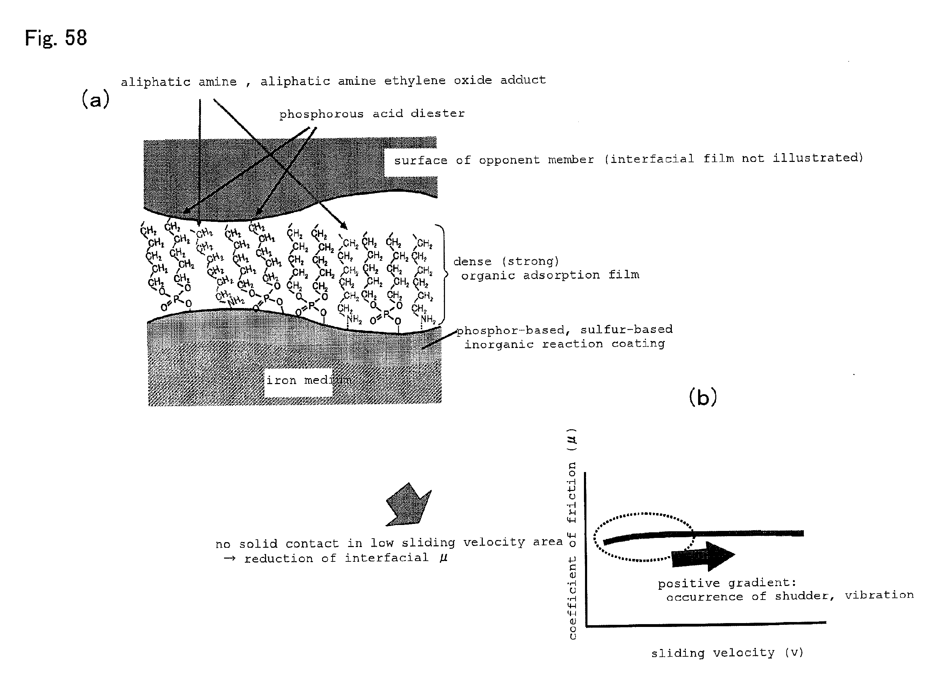

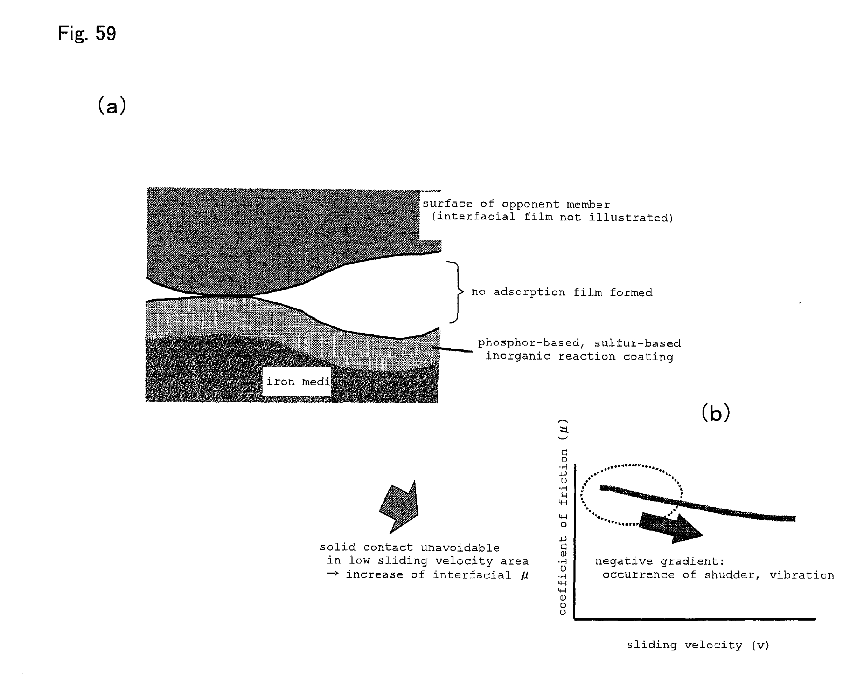

Figs. 58 and 59 schematically illustrates an anticipated relationship between different states of formation of the adsorption film and the µ-V characteristics when the conventional oils (lubricating oils commercially available) and the sample oils according to the present invention are used. When the sample oils according to the present invention suitably including the aliphatic amine and phosphorus acid diester having hydrocarbon groups are used, as illustrated in Fig. 58 (a) , a dense and strong organic adsorption film formed on the friction surface prevents solid contact in a low sliding velocity area, in which case, the µ-V characteristics are improved toward positive gradient as illustrated in Fig. 58(b).

In the case of any lubricating oils not including these effective additive, for example, lubricating oils commercially available, an adsorption film strong enough is not formed on the friction surface as illustrated in Fig. 59(a), in which case solid contact is not possibly avoided under the low sliding velocity conditions, resulting in µ-V characteristics with negative gradient as illustrated in Fig. 59(b).

Because of the reasons described so far, the sample oils according to the present invention containing the particular additives can obtain such favorable µ-V characteristics. The sample oils according to the present invention can ensure remarkable quietness in any friction-type differential limiting devices.

It was confirmed that an effective way to improve the µ-V characteristics toward positive gradient is to reduce a percentage by mass of the ester-containing base oil and increase the hydrocarbon-containing base oil as a principal additive in the lubricating oil as in the sample oils D and E.

The adsorption of the additive is likely to inhibit adsorption of the other ingredients of the lubricating oil. A base oil ingredient with polarity, for example, diester or polyol ester with two ester bonds in a molecule, achieves such a high adsorptivity, undermining adsorption of any effective additives. More specifically, when a lubricating oil including any ester-containing base oil is used, the formation of an enough desorption film on the friction surface is inhibited even when a large volume of additives (amine and phosphorous acid diester having an alkenyl group) is added thereto.

When the additives are added (by 1% by mass or more), favorable µ-V characteristics (or favorable quietness) are maintained over a long period of time as demonstrated by the sample oils according to the present invention. The additives of the lubricating oil are oxidized, thermally deteriorated, or degenerated or decomposed through adsorption to the friction surface during use. When the lubricating oil is short of an effective amount of additives as a result of the degeneration and/or decomposition, it is no longer possible to form a dense and strong adsorption film on the friction surface. To avoid such a problem, when the additives are added (by 1% by mass or more) as demonstrated by the sample oils according to the present invention, a long-term use does not overly consume an effective amount of additives, and favorable µ-V characteristics (or favorable quietness) are accordingly maintained over a long period of time.

The sample oils according to the present invention succeed in remarkable quietness (positive µ-V gradient) in friction members, particularly in sliding members both made of iron-based metals and sliding members respectively made of an iron-based metal and a hard coating.

When the sample oils representing the lubricating oil according to the present invention, which succeeds in improving the µ-V characteristics toward positive gradient, are used in the differential with a differential limiting function illustrated in Figs. 1 to 3, a vehicle loaded with the differential accomplishes remarkable quietness (positive µ-V gradient) .

### MODIFIED EMBODIMENTS

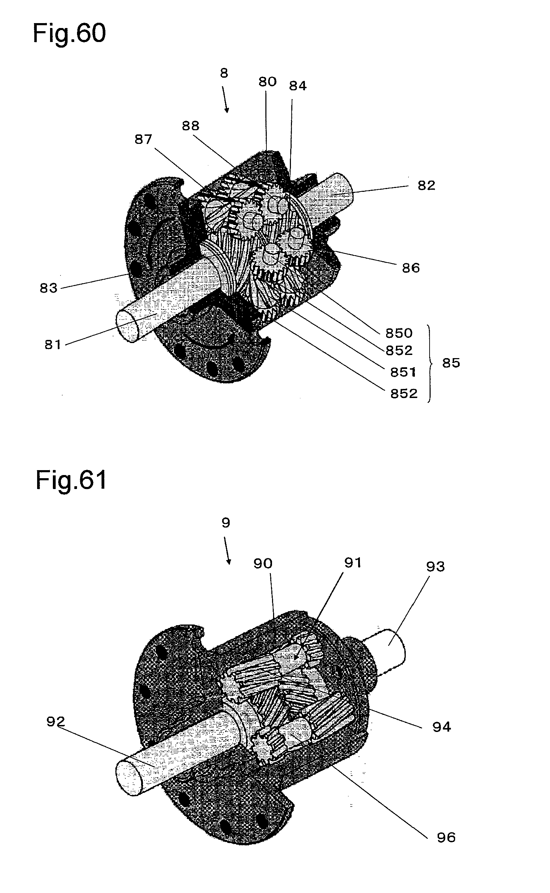

The sample oils according to the present invention may be used in differentials with a differential limiting function illustrated in Figs. 60, and 61 to 62 as well as the differential with a differential limiting function illustrated in Figs. 1 to 3.

### First Modified Embodiment

A differential with a differential limiting function 8 illustrated in Fig. 60 has a housing 80 rotatable on one or the other of a pair of drive shafts 81 and 82. Side gears 83 and 84 formed as worm gears or helical gears are coupled with inner end parts of the two drive shafts. The housing 80, the pair of drive shafts, and the side gears 83 and 84 are rotatable on a common shaft line.

Coupling gears 85, 86, 87, and 88 are operably coupled so that the two side gears 83 and 84 rotate by an equal amount in opposite directions relative to the housing 80. The coupling gears 85 to 88 each forms a train of gears and couples the two side gears 83 and 84 with each other. The housing 80 has a pedestal, and the pedestal has windows formed therein for the coupling gears respectively paired to be located away from each other through equal angles in two different directions from the side gears. The coupling gears are each retained in the window to be rotated on a shaft line thereof by a journal pin 850. The journal pine 850 is supportably inserted in a hole formed in the pedestal.

The coupling gears 85 to 88 each has an intermediate gear portion 851 formed as a worm wheel (though the gear 85 alone is illustrated with reference numerals in Fig. 1, the other gears 86 to 88 are similarly structured), and two terminal gear portions 852 formed as spur gears. The intermediate gear portion 851 of the coupling gear 85 has teeth to be meshed with teeth of the side gear 83. The terminal gear portions 852 of the coupling gear each has teeth to be meshed with teeth of a corresponding gear portion of the coupling gear 86. An intermediate gear portion 861 of the coupling gear 86 has teeth to be meshed with teeth of the side gear 84.

According to the present modified embodiment, sliding surfaces are; between the coupling gears 85 to 88 and the side gears 83, 84, between the pair of drive shafts 81 and 82, between the drive shafts 81, 82 and the housing 80 (washer provided therein), between axial end faces of the coupling gears 85 to 88 and the housing 80, and between the journal pins 850 of the coupling gears 85 to 88 and the housing 80.

According to the present modified embodiment, preferably, wall surfaces of the windows, which are sliding surfaces slidably contacted by the coupling gears 85 to 88, are nitrided (for example, ion nitriding or gas nitrocarburizing), and faces of the coupling gears 85 to 88 each has a tungsten carbide/diamond-like carbon film formed thereon.

### Second Modified Embodiment

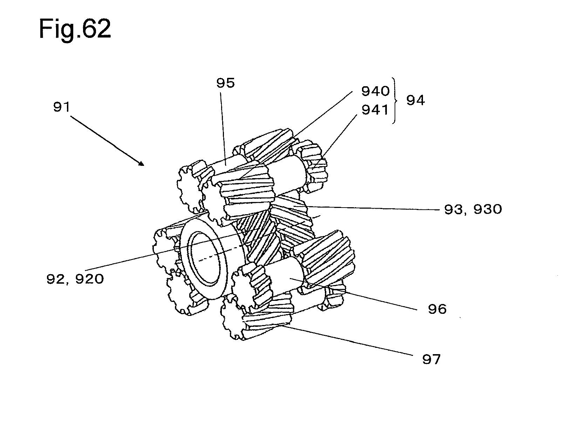

A differential with a differential limiting function 9 illustrated in Figs. 61 and 62 has a planetary worm gear mechanism 91 supported inside a housing 90, wherein the worm gear mechanism 91 couples a pair of drive shafts 92 and 93 with each other so that these shafts are rotatable in opposite direction relative to the housing 90. The gear mechanism 91 has a pair of side gears 920 and 930 respectively coupled with the drive shafts 92 and 93, and plurality of pairs of element gears 94 to 97. The element gears 94 have portion 940 to be meshed with the side gear 920 and portion 941 to be meshed with each other.

The side gears 85 and 86 have teeth tilting in a direction through an equal tilting angle relative to a common rotational shaft (for example, tilting to right or left). A thrust force is generated depending on a torque transmitted from the housing 90 to the drive shafts 92, 93.

According to the present modified embodiment, sliding surfaces are; between the element gears 94 to 97 and the housing 90, between the pair of drive shafts 92 and 93, between the drive shafts 92, 93 and the housing 90 (washer provided therein), between axial end faces of the element gears 94 to 97 and the housing 90, and between the element gears 94 to 97 and the side gears 920, 930.

According to the present modified embodiment, preferably, wall surfaces of the housing 90 slidably contacted by the element gears 94 to 97 are nitrided (for example, ion nitriding or gas nitrocarburizing), and top lands of the element gears 94 to 97 each has a tungsten carbide/diamond-like carbon film formed thereon.

When any of the sample oils is applied to between the sliding surfaces according to these modified embodiments, remarkable quietness (µ-V characteristics with positive gradient) can be attained.

### DESCRIPTION OF REFERENCE NUMERALS

- 1: center differential with a gear limiting function
- 2: housing
- 3: ring gear
- 4: sun gear
- 5: planetary gear
- 6: planetary carrier
- 7: planetary gear mechanism
- 10: shaft portion
- 11: support portion
- 12: flange portion
- 13: holding aperture
- 16: output member
- 17: shaft portion
- 18: diametrically large portion
- 19: flange portion
- 8: center differential with a gear limiting function
- 80: housing
- 81, 82: drive shaft
- 83, 84: side gear
- 85, 86, 87, 88: coupling gear
- 9: center differential with a gear limiting function
- 90: housing
- 91: worm gear mechanism
- 92, 93: drive shaft
- 94, 95, 96, 97: element gear

## Claims

1. A lubricating oil used in a friction-type driving force transmission apparatus, including at least one of:
an aliphatic amine having a saturated or unsaturated hydrocarbon group with a carbon number of 12 to 20 (Chemical Formula 16); and
an aliphatic amine ethylene oxide adduct having a saturated or unsaturated hydrocarbon group with a carbon number of 12 to 20 (Chemical Formula 17).
[Chemical Formula 16] R₁-NH₂
R₁: a saturated or unsaturated hydrocarbon group with a carbon number of 12 to 20 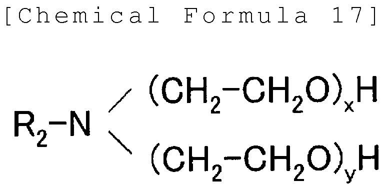
R₂: a saturated or unsaturated hydrocarbon group with a carbon number of 12 to 20
1 ≦ x + y ≦ 3

2. The lubricating oil as claimed in Claim 1,
wherein
given that a mass of the lubricating oil is 100%, at least one of the aliphatic amine, the aliphatic amine ethylene oxide adduct, and the aliphatic amine and the aliphatic amine ethylene oxide adduct in total is included by 1.0 to 5.0%.

3. The lubricating oil as claimed in Claim 1, wherein
the saturated or unsaturated hydrocarbon group with a carbon number of 12 to 20 of the aliphatic amine, the aliphatic amine ethylene oxide adduct is an unsaturated hydrocarbon group with a carbon number of 18.

4. The lubricating oil as claimed in Claim 1, wherein
given that a mass of the lubricating oil is 100%, at least one of an acidic phosphate ester and an acidic thiophosphate ester is included so that a phosphorus content stays in a range of 0.20% ≤ P ≤ 0.50%.

5. The lubricating oil as claimed in Claim 4, wherein
at least one of the acidic phosphate ester and the acidic thiophosphate ester is included in a state where the aliphatic amine having a saturated or unsaturated hydrocarbon group with a carbon number of 12 to 20 and an amine salt thereof are formed.

6. The lubricating oil as claimed in Claim 1, wherein
the lubricating oil includes a hydrocarbon oil as a base oil thereof, and a peak absorbency of the lubricating oil at infrared spectral wave numbers of 1,740 ± 20 cm⁻¹ is at most 1.5 in an infrared spectroscopic analysis using a fixed cell for liquid having an optical length of 0.05 mm ± 0.005 mm.

7. The lubricating oil as claimed in Claim 1, wherein
a peak of 57 ± 2 ppm is exhibited in a ³¹P-nuclear magnetic resonance analysis.

8. The lubricating oil as claimed in Claim 7, wherein
given that a mass of the lubricating oil is 100%, a phosphorus content derived from a thiophosphate diester and/or an amine salt thereof is 0.010% or more.

9. A lubricating oil used in a friction-type driving force transmission apparatus, including at least one of:
a phosphorous acid diester having a saturated or unsaturated hydrocarbon group with a carbon number of 12 to 20 (Chemical Formula 18); and
a phosphorous acid monoester having a saturated or unsaturated hydrocarbon group with a carbon number of 12 to 20 (Chemical Formula 19). 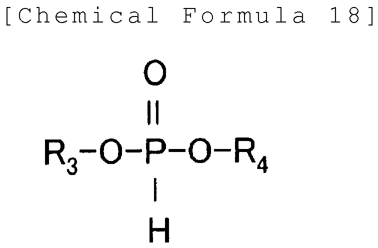
R₃: a saturated or unsaturated hydrocarbon group with a carbon number of 12 to 20
R₄: a saturated or unsaturated hydrocarbon group with a carbon number of 12 to 20 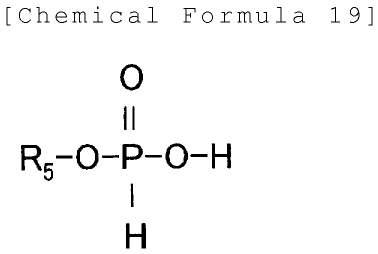
R₅: a saturated or unsaturated hydrocarbon group with a carbon number of 12 to 20

10. The lubricating oil as claimed in Claim 9, wherein
given that a mass of the lubricating oil is 100%, at least one of the phosphorous acid monoester, the phosphorous acid diester, and the phosphorous acid monoester and the phosphorous acid diester in total is included by 1.0% to 5.0%.

11. The lubricating oil as claimed in Claim 9, wherein
the saturated or unsaturated hydrocarbon group with a carbon number of 12 to 20 of the phosphorous acid monoester, the phosphorous acid diester is an unsaturated hydrocarbon group with a carbon number of 18.

12. The lubricating oil as claimed in Claim 9, wherein
given that a mass of the lubricating oil is 100%, at least one of an acidic phosphate ester and an acidic thiophosphate ester is included so that a phosphorus content stays in a range of 0.20% ≤ P ≤ 0.50%.

13. The lubricating oil as claimed in Claim 12, wherein
at least one of the acidic phosphate ester and the acidic thiophosphate ester is included in a state where the aliphatic amine having a saturated or unsaturated hydrocarbon group with a carbon number of 12 to 20 and an amine salt thereof are formed.

14. The lubricating oil as claimed in Claim 9, wherein
the lubricating oil includes a hydrocarbon oil as a base oil thereof, and a peak absorbency of the lubricating oil at infrared spectral wave numbers of 1,740 ± 20 cm⁻¹ is at most 1.5 in an infrared spectroscopic analysis using a fixed cell for liquid having an optical length of 0.05 mm ± 0.005 mm.

15. The lubricating oil as claimed in Claim 9, wherein
a peak of 57 ± 2 ppm is exhibited in a ³¹P-nuclear magnetic resonance analysis.

16. The lubricating oil as claimed in Claim 15, wherein
given that a mass of the lubricating oil is 100%, a phosphorus content derived from a thiophosphate diester and/or an amine salt thereof is 0.010% or more.

17. A lubricating oil used in a friction-type driving force transmission apparatus, including:
at least one of an aliphatic amine having a saturated or unsaturated hydrocarbon group with a carbon number of 12 to 20 (Chemical Formula 20); and an aliphatic amine ethylene oxide adduct having a saturated or unsaturated hydrocarbon group with a carbon number of 12 to 20 (Chemical Formula 21); and
at least one of a phosphorous acid diester having a saturated or unsaturated hydrocarbon group with a carbon number of 12 to 20 (Chemical Formula 22) ; and a phosphorous acid monoester having a saturated or unsaturated hydrocarbon group with a carbon number of 12 to 20 (Chemical Formula 23).
[Chemical Formula 20] R₁-NH₂
R₁: a saturated or unsaturated hydrocarbon group with a carbon number of 12 to 20 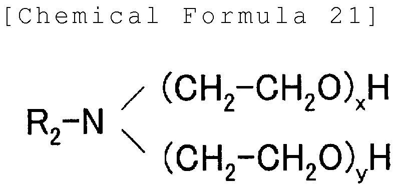
R₂: a saturated or unsaturated hydrocarbon group with a carbon number of 12 to 20
1 ≦ x + y ≦ 3 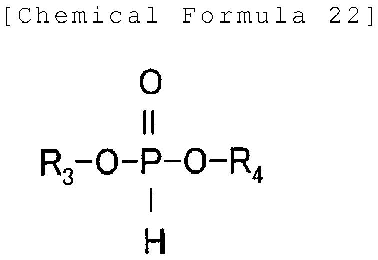
R₃: a saturated or unsaturated hydrocarbon group with a carbon number of 12 to 20
R₄: a saturated or unsaturated hydrocarbon group with a carbon number of 12 to 20 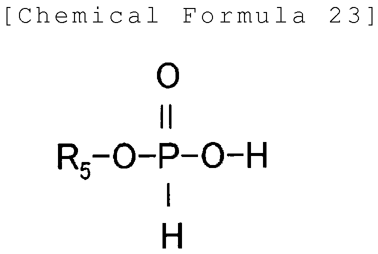
R₅: a saturated or unsaturated hydrocarbon group with a carbon number of 12 to 20

18. The lubricating oil as claimed in Claim 17, wherein
given that a mass of the lubricating oil is 100%, at least one of the aliphatic amine, the aliphatic amine ethylene oxide adduct, and the aliphatic amine and the aliphatic amine ethylene oxide adduct in total is included by 1.0% to 5.0%, and
given that a mass of the lubricating oil is 100%, at least one of the phosphorous acid monoester, the phosphorous acid diester, and the phosphorous acid monoester and the phosphorous acid diester in total is included by 1.0% to 5.0%.

19. The lubricating oil as claimed in Claim 17, wherein
given that a mass of the lubricating oil is 100%, at least one of an acidic phosphate ester and an acidic thiophosphate ester is included so that a phosphorus content stays in a range of 0.20% ≤ P ≤ 0.50%.

20. The lubricating oil as claimed in Claim 19, wherein
at least one of the acidic phosphate ester and the acidic thiophosphate ester is included in a state where the aliphatic amine having a saturated or unsaturated hydrocarbon group with a carbon number of 12 to 20 and an amine salt thereof are formed.

21. The lubricating oil as claimed in Claim 17, wherein
the lubricating oil includes a hydrocarbon oil as a base oil thereof, and a peak absorbency of the lubricating oil at infrared spectral wave numbers of 1,740 ± 20 cm⁻¹ is at most 1.5 in an infrared spectroscopic analysis using a fixed cell for liquid having an optical length of 0.05 mm ± 0.005 mm.

22. The lubricating oil as claimed in Claim 17, wherein
a peak of 57 ± 2 ppm is exhibited in a ³¹P-nuclear magnetic resonance analysis.

23. The lubricating oil as claimed in Claim 22, wherein
given that a mass of the lubricating oil is 100%, a phosphorus content derived from a thiophosphate diester and/or an amine salt thereof is 0.010% or more.

24. A lubricating oil used in a friction-type driving force transmission apparatus, including:
an aliphatic amine having a saturated or unsaturated hydrocarbon group with a carbon number of 12 to 20 (Chemical Formula 24); and
at least one of a phosphorous acid diester having a saturated or unsaturated hydrocarbon group with a carbon number of 12 to 20 (Chemical Formula 25), and a phosphorous acid monoester having a saturated or unsaturated hydrocarbon group with a carbon number of 12 to 20 (Chemical Formula 26).
[Chemical Formula 24] R₁-NH₂
R₁: a saturated or unsaturated hydrocarbon group with a carbon number of 12 to 20 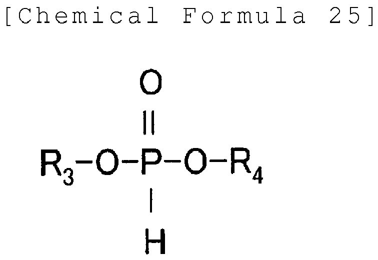
R₃: a saturated or unsaturated hydrocarbon group with a carbon number of 12 to 20
R₄: a saturated or unsaturated hydrocarbon group with a carbon number of 12 to 20 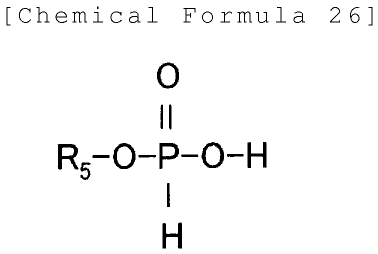
R₅: a saturated or unsaturated hydrocarbon group with a carbon number of 12 to 20

25. The lubricating oil as claimed in Claim 24, wherein
the phosphorous acid diester and/or the phosphorous acid monoester is included in a state where the aliphatic amine and an amine salt are formed.

26. A lubricating oil used in a friction-type driving force transmission apparatus, wherein a peak of 57 ± 2 ppm is exhibited in a ³¹P-nuclear magnetic resonance analysis.

27. The lubricating oil as claimed in Claim 26, wherein
given that a mass of the lubricating oil is 100%, a phosphorus content derived from a thiophosphate diester and/or an amine salt thereof is 0.010% or more.

28. The lubricating oil as claimed in Claim 26, wherein
given that a mass of the lubricating oil is 100%, at least one of an acidic phosphate ester and an acidic thiophosphate ester is included so that a phosphorus content stays in a range of 0.20% ≤ P ≤ 0.50%.

29. The lubricating oil as claimed in Claim 26, wherein
the lubricating oil includes a hydrocarbon oil as a base oil thereof, and a peak absorbency of the lubricating oil at infrared spectral wave numbers of 1,740 ± 20 cm⁻¹ is at most 1.5 in an infrared spectroscopic analysis using a fixed cell for liquid having an optical length of 0.05 mm ± 0.005 mm.

30. A friction member to which a lubricating oil used in a friction-type driving force transmission apparatus is applied, the lubricating oil including at least one of:
an aliphatic amine having a saturated or unsaturated hydrocarbon group with a carbon number of 12 to 20 (Chemical Formula 27); and
an aliphatic amine ethylene oxide adduct having a saturated or unsaturated hydrocarbon group with a carbon number of 12 to 20 (Chemical Formula 28).
[Chemical Formula 27] R₁-NH₂
R₁: a saturated or unsaturated hydrocarbon group with a carbon number of 12 to 20 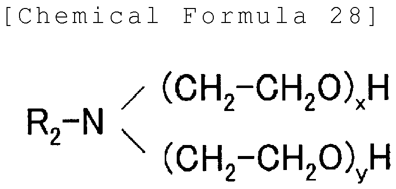
R₂: a saturated or unsaturated hydrocarbon group with a carbon number of 12 to 20
1 ≦ x + y ≦ 3

31. The friction member as claimed in Claim 30, wherein
of a pair of friction members sliding with each other, a sliding surface of one of the friction members has a diamond-like carbon film formed thereon.

32. The friction member as claimed in Claim 30, wherein
of a pair of friction members sliding with each other, a sliding surface of one of the friction members has a tungsten carbide/diamond-like carbon film formed thereon, and a sliding surface of the other friction member is nitrided.

33. The friction member as claimed in Claim 30, wherein
of a pair of friction members sliding with each other, a sliding surface of one of the friction members is made from an iron-based metal, and a sliding surface of the other friction member is nitrided.

34. A friction member to which a lubricating oil used in a friction-type driving force transmission apparatus is applied, the lubricating oil including at least one of:
a phosphorous acid diester having a saturated or unsaturated hydrocarbon group with a carbon number of 12 to 20 (Chemical Formula 29); and
a phosphorous acid monoester having a saturated or unsaturated hydrocarbon group with a carbon number of 12 to 20 (Chemical Formula 30). 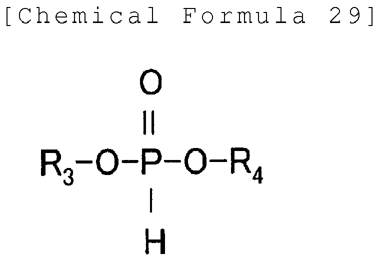
R₃: a saturated or unsaturated hydrocarbon group with a carbon number of 12 to 20
R₄: a saturated or unsaturated hydrocarbon group with a carbon number of 12 to 20 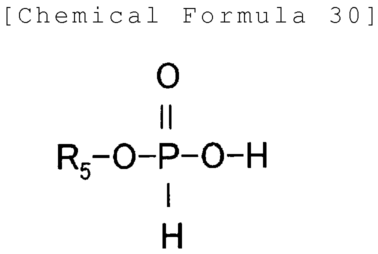
R₅: a saturated or unsaturated hydrocarbon group with a carbon number of 12 to 20

35. The friction member as claimed in Claim 34, wherein
of a pair of friction members sliding with each other, a sliding surface of one of the friction members has a diamond-like carbon film formed thereon.

36. The friction member as claimed in Claim 34, wherein
of a pair of friction members sliding with each other, a sliding surface of one of the friction members has a tungsten carbide/diamond-like carbon film formed thereon, and a sliding surface of the other friction member is nitrided.

37. The friction member as claimed in Claim 34, wherein
of a pair of friction members sliding with each other, a sliding surface of one of the friction members is made from an iron-based metal, and a sliding surface of the other friction member is nitrided.

38. A friction member to which a lubricating oil used in a friction-type driving force transmission apparatus is applied, the lubricating oil including:
at least one of an aliphatic amine having a saturated or unsaturated hydrocarbon group with a carbon number of 12 to 20 (Chemical Formula 31), and an aliphatic amine ethylene oxide adduct having a saturated or unsaturated hydrocarbon group with a carbon number of 12 to 20 (Chemical Formula 32); and
at least one of a phosphorous acid diester having a saturated or unsaturated hydrocarbon group with a carbon number of 12 to 20 (Chemical Formula 33), and a phosphorous acid monoester having a saturated or unsaturated hydrocarbon group with a carbon number of 12 to 20 (Chemical Formula 34).
[Chemical Formula 31] R₁-NH₂
R₁: a saturated or unsaturated hydrocarbon group with a carbon number of 12 to 20 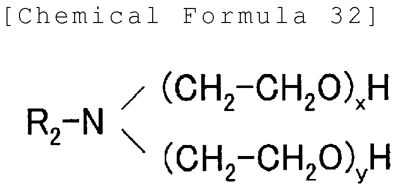
R₂: a saturated or unsaturated hydrocarbon group with a carbon number of 12 to 20
1 ≦ x + y ≦ 3 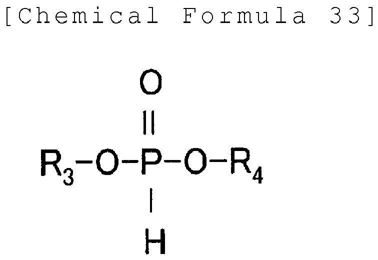
R₃: a saturated or unsaturated hydrocarbon group with a carbon number of 12 to 20
R₄: a saturated or unsaturated hydrocarbon group with a carbon number of 12 to 20 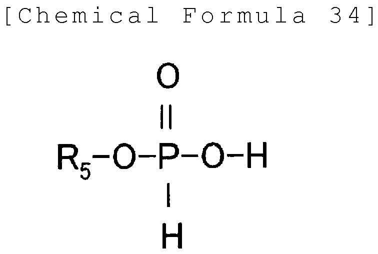
R₅: a saturated or unsaturated hydrocarbon group with a carbon number of 12 to 20

39. The friction member as claimed in Claim 38,
wherein
of a pair of friction members sliding with each other, a sliding surface of one of the friction members has a diamond-like carbon film formed thereon.

40. The friction member as claimed in Claim 38, wherein
of a pair of friction members sliding with each other, a sliding surface of one of the friction members has a tungsten carbide/diamond-like carbon film formed thereon, and a sliding surface of the other friction member is nitrided.

41. The friction member as claimed in Claim 38, wherein
of a pair of friction members sliding with each other, a sliding surface of one of the friction members is made from an iron-based metal, and a sliding surface of the other friction member is nitrided.

42. A friction member to which a lubricating oil used in a friction-type driving force transmission apparatus is applied, the lubricating oil exhibiting a peak of 57 ± 2 ppm in a ³¹P-nuclear magnetic resonance analysis.

43. The friction member as claimed in Claim 42, wherein
of a pair of friction members sliding with each other, a sliding surface of one of the friction members has a diamond-like carbon film formed thereon.

44. The friction member as claimed in Claim 42, wherein
of a pair of friction members sliding with each other, a sliding surface of one of the friction members has a tungsten carbide/diamond-like carbon film formed thereon, and a sliding surface of the other friction member is nitrided.

45. The friction member as claimed in Claim 42, wherein
of a pair of friction members sliding with each other, a sliding surface of one of the friction members is made from an iron-based metal, and a sliding surface of the other friction member is nitrided.

46. A gear-type differential with a differential limiting function to which a lubricating oil used in a friction-type driving force transmission apparatus is applied, the lubricating oil including at least one of:
an aliphatic amine having a saturated or unsaturated hydrocarbon group with a carbon number of 12 to 20 (Chemical Formula 35); and
an aliphatic amine ethylene oxide adduct having a saturated or unsaturated hydrocarbon group with a carbon number of 12 to 20 (Chemical Formula 36).
[Chemical Formula 35] R₁-NH₂
R₁: a saturated or unsaturated hydrocarbon group with a carbon number of 12 to 20 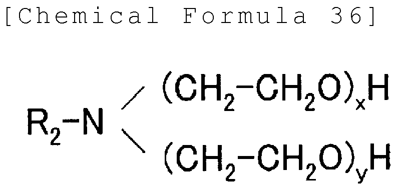
R₂: a saturated or unsaturated hydrocarbon group with a carbon number of 12 to 20
1 ≦ x + y ≦ 3

47. The gear-type differential with a differential limiting function as claimed in Claim 46, which is a driving force transmission apparatus including:
a plurality of planetary gears;
a planetary carrier for supporting the plurality of planetary gears so that the plurality of planetary gears are orbitally revolvable and rotatable on their own rotational axes; and
a pair of gears disposed coaxial with the planetary carrier and differentially rotatable via the planetary gears, wherein
the lubricating oil is applied to between sliding surfaces of the planetary gears and the planetary carrier.

48. A gear-type differential with a differential limiting function to which a lubricating oil used in a friction-type driving force transmission apparatus is applied thereto, the lubricating oil including at least one of:
a phosphorous acid diester having a saturated or unsaturated hydrocarbon group with a carbon number of 12 to 20 (Chemical Formula 37); and
a phosphorous acid monoester having a saturated or unsaturated hydrocarbon group with a carbon number of 12 to 20 (Chemical Formula 38). 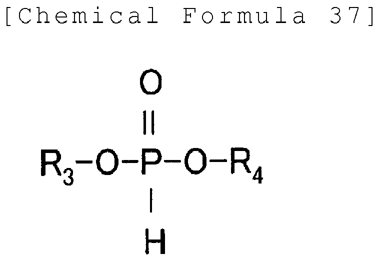
R₃: a saturated or unsaturated hydrocarbon group with a carbon number of 12 to 20
R₄: a saturated or unsaturated hydrocarbon group with a carbon number of 12 to 20 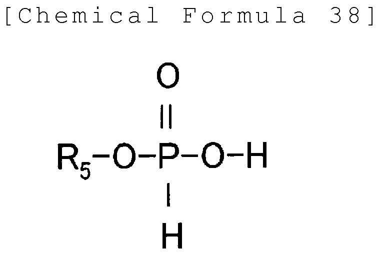
R₅: a saturated or unsaturated hydrocarbon group with a carbon number of 12 to 20

49. The gear-type differential with a differential limiting function as claimed in Claim 48, which is a driving force transmission apparatus including:
a plurality of planetary gears;
a planetary carrier for supporting the plurality of planetary gears so that the plurality of planetary gears are orbitally revolvable and rotatable on their own rotational axes; and
a pair of gears disposed coaxial with the planetary carrier and differentially rotatable via the planetary gears, wherein
the lubricating oil is applied to between sliding surfaces of the planetary gears and the planetary carrier.

50. A gear-type differential with a differential limiting function to which a lubricating oil used in a friction-type driving force transmission apparatus is applied, the lubricating oil including:
at least one of an aliphatic amine having a saturated or unsaturated hydrocarbon group with a carbon number of 12 to 20 (Chemical Formula 39), and an aliphatic amine ethylene oxide adduct having a saturated or unsaturated hydrocarbon group with a carbon number of 12 to 20 (Chemical Formula 40); and
at least one of a phosphorous acid diester having a saturated or unsaturated hydrocarbon group with a carbon number of 12 to 20 (Chemical Formula 41) and a phosphorous acid monoester having a saturated or unsaturated hydrocarbon group with a carbon number of 12 to 20 (Chemical Formula 42).
[Chemical Formula 39] R₁-NH₂
R₁ : a saturated or unsaturated hydrocarbon group with a carbon number of 12 to 20 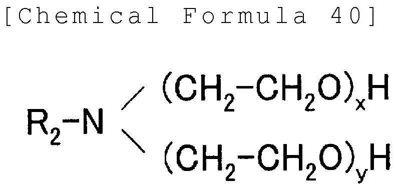
R₂ : a saturated or unsaturated hydrocarbon group with a carbon number of 12 to 20
1 ≦ x + y ≦ 3 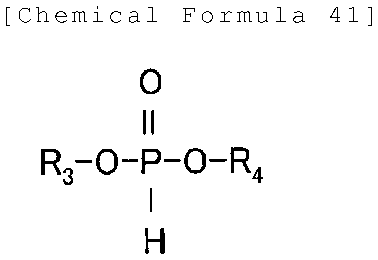
R₃ : a saturated or unsaturated hydrocarbon group with a carbon number of 12 to 20
R₄ : a saturated or unsaturated hydrocarbon group with a carbon number of 12 to 20 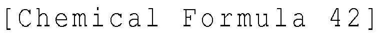 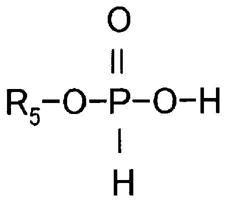
R₅ : a saturated or unsaturated hydrocarbon group with a carbon number of 12 to 20

51. The gear-type differential with a differential limiting function as claimed in Claim 50, which is a driving force transmission apparatus including:
a plurality of planetary gears;
a planetary carrier for supporting the plurality of planetary gears so that the plurality of planetary gears are orbitally revolvable and rotatable on their own rotational axes; and
a pair of gears disposed coaxial with the planetary carrier and differentially rotatable via the planetary gears, wherein
the lubricating oil is applied to between sliding surfaces of the planetary gears and the planetary carrier.

52. A gear-type differential with a differential limiting function to which a lubricating oil used in a friction-type driving force transmission apparatus is applied, wherein, given that a mass of the lubricating oil is 100%, a phosphorus content derived from at least one of a thiophosphate diester (Chemical Formula 43) and an amine salt thereof (Chemical Formula 44) is 0.010% or more. 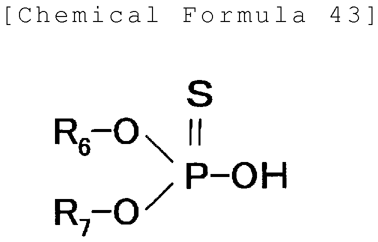
R₆ : a saturated or unsaturated hydrocarbon group with a carbon number of 12 to 20
R₇ : a saturated or unsaturated hydrocarbon group with a carbon number of 12 to 20 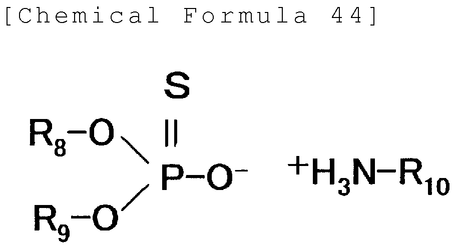
R₈ : a saturated or unsaturated hydrocarbon group with a carbon number of 12 to 20
R₉ : a saturated or unsaturated hydrocarbon group with a carbon number of 12 to 20
R₁₀ : a saturated or unsaturated hydrocarbon group with a carbon number of 12 to 20

53. The gear-type differential with a differential limiting function as claimed in Claim 52, which is a driving force transmission apparatus including:
a plurality of planetary gears;
a planetary carrier for supporting the plurality of planetary gears so that the plurality of planetary gears are orbitally revolvable and rotatable on their own rotational axes; and
a pair of gears disposed coaxial with the planetary carrier and differentially rotatable via the planetary gears, wherein
the lubricating oil is applied to between sliding surfaces of the planetary gears and the planetary carrier.
